| (19) | **Europäisches Patentamt** **European Patent Office** **Office européen des brevets** | (11) | **EP 1 455 106 B1** |

## (12) EUROPÄISCHE PATENTSCHRIFT

(45) Veröffentlichungstag und Bekanntmachung des Hinweises auf die Patenterteilung:
**25.10.2006 Patentblatt 2006/43**

(51) Int Cl.:
***F16D 23/14*** *(2006.01)*

(21) Anmeldenummer: **04004633.6**

(22) Anmeldetag: **01.03.2004**

(54) **Ausrücksysteme**

Disengaging system

Système de débrayage

(84) Benannte Vertragsstaaten:
**AT BE BG CH CY CZ DE DK EE ES FI FR GB GR HU IE IT LI LU MC NL PL PT RO SE SI SK TR**

(30) Priorität: **03.03.2003 DE 10309066**
**03.09.2003 DE 10340528**

(43) Veröffentlichungstag der Anmeldung:
**08.09.2004 Patentblatt 2004/37**

(73) Patentinhaber: **LuK Lamellen und Kupplungsbau Beteiligungs KG**
**77815 Bühl (DE)**

(72) Erfinder:
• **Friedmann, Oswald**
**77839 Lichtenau (DE)**
• **Reik, Wolfgang, Dr.**
**77815 Bühl (DE)**
• **Burkhart, Dirk**
**77815 Bühl (DE)**
• **Haas, Wolfgang**
**77815 Bühl (DE)**
• **Scheufler, Christian, Dr.**
**77815 Bühl (DE)**
• **Man, Laszlo Dr.**
**77833 Ottersweier-Unzhurst (DE)**
• **Raber, Christoph**
**66564 Ottweiler-Steinbach (DE)**
• **Reimnitz, Dirk**
**77815 Bühl (DE)**
• **Schäfer, Markus**
**77866 Rheinau (DE)**

(56) Entgegenhaltungen:
**WO-A-01/61205** **FR-A- 1 353 241**
**US-A- 2 658 396** **US-A- 5 012 911**

**Beschreibung**

Die Erfindung betrifft ein Hebelsystem zum Betätigen von Kupplungen oder Getriebe-Bremsen, für Fahrzeuge - insbesondere für Kraftfahrzeuge - wobei für die Betätigung des Hebels, das Hebelsystem verändert wird.

Nach dem Stand der Technik werden Kupplungen beispielsweise in der Form betätigt, indem ein Hebel, der unveränderliche Hebellängen aufweist, mittels einer zunehmenden Kraft betätigt wird. Die Betätigung der Kupplung kann jedoch auch über einen Zentralausrücker erfolgen. Dieser Zentralausrücker wird von einem E-Motor angetrieben und die Betätigung direkt erfolgt über ein Stirnradgetriebe. Nachteilig dabei ist, dass der E-Motor sein maximales Moment abgeben muss um die Kupplung zu schließen. Dazu muss er voll bestromt werden. Um keinen Schaden an der Kupplung oder dem Zentralausrücker herbeizuführen, muss nach dem Schließen der Kupplung der E-Motor durch eine zusätzliche Bremse sofort wieder abgebremst werden.
Um die Kupplung öffnen zu können, ist jedoch die Bremse zuvor wieder zu lösen. Danach ist das System selbst öffnend. Aufgrund des hohen Strombedarfs des E-Motors während des Aurückvorgangs ist keine aktive Regelung der Anpresskraft und damit des zu übertragenen Drehmoments möglich.

Bei Bremsen wird mittels Hebelkonstruktion eine Eingangskraft in eine Ausgangskraft umgewandelt, die in einem bestimmten Verhältnis zur Eingangskraft steht. Eine solche Hebelkonstruktion ist, als Zuspanneinrichtung bezeichnet, in der WO 03/016745 A2 beschrieben. Um den Leistungs- und Energiebedarf für Bremsen erheblich zu reduzieren, wird bei dieser Lösung ein Hebel an einem Drehpunkt befestigt und dort drehbar aufgehängt. An einem Kraftabgabepunkt gibt dieser Hebel die Ausgangskraft an eine Kraftaufnahmeeinrichtung, bzw. Feder ab. Mit anderen Worten: Von einem Krafterzeuger wird eine Eingangskraft über einen Kraftmodulations-Mechanismus auf einen veränderbaren Kraftübertragungspunkt zu übertragen.

In der DE 100 46 981 A1 wird eine Radbremsvorrichtung mit einem geschlitzten Hebel beschrieben, der mit Hilfe eines in dem Schlitz geführten Bolzen schwenkbar ist. Durch Schwenken des Hebels wird der Reibbelag gegen den Bremskörper gedrückt und durch dessen Rückschwenken vom Bremskörper abgehoben. Ein Speicherelement (Feder), das an einem Ende des Hebels anliegt und diesen mit Energie beaufschlagt, dient zur Verringerung die Betätigungsenergie zum Betätigen der Radbremsvorrichtung.

Die US 5,501,305 beschreibt eine Einrichtung zur Erzielung eines umschaltbaren Arbeitsanschlages mittels einer veränderbaren Kraft. Die Einrichtung besteht aus einem Hebelmechanismus. Dieser enthält einen festen Drehpunkt und einen Hebelarm, der mit Hilfe einer Federkraft, die entlang einer Kurve auf diesem Hebelarm einwirkt, innerhalb vorgegebener Grenzen verschwenkt wird.

Die WO 90/14979 beschreibt einen Aktor für eine Fahrzeugbremse zur Erzeugung einer variablen Kraft aus konstanten Eingangskräften, die innerhalb des Aktors umgewandelt werden in eine resultierende Kraft, die innerhalb vorgegebener Grenzen variabel ist.

In der DE 101 40 075 A1 wird ebenfalls eine Lösung für Fahrzeugbremsen beschrieben. Hierbei handelt es sich um eine Zuspanneinrichtung für Radbremsen, die im Wesentlichen aus einer Hebeleinrichtung, einen energiespeichemden Krafterzeuger, der einen Energiespeicher und ein Koppelglied umfasst, und einer Verstelleinrichtung zum Verstellen der Anlageposition des Koppelgliedes am Hebelarm. Das Problem eine Zuspanneinrichtung zu bauen, die einen geringen Platzbedarf beansprucht und einen geringen Energiebedarf hat, wird dadurch gelöst, indem die Verstelleinrichtung verstellt werden kann, wodurch eine veränderbare Anschlagposition des Koppelgliedes am Hebelarm entsteht und der Energiespeicher gehäusefest ist. Dem um einen Drehpunkt angeordneten Koppelglied, das innerhalb eines Kreissegmentes um diesem schwenkbar ist, wird somit zusätzlich beim Verstellvorgang eine translatorische Bewegung überlagert

Die US 1,727,742 zeigt eine Lösung für eine Servo Bremse, bei der eine Eingangskraft durch einen entsprechenden Hebelmechanismus verstärkt wird. Die miteinander gekoppelten Hebel sind dabei jeweils um einen Drehpunkt schwenkbar gelagert.

Eine andere Möglichkeit Bremsen in einem Kraftfahrzeug-Getriebe, insbesondere von Automatikgetrieben, zu betätigen besteht darin, eine Vielzahl von (so genannten Lamellenpaketen) mittels hydraulischer Kraft zusammen zu pressen. dessen Rückschwenken vom Bremskörper abgehoben. Ein Speicherelement (Feder), das an einem Ende des Hebels anliegt und diesen mit Energie beaufschlagt, dient zur Verringerung die Betätigungsenergie zum Betätigen der Radbremsvorrichtung.

Die US 5,501,305 beschreibt eine Einrichtung zur Erzielung eines umschaltbaren Arbeitsanschlages mittels einer veränderbaren Kraft. Die Einrichtung besteht aus einem Hebelmechanismus. Dieser enthält einen festen Drehpunkt und einen Hebelarm, der mit Hilfe einer Federkraft, die entlang einer Kurve auf diesem Hebelarm einwirkt, innerhalb vorgegebener Grenzen verschwenkt wird.

Die WO 90/14979 beschreibt einen Aktor für eine Fahrzeugbremse zur Erzeugung einer variablen Kraft aus konstanten Eingangskräften, die innerhalb des Aktors umgewandelt werden in eine resultierende Kraft, die innerhalb vorgegebener Grenzen variabel ist.

In der DE 101 40 075 A1 wird ebenfalls eine Lösung für Fahrzeugbremsen beschrieben. Hierbei handelt es sich um eine Zuspanneinrichtung für Radbremsen, die im Wesentlichen aus einer Hebeleinrichtung, einen energiespeichemden Krafterzeuger, der einen Energiespeicher und ein Koppelglied umfasst, und einer Verstelleinrichtung zum Verstellen der Anlageposition des Koppelgliedes am Hebelarm. Das Problem eine Zuspanneinrichtung zu bauen, die einen geringen Platzbedarf beansprucht und einen geringen Energiebedarf hat, wird dadurch gelöst, indem die Verstelleinrichtung verstellt werden kann, wodurch eine veränderbare Anschlagposition des Koppelgliedes am Hebelarm entsteht und der Energiespeicher gehäusefest ist. Dem um einen Drehpunkt angeordneten Koppelglied, das innerhalb eines Kreissegmentes um diesem schwenkbar ist, wird somit zusätzlich beim Verstellvorgang eine translatorische Bewegung überlagert

Die US 1,727,742 zeigt eine Lösung für eine Servo Bremse, bei der eine Eingangskraft durch einen entsprechenden Hebelmechanismus verstärkt wird. Die miteinander gekoppelten Hebel sind dabei jeweils um einen Drehpunkt schwenkbar gelagert.

Eine andere Möglichkeit Bremsen in einem Kraftfahrzeug-Getriebe,insbesondere von Automatikgetrieben, zu betätigen besteht darin, eine Vielzahl von (so genannten Lamellenpaketen) mittels hydraulischer Kraft zusammen zu pressen gepresst.

Diese bekannten Systeme haben den Nachteil, dass die hierzu erforderlichen Hebelsysteme relativ viel Platz benötigen, bzw. bei hydraulischen Schließsystemen für Brems-Lamellenpakete ein hydraulisches System vorhanden sein muss, welches mittels einer zusätzlichen hydraulischen Pumpe betätigt werden muss.

Es ist deshalb Aufgabe der Erfindung, dass unter Berücksichtigung der Platzverhältnisse innerhealb der Kupplungsglocke, die Anpresskraft der Kupplung mit geringem Energieaufwand regelbar ist und bei Stromausfall eine selbständige Öffnung der Kupplung erfolgt.

Erfindungsgemäß wird die Aufgabe dadurch gelöst, dass ein Hebelsystem angeordnet wird, bei dem die Hebelarme keine unveränderbaren Hebellängen aufweisen. Dieses wird in der Form bewerkstelligt, dass eine Eingangskraft auf das eine Ende des Hebels mittels eines Energiespeichers einwirkt- beispielsweise als Tellerfeder ausgestaltet - realisiert wird. Das zweite Ende des Hebels ist dann dasjenige Hebelende, welches die Krafteinwirkung auf die Kupplung oder Getriebe-Bremse bewirkt. In einer Ruhelage des erfindungsgemäßen Hebelsystems befindet sich ein veränderbarer Drehpunkt zwischen den Endpunkten des Hebels, im Wesentlichen zunächst in der Nähe des Energiespeichers. Soll nun eine Kupplung oder Bremse geschlossen werden, so wird dieser Drehpunkt zu dem Hebelende bewegt, dessen Krafteinwirkung auf die Kupplung oder Getriebe-Bremse einwirkt. Aufgrund der Hebelgesetze kann also das Hebelsystem zunächst - jedenfalls im Wesentlichen - keine Kraft aufbringen. Befindet sich der Drehpunkt dieses Hebelsystems jedoch weit entfernt von dem Energiespeicher, oder anders herum ausgedrückt, in der Nähe des Endes, welches auf die Kupplung oder Bremse einwirkt, so steht dem erfindungsgemäßen Hebelsystem eine große Kraft zur Verfügung.

Erfindungsgemäß kann das Hebelsystem aber auch dadurch zur Betätigung einer Kupplung oder Getriebe-Bremse verwendet werden, indem der Einwirkpunkt einer Kraft entlang einer (Teil-)Hebelachse verschoben wird, wie in der Figurenbeschreibung noch zu sehen sein wird.

Die Erfindung soll nun anhand der Figuren näher erläutert werden. Es zeigen:

| | |
|---|---|
| Figur 1 | einen schematischen Aufbau des erfindungsgemäßen Hebelsystems in Verbindung mit einer Kupplung im geöffneten Zustand; |
| Figur 2 | Hebelsystem nach Figur 1, jedoch im geschlossenen Zustand; |
| Figur 3 | eine geöffnete Kupplung mit einer mäanderförmigen Feder zur Verlagerung der Drehpunkte; |
| Figur 4 | Hebelsystem wie in Figur 3, jedoch im geschlossenen Zustand; |
| Figur 5 | eine Doppelkupplung mit zwei Mäanderfedern, die mittels zweier E-Maschinen verstellbar sind: |
| Figur 6 | eine Doppelkupplung mit exzentrisch angeordneten Stellmotoren für die Verstellung der Drehpunkte auf Vollspiralen; |
| Figur 7 | wie Figur 6, jedoch Verstellung der Drehpunkte in Spiralsegmenten; |
| Figur 7a | eine Spiralentellerfeder mit Nadelkäfig, |
| Figur 7b | eine Spiralentellerfeder mit Sicken, |
| Figur 8 | wie Figur 7, jedoch Verstellung der Drehpunkte durch Axiallager; |
| Figur 9 | eine "gedrückte" Kupplung mit Fliehkraftausgleich in geschlossenem und auch offenem Zustand; |
| Figur 10 | eine mit "Federkraft geschlossene" Kupplung im geschlossenen und offenen Zustand mit einem Hebelsystem für "Pedalgefühl"; |
| Figur 11 | einen Ausschnitt aus einem segmentierten Ringhebel; |
| Figur 12 | einen Ausschnitt aus einem Getriebe mit einem segmentierten Ringhebel; |
| Figur 13 -17 | verschiedene Ansichten eines erfindungsgemäßen Hebelsystems mit einer Laufrolle; |
| Figur 18a - d | verschiedene Ansichten eines Hebelsystems in einem Kasten; |
| Figur 19a - c | weitere Ansichten eines Hebelsystems in einem Kasten; |
| Figur 20a - c | verschiedene Ansichten eines verlagerbaren Drehpunktes; |
| Figur 21a - b | Draufsicht und Seitenansicht einer Energiespeicher-Halterung; |

| | |
|---|---|
| Figur 22a - b | Draufsicht und Seitenansicht einer weiteren Energiespeicher-Halterung; |
| Figur 23a - d | verschiedene Ausgestaltungen einer Lagereinheit (verlagerbarer Drehpunkt); |
| Figur 24a - c | eine Lagereinheit mit gespritzter Mutter; |
| Figur 25a - c | eine Schnappverbindung in der Lagereinheit; |
| Figur 26a - f | verschiedene Ausgestaltungen einer Verbindung zwischen der Verstellspindel und der Mutter einer Lagereinheit; |
| Figur 27a - h | Varianten der Lagereinheit; |
| Figur 28a - d | weitere Varianten der Lagereinheit; |
| Figur 29 | der Toleranz-Ausgleich an einem Hebelsystem; |
| Figur 30a - b | Veranschaulichung der Messmethode für den Toleranz-Ausgleich; |
| Figur 31 | eine perspektivische und teilweise aufgeschnittene Darstellung eines Doppel-Hebelsystems in einem Kasten; |
| Figur 32 | eine weitere perspektivische und teilweise aufgeschnittene Darstellung eines Doppel-Hebelsystems in einem Kasten. |
| Figur 33a | einen schematischen Aufbau des erfindungsgemäßen Hebelsystems, das eine geöffnete Kupplung mit einer anderen Gestaltung der Druckfeder darstellt |
| Figur 33b | Hebelsystem nach Figur 33a, jedoch im geschlossenen Zustand; |
| Figur 34 | Zentraler Rampenausrücker mit radial angeordneten Kipphebeln, |
| Figur 34a | Rampenausrücker mit radial angeordneten Druckfederspeichem. |
| Figur 35 | Radial angeordnete Kipphebel, wobei die Tellerfeder gleichzeitig als Druckfeder wirkt,. |
| Figur 36 | Rampenausrücker mit Spiralentellerfeder als Kraftübertragungsmittel, |
| Figur 37 | Axial angeordneter Rampenausrücker mit besonderer Anordnung der Druckfeder, |
| Figur 38 | Rampenausrücker gemäß Figur 37 mit Notfallentriegelung. |
| Figur 39 | Rampenausrücker, bei dem die Kraftübertragung durch Verschieben eines zusätzlichen Blechs mitWippkurvenprofil.erfolg, |
| Figur 40 | Ausrücker mit innen liegendem E-Motor |
| Figur 41 | hydraulisch betätigbarer Ausrücker in Form eines Wiegehebels |
| Figur 41a | Schnitt durch den Ausrücker gemäß Figur 41 |
| Figur 41b | Baueinheit hydraulisch betätigbarer Zylinder mit Laufrollen 31 (die hebelseitig wirken (31a) und auf dem Gehäuse 49 abrollen (31b)) |
| Figur 42 | Grundprinzip eines doppelten hydraulisch betätigbaren Wiegehebelausrückers (linker Ausrücker in eingerückter, rechter Ausrücker in ausgerückter Stellung) |
| Figur 42a | Seitenansicht des in Figur 13 dargestellten doppelten Wiegehebelausrückers |
| Figur 43 | Ausgestaltung eines Rollenwagens |
| Figur 44 | weitere Variante eines Ausrückers im Schnitt |
| Figur 45 | Ausgestaltung der Ausrückfeder mit am Ende der Käfige zur Aufnahme der Rollen (Spiralen) angeordneten Anschlagnocken |
| Figuren 46 und 47 | weitere Ausgestaltungen der Ausrückfeder |
| Figurt 48 | Anwendung der erfinderischen Lösung für eine elektrisch betätigte Scheibenbremse |

Der Figurenbeschreibung soll vorausgeschickt werden, dass die Bezugszeichen über alle Figuren hinweg die gleiche Bedeutung haben. Ferner sind umlaufende Linien - aus Gründen der Übersichtlichkeit - in vielen Darstellungen weggelassen worden. Dort wo sie dennoch eingezeichnet sind, erklärt es sich aus der Art der Darstellung von selbst.

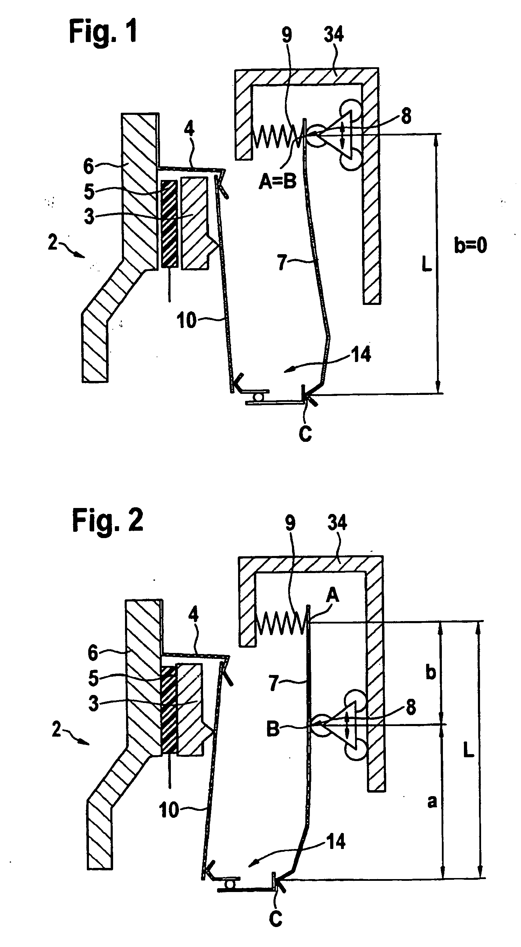

In den Figuren 1 und 2 ist lediglich schematisch eine Kupplung mit ihrem erfindungsgemäßen Betätigungsmechanismus zu sehen. Die Figur 1 zeigt hierbei eine geöffnete Kupplung 2, während in der Figur 2 die gleiche Kupplung 2 im geschlossenen Zustand zeigt. Die Figuren 1 und 2 müssen deshalb gedanklich gemeinsam betrachtet werden. Die Kupplung 2 besteht im Wesentlichen aus einer Gegendruckplatte 6, einer Kupplungsscheibe 5, einer Druckplatte 3, einem Kupplungsdeckel 4 und einer Ausrückfeder 10, die hier als Tellerfeder ausgebildet ist. Ein Betätigungsmechanismus für die Kupplung 2 besteht im Wesentlichen aus einem Hebelsystem, welches an einer Abstützung 34 angeordnet ist. Der Betätigungsmechanismus wirkt mittels seines Hebels 7 auf ein Axiallager 14 (welches um eine hier nicht dargestellte Welle 1 herum angeordnet ist), wobei das Axiallager 14 wiederum auf die Ausrückfeder 10 der Kupplung 2 wirkt. Die Abstützung 34 ist in den Ausführungsbeispielen der Figuren 1 und 2 drehfest mit einem nicht dargestellten Gehäuse eines Getriebes verbunden.

Weil bei der in den Figuren 1 und 2 dargestellten Kupplung 2, durch Drücken des inneren Endes der Ausrückfeder 10 nach links - wobei hier die Ausrückfeder 10 ebenfalls einen Hebel 7 darstellt - die Kupplung geschlossen wird, spricht man hier auch von einer so genannten "gedrückten" Kupplung. Säßen die dreieckig dargestellten Auflagerpunkte der Ausrückfeder 10 an der Druckplatte 3 radial innen und am Kupplungsdeckel 4 außen, so wäre eine Wirkungsumkehr möglich und man könnte durch Drücken der Ausrückfeder 10 die Kupplung auch schließen. Kupplungen, die durch

4

Drücken geöffnet werden, auch wenn sie nicht dargestellt sind, sind deshalb Gegenstand der Erfindung.

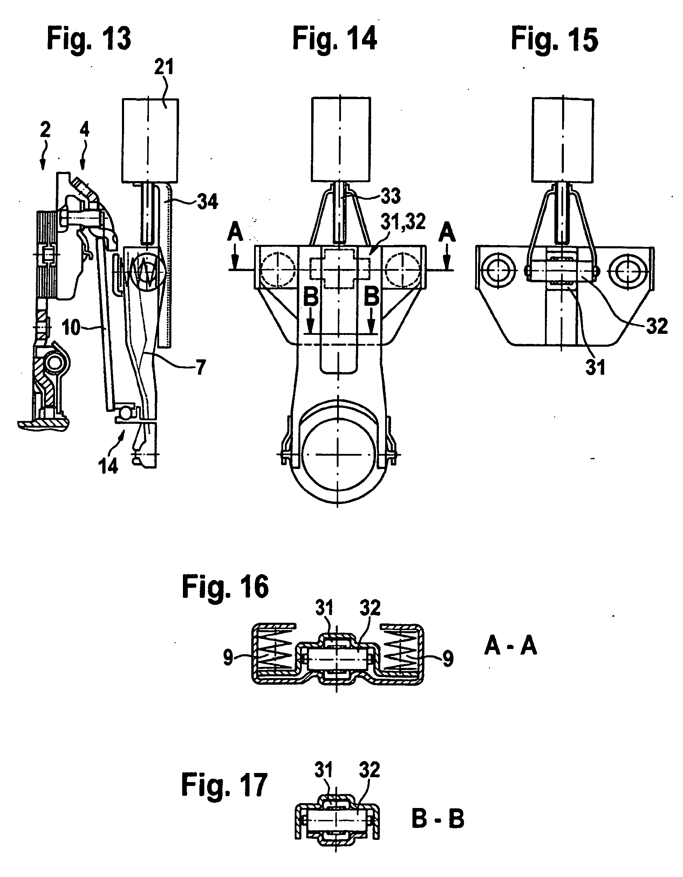

In der Figur 1 liegen ein Energiespeicher 9 - hier als Wendelfeder ausgebildet - das radial äußere Ende des Hebels 7 und ein verlagerbarer Drehpunkt 8, der in dieser Figur gleichzeitig mit den Auflagepunkten A und B zusammenfällt, im Wesentlichen auf einer Wirklinie. Da es sich bei den Figuren der vorliegenden Anmeldung im Wesentlichen um rotationssymmetrische Teile handelt, die in der zeichnerischen Darstellung so genannte umlaufende Linien aufweisen würden, und diese aber die Übersichtlichkeit beeinträchtigen würden, sind diese umlaufenden Linien in den Figuren dieser Anmeldung weggelassen worden. Aus diesem Grund entsteht dann beispielsweise bei dem Hebel 7 der Eindruck, dass es sich um ein Element handelt, welches stabförmig ausgebildet ist und in der Ebene der Darstellung liegt. Der Hebel 7 kann als Scheibe ausgebildet sein, welche über radiale Schlitze verfügt, so dass gewissermaßen einzelne Hebel 7 entstehen. Der Hebel 7 kann im Rahmen der Erfindung aber auch als ein einzelner, radialer Hebel 7 gestaltet sein, wie in den Figuren 13 bis 17 bzw. 33 bis 35 noch näher erläutert wird. Im Rahmen der Erfindung ist es hierbei ohne Bedeutung, ob die Scheibe von außen nach innen oder von innen nach außen teilweise geschlitzt ist. Wichtig ist lediglich, dass der verlagerbare Drehpunkt 8 auf einer im Wesentlichen radialen Teilfläche der Scheibe nach innen - bzw. - auch nach außen laufen kann. Der Hebel 7 ist in den Figuren 1 und 2 nicht gradlinig dargestellt. Er ist aus der Sicht des verlagerbaren Drehpunktes 8 gewissermaßen konkav geformt. Der verlagerbare Drehpunkt 8 besteht aus mehreren Laufrollen 31, was den Vorteil hat, dass eine dieser Laufrollen 31 auf der Oberfläche des Hebels 7 abrollen, während eine andere Laufrolle 31 auf der Oberfläche der Abstützung 34 laufen kann. Gäbe es nur eine einzige Laufrolle 31 bei dem verlagerbaren Drehpunkt 8, so wären die Drehrichtungen der Laufrollen 31 auf der Hebeloberfläche und die Drehrichtung auf der Abstützung 34 gegenläufig, was dazu führen würde, dass ein radiales Verlagern dieses Drehpunktes 8 erschwert würde.

In der beschriebenen Position des verlagerbaren Drehpunktes 8 bzw. des Auflagepunktes B in der Figur 1, wirkt die Spannkraft des Energiespeichers 9 auf einer Hebellänge, die gleich null ist. Deshalb kann kein Moment des Hebels 7 auf das Ausrücklager 14 wirken. Wird nun allmählich - in der Praxis sind das evtl. nur wenige Millisekunden - der verlagerbare Drehpunkt 8 radial zur nicht dargestellten Welle 1 hin bewegt, so nimmt die Hebellänge zwischen dem Energiespeicher 9 und dem Drehpunkt 8 immer weiter zu. Gleichzeitig verkürzt sich die Hebellänge von dem Drehpunkt 8 bis zu seinem Auflagerpunkt am Ausrücklager 14. Durch das Verlagern des Drehpunktes 8 bzw. Auflagepunktes B wird eine Kraftveränderung gemäß der Formel $F_G = F_F \dfrac{b}{a}$ auf das Ausrücklager 14 bewirkt.

$F_G$= Gesamtkraft
$F_F$ = Federkraft
a = Abstand des Drehpunktes 8 bzw. vom Ausrücklager
b = Abstand des Drehpunktes 8 bzw. von der wirkenden Federkraft

Aus dieser Gleichung wird ersichtlich, dass die Ausrückkraft größer wird, je näher der Drehpunkt 8 bzw. Auflagepunkt B an das Axiallager 14 heranrückt.

In der Figur 2 ist schließlich der verlagerbare Drehpunkt 8 bzw. der Auflagepunkt B in seiner radial inneren Position angelangt. Hier wird ein maximales Moment des Hebels 7 auf das Ausrücklager 14 ausgeübt (s. Gleichung). In Verbindung mit der Tellerfeder 10 (Ausrückfeder), die wiederum ein Hebelsystem darstellt, kann dann die Anpresskraft auf die Druckplatte 3 durch diese weitere Hebelübersetzung noch verstärkt werden. Die Tellerfeder muß dabei eine höhere Kraft als die maximale Anpresskraft besitzen, damit an den Laufrollen 31 am äußeren Auflagepunkt stets eine Mindestkraft anliegt, um ein Durchdrehen der gesamten Anordnung zu vermeiden (der kleinste Auflagedurchmesser der Laufrollen 31 ist stets größer als der Abstützdurchmesser zur Kupplung)

Durch die konkave Form des Hebels 7 kann der verlagerbare Drehpunkt 8 radial verstellt werden, ohne dass er hierbei eine "Steigung" überwinden muss. Dieses hat den Vorteil, dass das Verstellen des verlagerbaren Drehpunkts 8 bzw. des Auflagepunktes B auch mit geringem Energieaufwand bewerkstelligt werden kann. Durch die konkave Form des Hebels 7 (bzw. konkave Form einzelner hebelförmiger Zungen einer Tellerfeder 10) ist die Tangente am Berührpunkt des konkaven Hebels 7 im Wesentlichen parallel zu der radialen Bahn des verlagerbaren Drehpunktes 8. bzw. des Auflagepunktes B.

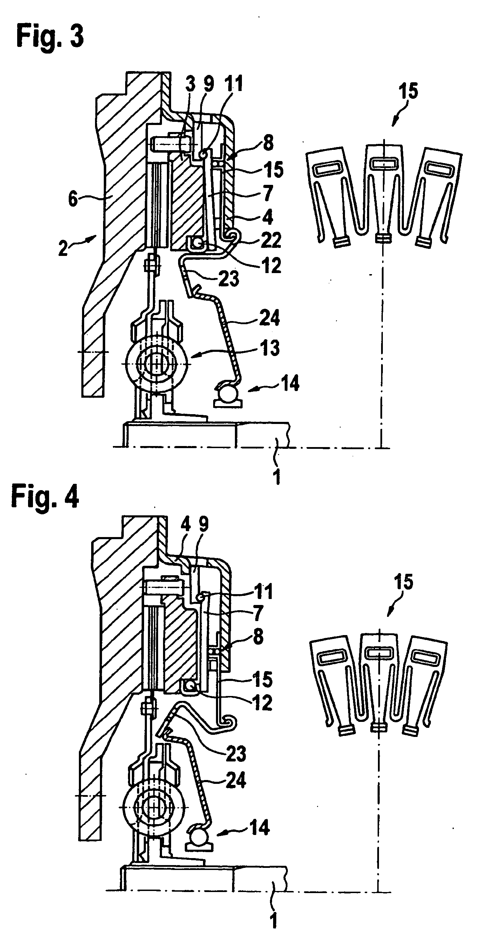

Mit den Figuren 3 und 4 wird eine Ausgestaltung des Prinzips der Figuren 1 und 2 gezeigt. Die Figuren 3 und 4 müssen hier ebenfalls wiederum im Zusammenhang betrachtet werden, weil die Figur 3 hierbei eine geöffnete Kupplung, während die Figur 4 eine geschlossene Kupplung zeigt. Die Kupplung 2 ist ergänzend mit einem Torsionsdämpfer 13 ausgerüstet, wodurch motorseitige Drehungleichförmigkeiten getriebeseitig minimiert werden.

Der Kupplungsdeckel der Kupplung 2 weist hierbei Einstanzungen auf, auf denen sich ein Energiespeicher 9 - hier als Tellerfeder ausgebildet - abstützt. Die Tellerfeder ist hier gespannt, weshalb sie im Wesentlichen einen ebenen Ring bildet. Zwischen dem Energiespeicher und dem Hebel 7 ist am oberen Ende des Hebels ein radial fester Drehpunkt 11 angeordnet. Dieser Drehpunkt 11 ist beispielsweise als Drahtringlager ausgebildet. Dieser Drehpunkt 11 gestattet zwar ein Schwenken des Hebels 7 in der Ebene der Darstellung, aber er gestattet kein radiales Verschieben. Der Kupplungsdeckel 4 weist an seiner Innenfläche - d. h. der Druckplatte 3 zugewandt - eine ebene Lauffläche auf. Auf dieser Lauffläche liegt eine Mäanderfeder 15 an. Diese Mäanderfeder 15 ist auch noch mal neben der Figur 3 in einem Ausschnitt ihrer Draufsicht dargestellt. In den oberen - d. h. in ihren äußeren - Enden befinden sich in diesem Ausführungsbeispiel rechteckige Fenster, in denen Zylinderrollen (Laufrollen 31) paarweise übereinander angeordnet sind. Die inneren Enden dieser Mäanderfeder 15 sind mit einer Art Haken versehen, mit denen sie mit einer speziellen Tellerfeder 22 eine mechanische Verbindung eingehen. Wegen der gewählten Darstellung, bei der keine umlaufenden Linien gezeigt werden, scheint diese Tellerfeder 22 aus einem schwanenhalsförmigen Draht zu bestehen. Die gleiche Verwirrung könnte bezüglich einer Ausrückschale 24 zustande kommen, die in Wirkverbindung mit dem Ausrücklager 14 besteht. Vergegenwärtigt man sich jedoch, dass sowohl die Tellerfeder 22, als auch die Ausrückschale - wie der Name hier schon sagt - schalenförmige Elemente sind, so wird die Wirkungsweise dieser Bauteile schneller deutlich. Die Tellerfeder 22 ist dadurch gekennzeichnet, dass sie sowohl vom äußeren Durchmesser bis etwa zu ihrer Mitte, als auch von ihrem inneren Durchmesser in Richtung Außendurchmesser teilweise geschlitzt ist. In dem hier vorliegenden Ausführungsbeispiel gibt es einen ringförmigen, nicht geschlitzten Bereich, der ungefähr im inneren Drittel der Tellerfeder 22 liegt. Dieser nicht geschlitzte, ringförmige Bereich der Tellerfeder 22 besitzt nach den Regeln der Festigkeitslehre eine so genannte neutrale Faser 23. Erfährt nun die Tellerfeder 22 in ihrem inneren Durchmesserbereich eine Krafteinwirkung nach links, so muss der ungeschlitzte, ringförmige und zugleich kegelförmige Bereich der Tellerfeder zunächst erst mal "flach gedrückt werden". Ist dieser flach gedrückte Zustand überschritten, so versucht sich wieder eine Kegelform einzustellen, wodurch die Bewegung der Tellerfeder 22 fortgesetzt wird. Durch die beschriebene Krafteinwirkung auf die Tellerfeder 22 kommt es demzufolge zu einer Formänderungsarbeit, die der Biegung entspricht, denn es bilden sich umfängliche Zug- bzw. Druckspannungen diametral zur ringförmigen, neutralen Faser aus. Bei der beschriebenen, elastischen Verformung der Tellerfeder 22 wird der Durchmesser der neutralen Faser nicht verändert, jedoch wandert der Ring der neutralen Faser axial nach links. Die äußeren Zungen der Tellerfeder 22, die durch die äußeren Schlitze gebildet werden, führen hierbei eine starke Schwenkbewegung um die neutrale Faser aus. Da diese äußeren Enden der Tellerfeder 22 zugleich auch in die inneren Haken der Mäanderfeder 15 eingreifen, wird hierbei die Mäanderfeder radial nach innen gezogen. Diese Lageänderung der Mäanderfeder 15 ist deshalb möglich, weil die einzelnen Segmente der Mäanderfeder mittels dünner Stege miteinander verbunden sind. In der rechten Hälfte der Figur 4 kann man deutlich sehen, wie diese Stege durch das "nach innen ziehen der Mäanderfeder 15" die Stege enger zusammen gerückt sind, wodurch ein geringerer Innen- als auch Außendurchmesser der Mäanderfeder 15 möglich ist, ohne dass sich die einzelnen Segmente der Mäanderfeder 15 gegenseitig behindern. Durch die radiale Bewegung der Mäanderfeder 15 wandert der verlagerbare Drehpunkt 8 näher zur Welle 1. Da der verlagerbare Drehpunkt 8 aus zwei übereinander angeordneten Wälzlagerkörpern besteht, gibt es beim Verlagern dieses Drehpunktes 8 keine nennenswerten Reibungsverluste, da vorteilhafter Weise die Drehrichtungen des Wälzkörpers auf dem Hebel 7 und des Wälzkörpers auf der Innenseite des Kupplungsdeckels 4 und auch die Drehbewegung der Wälzkörper zueinander, jeweils ein Aufeinander-Abrollen darstellen.

Ist nun der Drehpunkt 8 radial nach innen verlagert worden, drückt der Hebel 7 in diesem Fall auf eine Verschleißnachstellung 12, die auf der Druckplatte 3 angeordnet ist. Der Hebelarm zwischen dem Drehpunkt 8 und dem festen Drehpunkt 11 stellt dann eine relativ große Länge dar, wodurch der Energiespeicher 9 seine in ihm innewohnende Kraft über den Drehpunkt 11 in den Hebel 7 einleiten kann und die Kupplung wird geschlossen. Soll die Kupplung wieder geöffnet werden, so ist lediglich ein umgekehrter Bewegungsablauf erforderlich.

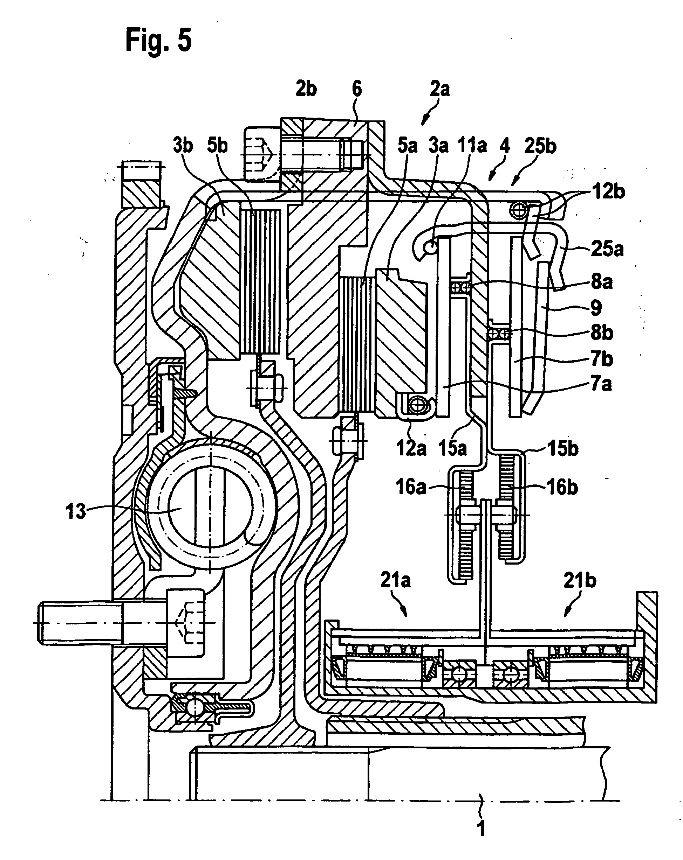

Die Figuren 5 bis 8 zeigen jeweils ein doppeltes, erfindungsgemäßes Hebelsystem in Verbindung mit einer Doppelkupplung. Bei den Doppelkupplungen aus den Figuren 5 bis 8 ist die Gegendruckplatte 6 mittig zwischen den Kupplungsscheiben 5a, 5b und mittig zwischen den Druckplatten 3a, 3b angeordnet. Die Gegendruckplatte 6 ist drehfest mit einem Gehäuseteil der Doppelkupplung verbunden. Der Kupplungsdeckel 4 ist ebenfalls mit der Gegendruckplatte 6 und damit mit dem Gehäuse der Doppelkupplung verbunden. In der Figur 5 sind die Stellmotoren 21a, 21b als so genannter Starter-Generator ausgebildet. Die Außenhülle der Stellmotore 21a, 21b- üblicherweise Stator genannt - ist hier drehbar gestaltet, wodurch der Begriff Stator - also stehendes Teil - nicht geeignet ist und deshalb hier der neutrale Begriff Hülle verwendet wird. Mit anderen Worten: Die Innenhülle der Stellmotoren 21a, 21b ist drehfest und mittels einer geeigneten mechanischen Brücke mit dem nicht rotierenden Getriebekörper verbunden. Über diesen nicht rotierenden Teil der Stellmotoren 21a, 21b erfolgt auch die Stromzufuhr (hier nicht dargestellt). Von jedem der Stellmotoren 21a, 21b erstreckt sich ein Arm radial nach außen, wobei am Ende eines jeden Armes eine Querachse mit einer Rolle angeordnet ist. Der Stift des Stellmotors 21a, greift in einen so genannten radialen Federbandaktor 16a ein. Dieser Federbandaktor 16a (entsprechendes gilt für den Federbandaktor 16b) besteht beispielsweise aus einer spiralförmig gewickelten Feder (vorzugsweise aus Metall gefertigt), die mit mindestens einem ihrer Enden mit einer Mäanderfeder verbunden ist, um ein Schlupfen dieses Federbandaktors 16a in der Mäanderfeder 15a zu verhindern. Da die Mäanderfeder 15a (entsprechendes gilt für 15b) drehfest mit dem Kupplungsdeckel 4 verbunden ist, ergibt sich bei einer nicht rotierenden Hülle des Stellmotors 21a ein Durchkämmen des Stiftes in den Lagen des Federbandaktors 16a, wobei dieser je nach Drehrichtung der Doppelkupplung und je nach Wickelrichtung des Federbandaktors 16a die Mäanderfeder 15a entweder radial nach innen zieht, oder nach außen drückt. Hierdurch erfolgt eine Verlagerung des radial verlagerbaren Drehpunktes 8a. Der dem Drehpunkt 8a zugeordnete Hebel 7a drückt auf eine Verschleißnachstellung 12a und einem radial fixen Drehpunkt 11a. Vom Drehpunkt 11a gibt es wiederum einen Kraftfluss mittels einer Klammer 25a auf den Energiespeicher 9. Dieser Energiespeicher 9 wirkt wiederum auf den Hebel 7b, den Drehpunkt 8b und den Hebel 7a. Es ist eine Besonderheit in den Figuren 5 bis 8, dass bei den dort dargestellten Doppelkupplungen und der auch doppelt vorhandenen, erfindungsgemäßen Hebelsysteme, es jeweils nur einen Energiespeicher 9 gibt, der aber jeweils für beide Hebelsysteme zuständig ist.

Die Klammern 25a, 25b und deren Durchdringungen durch die anderen Körper (beispielsweise Gegendruckplatte 6 oder Kupplungsdeckel 4), sind ohne weitere Schnittzeichnungen oder weitere Ansichten kaum korrekt darstellbar. Deshalb ist hier teilweise auf Schraffierungen oder der Darstellung von Durchbrüchen verzichtet worden, um die Übersicht nicht weiter zu beeinträchtigen.

Die Klammer 25a verbindet die beiden Hebelsysteme 7a und 7b miteinander, während die Klammer 25b die Wirkverbindung von den Hebelsystemen zur Druckplatte 3b herstellt. Zwischen dem rechten Ende des Hebels 25b und dem äußeren Ende des Hebels 7b ist eine Verschleißnachstellung 12b angeordnet, die mittels eines Rampenringes und einer axial gezahnten Innenseite an der Klammer 25b arbeitet.

In den Figuren 1 und 2 ist ein Axiallager 14 erforderlich, weil ein drehfestes Ausrücksystem bzw. ein drehfestes Hebelsystem auf drehende Teile der Kupplung 2 einwirkt und deshalb Relativdrehbewegungen ausgeglichen werden müssen. Um die Durchmesser bei Ausrücklagern zu halten, wird der Kraftfluss in die Nähe des Wellendurchmessers geleitet und von da aus wieder zu den eigentlichen Pressflächen. So lässt sich ein kleines Axiallager 14 realisieren. Werden Bremsen, genauer gesagt Getriebebremsen - beispielsweise in einem Automatikgetriebe - realisiert, so werden zunächst rotierende Bremsscheiben mittels Druckplatten - die drehfest zum Gehäuse sind - abgebremst (die Gegendruckplatte ist sowieso gehäusefest). Weil aber die Druckplatte hier drehfest ist, kann mittels einer Mechanik, die direkt am Getriebegehäuse angebracht ist, direkt auf die ebenfalls drehfeste Druckplatte einwirken, ohne dass man ein Axiallager benötigt wird. Die Betätigung der Doppel-Kupplungen aus den Figuren 5 bis 7 ist deshalb vorteilhaft, weil hier ebenfalls kein Axiallager 14 benötigt wird.

Beim Betätigen des Stellmotors 21b mittels des Federbandaktors 16b und der Mäanderfeder 15b wird die Druckplatte 3b bewegt. Wird die Mäanderfeder 15b mit ihrem Drehpunkt 8b radial weit nach außen gefahren, so drückt sich dann die Druckplatte 3b an die Kupplungsscheibe 5b und damit an die Gegendruckplatte 6 an. Soll jedoch die rechte Kupplungshälfte geschlossen werden - also die Druckplatte 3a wird gegen die Gegendruckplatte bewegt- so muss in diesem Fall der radial verlagerbare Drehpunkt 8a radial nach innen bewegt werden.

Es wurde bereits angedeutet, dass die Relativbewegung der Stifte in den Federbandaktoren 16a und 16b für das Öffnen und Schließen der Kupplungshälften verantwortlich ist. Um keine Verstellung der Drehpunkte 8a und 8b hervorzurufen, muss also der äußere Ring der Stellmotoren 21a, 21b mit gleicher Drehzahl wie die Doppelkupplung umlaufen. Ein radiales Verstellen der Mäanderfedern 15a, 15b kann also durch Anhalten der äußeren Hülle der Stellmotoren 21a, 21b geschehen oder aber auch durch eine Erhöhung ihrer jeweiligen Drehzahl bewerkstelligt werden. Für die Betätigung einer Kupplung ist hierbei nicht nur die Drehrichtung und Drehzahl der Kupplung und die Drehrichtung und Drehzahl der Stellmotoren 21a, 21b ausschlaggebend, sondern die Stellbewegungen hängen auch davon ab, ob der betreffende Federbandaktor "links herum" oder "rechts herum" gewickelt ist.

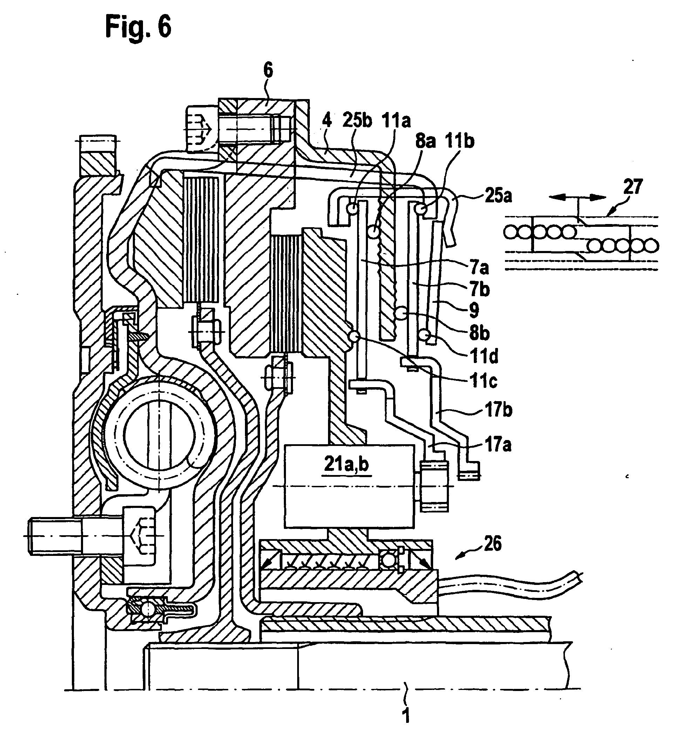

In der Figur 6 wird eine weitere Ausgestaltung der Erfindung gezeigt. In diesem Ausführungsbeispiel sind in einer radial sich erstreckenden Ebene, die drehsynchron mit der Gegendruckplatte 6 läuft, auf der Innen- als auch auf der Außenseite spiralförmige Nute vorhanden. Vorteilhafterweise wird in diesem Ausführungsbeispiel diese Ebene von dem Kupplungsdeckel 4 gebildet. Das hat den Vorteil, dass dadurch kein weiteres Bauteil benötigt wird. Die Hebel 7a, 7b sind hier in besonderer Weise gelagert: Sie stützen sich zusätzlich zu den Punkten 8a, 8b auf den Drehpunkten 11a bis 11d ab, die als Kugelrollen 31 ausgebildet sind. Diese Kugelrollen 31 laufen jeweils in ringförmigen Nuten. Soll beispielsweise der Drehpunkt 8a für den Hebel 7a verstellt werden, so wird der scheibenförmige Hebel 7a mittels eines Stellringes 17a (hier als Hohlrad ausgebildet) gedreht. Der Stellring 17a weist an seinem Innendurchmesser eine Verzahnung auf, in die ein Ritzel eines exzentrisch angeordneten Stellmotors 21a eingreift. Durch die exzentrische Anordnung des Stellmotors 21a kann dieser nicht direkt mit seiner Stromversorgung verbunden sein, weil sonst das Verbindungskabel sich um die Welle 1 wickeln würde. Deshalb ist dieser Stellmotor 21a mittels eines Stromübertragers 26 elektrisch mit der drehfesten Umgebung verbunden. Dieser Stromübertrager 26 besteht im Wesentlichen aus Schleifkontakten, die zwischen einem feststehenden und einem mitrotierenden Teil des Stromübertragers eine elektrische Verbindung herstellen (der dem Stellring 17b und damit dem Hebel 7b zugeordnete Stellmotor 21b liegt zeichnerisch hinter dem Stellmotor 21a und ist deshalb nicht in der Figur 6 zu sehen). Soll nun beispielsweise der Drehpunkt 8a für den Hebel 7a radial nach innen verlagert werden, so wird der scheibenförmige Hebel 7a in Abhängigkeit von der Wickelrichtung der spiralförmigen Nute angetrieben. Während dieses Verstellens läuft der Hebel 7a gleichzeitig auf seinen Drehpunkten 11a und 11c. Da die Nuten der Drehpunkte 11a und 11c aber ringförmig, d. h. kreisförmig sind, ergibt sich hier keine Veränderung ihrer radialen Position. Der Energiespeicher 9 für den Hebel 7a wirkt in dem Ausführungsbeispiel der Figur 6 nicht direkt. Erst mit der Klammer 25a wird eine Wirkverbindung zu dem Energiespeicher 9 aufgebaut. In dem Ausführungsbeispiel der Figur 6 ist auch deutlich zu erkennen, dass dieser Energiespeicher 9 zugleich auch für den Hebel 7b zuständig ist. Die Hebel 7a und 7b der Figur 6 sind zumindest in den Bereichen, die von den Drehpunkten 8a, 8b, 11a, 11b, 11c, 11d überstrichen werden, nicht geschlitzt, da sonst die spiralförmig bzw. kreisförmig wandemden Kugeln in die entsprechenden Schlitze fallen könnten.

Wegen der nur punktförmigen Tragfähigkeit der Kugeln und weil sich diese umfänglich bewegen, genügt es in dem Ausführungsbeispiel der Figur 6 nicht, wenn eine begrenzte Anzahl Wälzkörpern verwendet wird, wie es beispielsweise in Verbindung mit einer Mäanderfeder 15 machbar ist. Hier ist ein ganzer Ring von Kugeln 31 auf dem Umfang mindestens einer Spirale und auf dem Umfang der Lagerstellen 11a, 11b, 11c, 11d anzuordnen. Befinden sich die Kugeln 31 einer Spirale, die beispielsweise den Drehpunkt 8a darstellen, im inneren Durchmesser der Spirale, so macht diese aus Kugeln 31 gebildete Spirallinie etwa einen Winkel von 360° aus. Ist dagegen der Drehpunkt 8a beispielsweise radial sehr weit nach außen verlagert worden, so bilden die spiralförmig angeordneten Kugeln 31 einen Winkel kleiner als 360°. Um zu verhindern, dass sich die Kugeln 31, beispielsweise durch undefinierte Lastbedingungen ungleichmäßig über die im Kupplungsdeckel 4 eingeprägte Spirale verteilen, ist es vorteilhaft, wenn beide Enden dieser "Kugelspirale" mittels einer Führungsgabel 27 fixiert werden. Diese Führungsgabel 27 ist als kleine separate Figur in der Figur 6 dargestellt, wobei diese Figur, die Situation der Kugelspirale" wiedergibt, die bei der radial inneren Position des Drehpunktes 8a gegeben ist. Das innere und das äußere Ende der Kugelspirale stoßen hierbei in die Enden der Gabelschlitze der Führungsgabel 27. Der Doppelpfeil an der Führungsgabel 27 soll hierbei nicht andeuten, dass die Kugeln 31 per Krafteinwirkung auf der Führungsgabel 27 verschoben werden, sondern, dass sich die Führungsgabel 27 je nach Verstellrichtung in diese beiden Richtungen bewegt. Befindet sich die "Kugelspirale" auf einem äußeren Durchmesser der spiralförmigen, eingeprägten Nut, so verteilen sich die Kugeln 31 auf einem größeren Spiral-Umfang, wodurch die linke, innere Kugel und/oder die rechte, äußere Kugel nicht mehr in den Gabelschlitzen anliegen. Dieses ist aber nicht nachteilig, weil insgesamt aber im Wesentlichen die Kugeln 31 nur auf einem Gang der Spirale angeordnet sind, wodurch ein ringförmiger Drehpunkt 8a entsteht. Durch die Führungsgabel 27 können aber keine Kugeln 31 auf eine weiter innen oder auf eine weiter außen liegende Spirale gelangen, welches zu undefinierten Lagerbedingungen führen könnte.

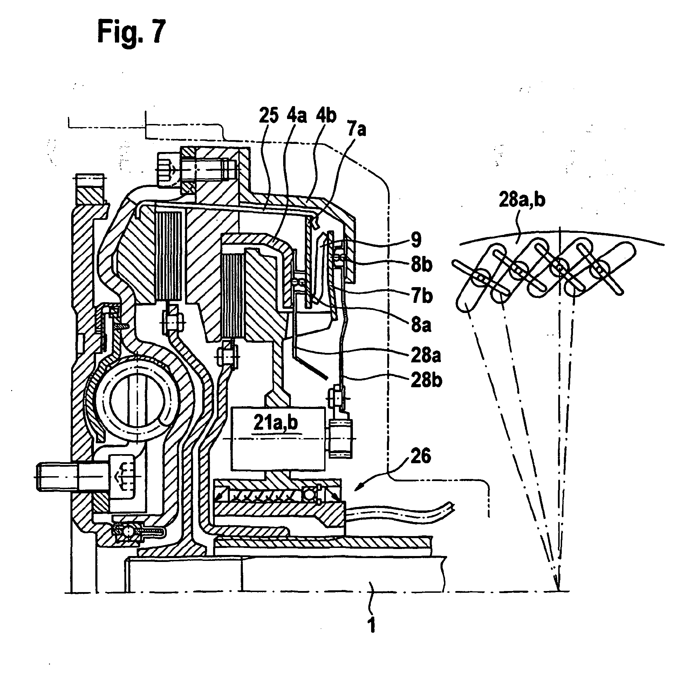

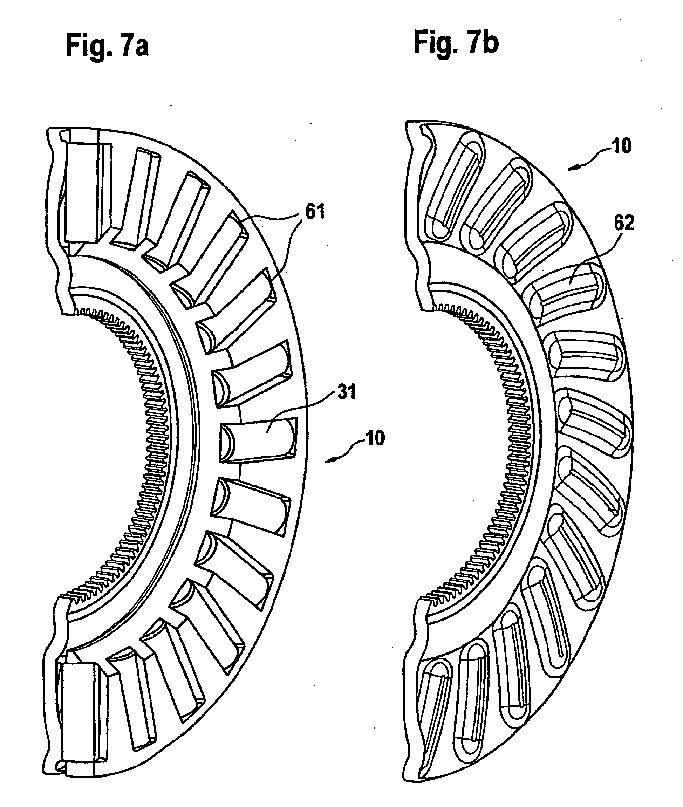

Mit der Figur 7 wird eine Kombination aus den Figuren 6 und 5 gezeigt. Die Stellmotoren 21a und 21b sind wiederum exzentrisch zur Welle 1 angeordnet. Die verlagerbaren Drehpunkte 8a und 8b werden mittels einer Kulisse 28a, 28b verlagert. Im Kupplungsdeckel 4a, 4b und in den Hebeln 7a, 7b sind jeweils deckungsgleiche Spiralsegmente eingearbeitet Aus den Figuren 7a und 7b geht hervor, dass ebenso gut die Tellerfeder 10, die gemäß Figur 7b auch als Hebel 7 fungieren kann, mit Einprägungen (Käfigen 61, Sicken 62) versehen werden kann, mit denen gleichzeitig die Wippkurve für die Laufrollen 31 abgebildet wird. Durch diese Ausbildung erfolgt eine weitgehende Kompensation der Anpresskraft. Zum Verdrehen der Tellerfeder 10a, 10b sind im Verhältnis zur Anpresskraft nur geringe Verstellkräfte erforderlich.

Bei der Figur 7b stützen sich die Sicken 62 an Nadeln als besondere Ausgestaltung von Wälzkörpern bzw. Laufrollen 31 ab. Der Druck- bzw. Auflagepunkt der Tellerfeder 10a, 10b an der Druckplatte 3a, 3b wandert durch Verdrehen der Spiralentellerfeder von außen nach innen. Durch dieses Wandern des Auflagepunktes wird die Tellerfederkraft erhöht und die Kupplung 2a, 2b dadurch zugedrückt.

Die Nadeln 31 werden auf der anderen Seite außen von einem Stützblech festgehalten. Innen drücken sie gegen einen Anpressring, welcher die Anpresskraft überträgt.

Diese Spiralsegmente sind vorteilhafter Weise eingestanzt, da dieses Bearbeitungsverfahren einfach, schnell, ausreichend präzise und damit auch kostengünstig ist. In den Kulissen 28a, 28b sind ebenfalls Spiralsegmente eingearbeitet, die jedoch im Wesentlichen im rechten Winkel zu den Spiralsegmenten der Kupplungsdeckel 4a, 4b bzw. der Hebel 7a, 7b orientiert sind. Eine Teilansicht der Kulissenanordnung ist in der kleinen Figur neben der Doppelkupplung dargestellt. Hierbei stellt die schmalere Einprägung ein Spiralsegment eines Kupplungsdeckels 4a, 4b und die breitere Nut das Spiralsegment einer Kulisse 28a, 28b dar. Wird nun diese Kulisse 28a, 28b mittels eines Stellmotors 21a, 21b um die Drehachse der Welle 1 gedreht, so verschieben sich die Kugeln 31 der Drehpunkte 8a und/oder 8b radial. In der Figur 7 ist auch wieder zu sehen, dass der Energiespeicher 9 sowohl den Hebel 7a als auch den Hebel 7b bedient.

In der Beschreibung der Figuren 3 und 4 wurde bereits angesprochen, dass ein Übereinander-Anordnen von Wälzkörpern die Verstellung der Drehpunkte 8a und 8b erleichtert. In Figur 7 sind es jedoch keine zylindrischen Wälzkörper, sondern Kugeln 31. Aber auch in Verbindung mit Kugeln 31 ist es sinnvoll, wenn diese Wälzkörper paarweise übereinander angeordnet werden, wodurch dann auch hier die Verstellreibung minimiert wird. Ein Abgleiten der einen Kugel 31 von der anderen Kugel 31 wird erfindungsgemäß dadurch verhindert, dass die paarweise angeordneten Kugeln 31 in der einen Querrichtung von der Kulisse, und in der anderen Querrichtung von den Spiralsegmenten der Kupplungsdeckel 4a, 4b und den Spiralsegmenten der Hebel 7a, 7b gehalten werden

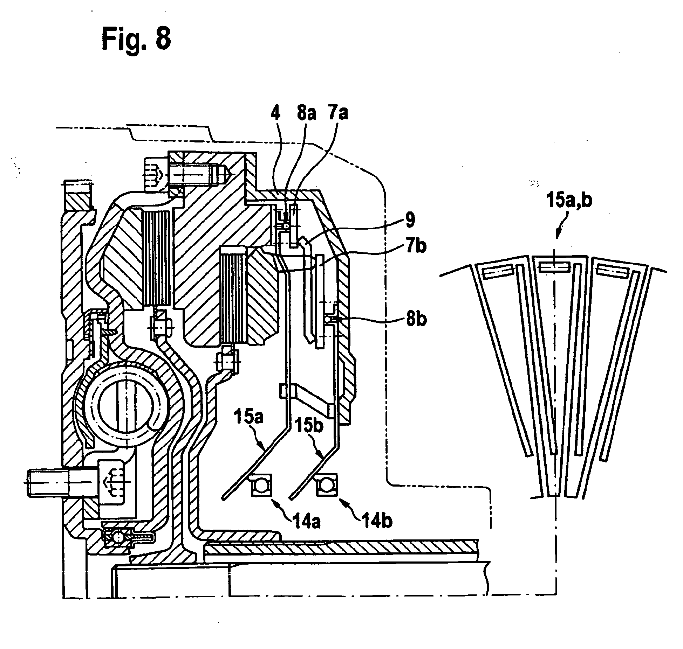

In der Figur 8 wird eine weitere Ausgestaltung einer Mäanderfeder 15a bzw. 15b gezeigt. In der Figur 8 zugeordneten Detailansicht deuten die rechteckigen, umfänglichen Schlitze an, dass hier zylindrische Wälzkörper platziert werden. Die radialen, langen Schlitze erstrecken sich abwechselnd vom Außendurchmesser der Mäanderfeder 15 zum Innendurchmesser und vom Innendurchmesser nahe an den Außendurchmesser, wodurch schlanke, nachgiebige Stege entstehen und dadurch die einzelnen Segmente der Mäanderfeder 15 auf einander zu oder von einander weg bewegt werden können.

Die Darstellung der Figur 8 ist wegen der Weglassung der Umfangslinien wieder etwas irreführend. Die inneren, schräg verlaufenden Schenkel der Mäanderfeder 15a und 15b scheinen drahtförmig gestaltet zu sein. Sie sind jedoch wegen ihrer rotationssymmetrischen Struktur tatsächlich kegelförmig. Durch diese Kegelform bietet sich eine vorteilhafte Anlagefläche für die Axiallager 14a und 14b, mittels der die Mäanderfedern 15a, 15b radial nach außen verschoben werden können. Ein Verschieben der Mäanderfedern radial nach innen kann beispielsweise mittels eines nicht dargestellten Federmechanismus' erfolgen. Auch wurden in dieser Darstellung die Klammern weggelassen, die die linke Druckplatte 3b betätigt.

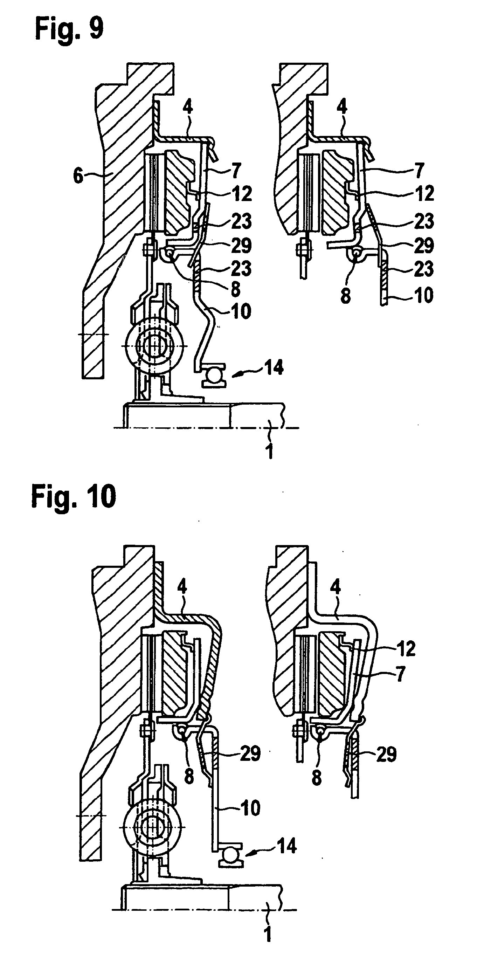

Die Figuren 9 und 10 zeigen jeweils 2 Figuren, wobei die linke Figur jeweils eine geschlossene Kupplung darstellt und die rechte Figur ausschnittsweise die dazugehörige geöffnete Kupplung veranschaulicht.

In der Figur 9 besteht der Kupplungsdeckel 4 fast nur noch aus einem schmalen Ring, der an seinem der Gegendruckplatte 6 zugewandten Ende mit einem Befestigungsflansch versehen ist und an seinem anderen Ende einen doppelt gekröpften Rand aufweist. Dieser gekröpfte Rand dient als radial unverrückbarer Drehpunkt für den Hebel 7. Der Hebel 7 ruht auf einem Berührungspunkt der Verschleißnachstellung 12.

Der Hebel 7 ist hier ebenfalls als Tellerfeder ausgebildet, wobei diese Tellerfeder 7 aus einem schmalen, ungeschlitzten, inneren Ring, aus relativ langen Außenzungen und aus kurzen, abgewinkelten Innenzungen besteht. Der Ring, also der ungeschlitzte Teil der Tellerfeder 7 (entspricht dem schraffierten Bereich), weist eine im Wesentlichen mittige neutrale Faser 23 auf, um die er schwenkt, wenn eine Krafteinwirkung auf mindestens eine der Zungen erfolgt. Mit anderen Worten: Die Lage des ungeschlitzten Bereiches innerhalb einer Tellerfeder 7 bestimmt entscheidend deren Wirkungsweise, da die Lage der neutralen Faser den Bereich vorgibt, der keiner Verformung unterliegt.

Durch die Drehbewegung der Kupplung - und damit auch des Hebels 7 - entstehen Fliehkräfte, durch die die radial sich erstreckenden langen Zungen in einem besonders starken Maße nach außen geschleudert werden. Es entsteht um die neutrale Faser 23 herum ein linksdrehendes Moment. Durch eine Rückstellfeder 29 (hier auch wieder als Tellerfeder ausgebildet) wird die Ausrückfeder 10 nach rechts gedrückt. Wie in dem rechten Teil der Figur zu sehen ist, hat die Ausrückfeder 10 einen im äußeren 2/3-Bereich liegenden, ungeschlitzten Bereich. Dieser Bereich weist eine neutrale Faser 23 auf, die von der des Hebels 7 verschieden ist. Im rechten Teil der Figur ist auch zu sehen, dass dieser ungeschlitzte Bereich leicht kegelförmig gestaltet ist. Deshalb ist diese Tellerfeder 10 hier zugleich auch der Energiespeicher 9, der bei einer Bewegung nach links den kegelförmigen Bereich elastisch verformt und dabei gespannt wird. Wird nun die Tellerfeder 10 mittels des Axiallagers 10 nach links gedrückt, so bewegt sich eine in den äußeren Zungen der Tellerfeder 10 platzierte Rolle 31 auf der Oberfläche der Unterseite des Hebels 7 nach links. Es wird hierbei der Punkt der Krafteinleitung an den inneren, kurzen, abgewinkelten Zungen des Hebels 7 ebenfalls nach links verlagert. Damit sich die Tellerfeder 10 nach links bewegt, muss sowohl die Spannkraft der Rückstellfeder 29, die Verformungskraft für die Tellerfeder 10, als auch Schließkraft für den Hebel 7 aufgebracht werden.

Die Tellerfeder 10 wird im Zusammenhang mit der Figur 9 bewusst nicht Ausrückfeder genannt, weil die dargestellte Kupplung durch Drücken des Axiallagers 14 gegen die Kupplung geschlossen wird. Die Tellerfeder 10 wäre dann eher eine Drückfeder statt einer Ausrückfeder. Aufgrund dieses Kupplungsaufbaues werden diese Kupplungen auch "gedrückte" Kupplungen genannt. Bei diesen Kupplungen kann aber durch eine Vorrichtung, die eine kinematische Umkehr bewirkt, mit einem gedrückten Kupplungspedal dennoch die Kupplung geöffnet werden, denn beim Nachlassen der Kraft auf das Axiallager 14 würde die Rückstellfeder 29 die Tellerfeder 10 nach rechts drücken und damit die Kupplung öffnen. Häufig wird das "Zudrücken" von Kupplungen auch elektromotorisch bewerkstelligt.

Die Kupplung der Figur 10 ist wieder eine "normale" Kupplung, d.h. dass bei einem gedrückten Kupplungspedal die Kupplung öffnet. Weil bei dieser Bauweise keine elektromotorische Betätigung erfolgt, steht der Fuß in direkter Wirkverbindung mit der Tellerfeder 10. Man spricht deshalb auch von Kupplungen mit Pedalgefühl. Der ungeschlitzte Bereich des Hebels 7 - hier wieder als Tellerfeder ausgebildet - befindet sich hier ganz am inneren Rand. Durch die Lage der neutralen Faser dieses Bereiches kommt es hier nicht zu einem Kippen der Zungen um einen etwa mittleren Durchmesserbereich, wie bei der Figur 9.

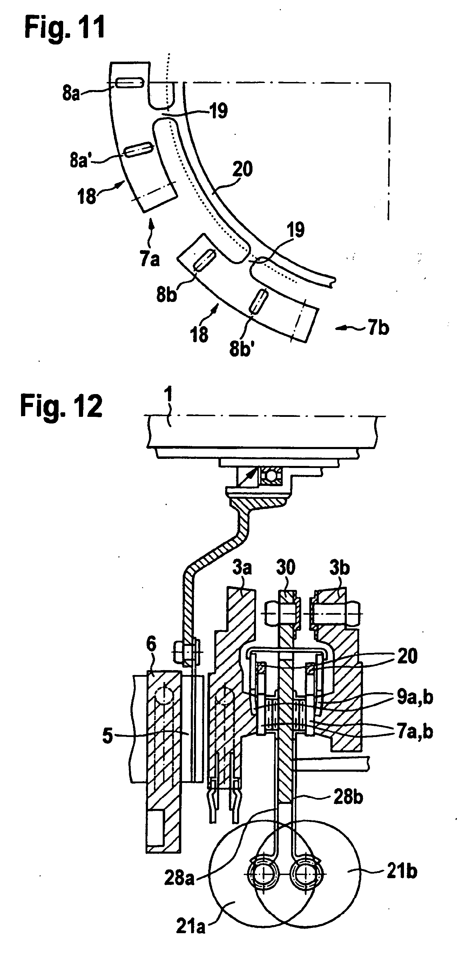

Mit den Figuren 11 und 12 wird ein Hebelsystem gezeigt, bei dem der mindestens eine Hebel 7a, 7b an einem Haltering 20 angebracht ist. Diese Bauweise eines Hebels 7 wird auch segmentierter Ringhebel 18 genannt. Der Haltering 20 ist im Wesentlichen konzentrisch zu der zu betätigenden Kupplung oder Getriebe-Bremse angeordnet. Die Figur 11 zeigt einen Ausschnitt dieser ringförmigen Struktur, während die Figur 12 einen Längs-Halbschnitt zur Welle 1 verdeutlicht. Die Hebel 7a, 7b sind um eine radiale Achse in kleinen Winkelbeträgen schwenkbar. In dieser Figur 12 erfolgt das Schwenken mittels eines elastisch verformbaren Steges 19. Auf der Oberfläche der Hebel 7a, 7b sind radial Wälzkörper 31 angeordnet, die umfänglich verlagert werden können. Diese Wälzkörper 31 bilden je einen verlagerbaren Drehpunkt 8a, 8b (bzw. 8a', 8b' nach der Verlagerung). Der radiale Strich - hier am längeren Ende des Hebels - deutet die Berührlinie des Energiespeichers an.

In der Figur 12 ist zwischen zwei Betätigungseinrichtungen für die Druckplatten 3a, 3b eine Führungsfläche 30 angeordnet, die ortsfest in einem Getriebegehäuse befestigt ist. Auf dieser laufen in je einer Kulisse 28a, 28b übereinander liegende Wälzkörper 31 Die äußeren Wälzkörper 31 berühren die Oberfläche der Hebel 7a, 7b. Die Kulissen 28a, 28b werden mittels je eines Stellmotors 21a, 21b um die Drehachse der Welle 1 geschwenkt. Die mechanische Kopplung der Kulissen 28a und 28b erfolgt mittels einer Schneckenrad-Profilierung und einer Schnecke am Stellmotor 21a, 21b.

Wird nun beispielsweise die Kulisse 28a um die Drehachse der Welle 1 geschwenkt, so verlagert sich der Drehpunkt von 8a nach 8a' oder umgekehrt. Da das eine Ende des Hebels 7a mit dem Energiespeicher 9a belastet ist, ergibt sich, dass der Energiespeicher 9a mittels eines langen Teil-Hebels ein hohes Moment erzeugt. Da der andere Teilhebel kurz ist, drückt er mit einer hohen Kraft auf die Duckplatte 3a, wodurch sie sich gegen die Scheibe 5 (hier ist es eine Getriebe-Bremsscheibe) bewegt. Da die Gegendruckplatte 6 ortsfest ist, wird die Bremsscheibe 5 schließlich zwischen den Platten 6 und 3a gehalten. Bei einem Zurückschwenken der Kulisse 28a wird die Bremsscheibe allmählich wieder freigegeben.

Die gestrichelten Linien in den Platten 3a und 6 deuten an, dass die Platten teilweise hohl ausgestaltet werden können. Dadurch können sie mit einer Kühlung (Wasserkühlung) versehen werden, wodurch die Erwärmung der Reibflächen, der Reibbeläge und der benachbarten Körper minimiert werden kann.

Es ist im Zusammenhang mit den Figuren 11 und 12 noch anzumerken, dass der gezeigte Mechanismus nicht nur für eine Getriebe-Bremse, beispielsweise in einem Automatik-Getriebe, sondern auch für eine Kupplung 2 verwendet werden kann. Umgekehrt können die Ausführungsbeispiele, bei denen eine Kupplung 2 dargestellt ist, auch in Verbindung mit Getriebe-Bremsen angewendet werden.

Die Figuren 13 bis 17 zeigen in verschiedenen Ansichten eine weitere Ausgestaltung der Erfindung. Mittels eines an der Abstützung 34 angebrachten Stellmotors 21 und vorzugsweise einer seitens des Verstellmotors 21 getriebenen Verstellspindel 33 werden eine Laufrolle 31 und deren zugeordnete Achse 32 entlang der Abstützung 34 und des Hebels 7 bewegt. In dieser Ausführung rollt die Laufrolle 31 auf der Abstützung 34 und die Achse 32 auf der Innenkontur des Hebels 7 (punktierte Linie) ab. Wegen der unterschiedlichen Durchmesser von Laufrolle 31 und Achse 32 könnte es zu Zwängen kommen, weshalb sich dann die Laufrolle 31 und die Achse 32 nur schwer radial (bezogen auf die Drehachse der Kupplung 2) bewegen lassen. Deshalb ist es vorteilhaft, wenn die Laufrolle 31 mittels eines Lagers, vorzugsweise mittels eines Nadellagers, auf ihrer Achse 32 gelagert ist.

Solange sich die Laufrolle 31 in der Nähe des Energiespeichers 9 befindet, kann keine Krafteinwirkung auf das Axiallager 14 und damit auf die Tellerfeder 10 der Kupplung 2 erfolgen. Während des Weges der Laufrolle 31 und der Achse 32 zur Wellenmitte, rollt in diesem Beispiel die Achse 32 auf einer nicht geraden Linie ab. Dieses ist beispielsweise dann vorteilhaft, wenn bei Wegabschnitten mit normalerweise wenig Energiebedarf der Stellmotor 21 dennoch gleichmäßig ausgelastet sein soll (beispielsweise um keine unnötig langen Kupplungs-Betätigungszeiten zu erzeugen). Bei diesen Wegabschnitten kann durch eine modifizierte Steigung in der Hebel-Oberfläche Betätigungszeit gewonnen werden.

Sind die Laufrolle 31 bzw. die Achse 32 relativ weit nach innen gefahren, kann, wie bereits erwähnt, der Energiespeicher 9 (hier paarweise und als Wendelfeder ausgestaltet) auf einen langen Teil-Hebel und damit kräftig auf die Tellerfeder 10 oder einen andersartigen Mechanismus drücken.

Wenn Stellmotore 21 für die Betätigung der erfindungsgemäßen Vorrichtung verwendet werden, ist es vorteilhaft, diese nicht nur nach einem einfachen Ein-Aus-Prinzip zu schalten, sondern von einer intelligenten Steuerung anzusteuem. Hierbei ist es besonders vorteilhaft, wenn die Steuerung mit Sensoren verbunden ist und die Betätigungen mittels eines digitalen Programms erfolgen. Sind mehrere Stellmotore 21 in einem Getriebe vorhanden, ist es vorteilhaft, diese von einer gemeinsamen Steuerung anzusteuern, weil dann die Funktionen der einzelnen Motore 21 besser aufeinander abgestimmt werden können.

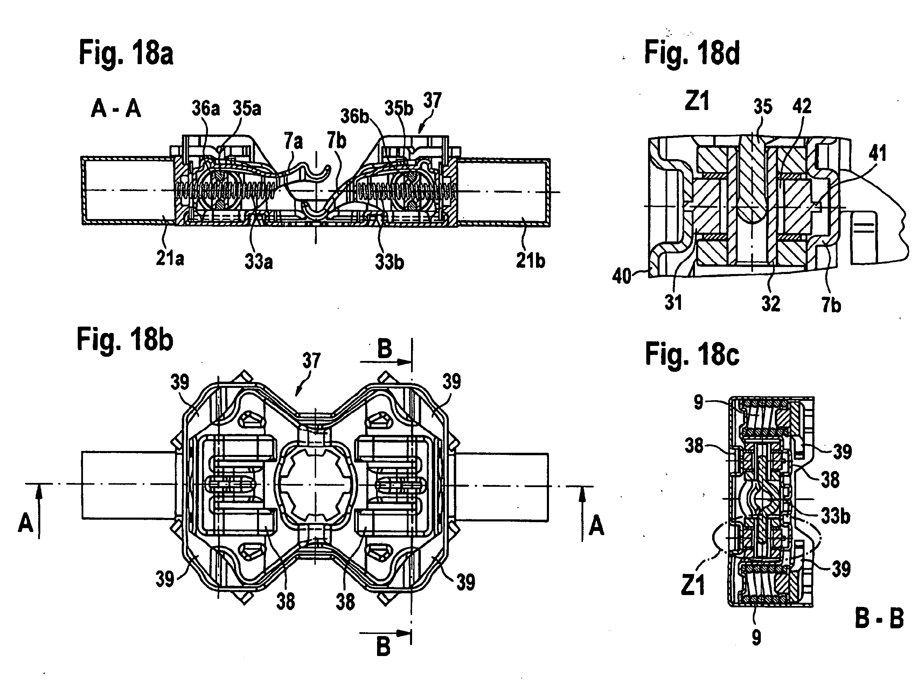

In den Figuren 13 bis 17 sind der Hebel 7, die Abstützung 34 und die Ankopplung des Stellmotors 21 an die Laufrolle 31 (beziehungsweise Achse der Laufrolle 32) aus Blech gefertigt. In einer weiteren, vorteilhaften Ausgestaltung der Erfindung ist das erfindungsgemäße Hebelsystem in einem Kasten 37 angeordnet. Dieser Kasten 37 ist beispielsweise aus Blech mittels stanzen gefertigt. Auch der Hebel 7a, 7b kann hierbei als Blech-Stanzteil ausbildet sein. Die Figuren 18a bis 18d liefern über diese Ausgestaltung der Erfindung einen ersten Überblick. In ihnen ist ein doppeltes Hebelsystem zu sehen, welches für die Betätigung, beispielsweise einer Doppelkupplung, Anwendung finden kann. Die Figur 18a zeigt einen Längsschnitt durch die Figur 18b entlang der Schnittlinie A-A. Die Figur 18c stellt wiederum ein Schnitt entlang der Linie B-B dar. Die Einzelheit Z1 aus der Figur 18c ist in der Figur 18d dargestellt. Diese Figuren 18a-d müssen zum besseren Verständnis des Hebelsystems immer in einer Gesamtschau betrachtet werden.

Man kann gut erkennen, wie die Stellmotoren 21a, 21b wegen der Anordnung der Hebelsysteme im Kasten 37 bzw. dem Kastenrand, einfach angeflanscht werden können, wodurch die Verstellspindeln 33a, 33b direkt in das Innere des Kastens 37 hineinragen können. Die Verstellspindeln 33a, 33b werden von Stellmuttern 36a, 36b umgeben und setzen die rotatorische Bewegung der Stellmotore 21 in eine translatorische Bewegung um. Da die Stellmuttern 36a. 36b mittels einer Verbindung mit den Laufrollen 31, beziehungsweise mit den Achsen 32 der Laufrolle 31 gekoppelt sind, werden diese bei der translatorischen Bewegung mitbewegt. Die Anbindung der Laufrollen 31 erfolgt mittels eines Omega-förmigen Bauteils, wobei im mittleren Bereich dieses Bauteils ein den Stellmotor umschlingender Bogen vorhanden ist Daher wird dieser auch als Joch 35a, 35b bezeichnet. Die Enden dieses Joches 35a, 35b sind ballig ausgestaltet und greifen in die hohle Achse der Laufrolle 31 ein. Dieses "Kugelende" ist dabei vorzugsweise in der axialen Mitte der Laufrolle 31 angeordnet, wobei dadurch vorzugsweise eine momentenfreie Führung der Laufrollen 31 erfolgt. Wäre das ballige Ende eines Joches 35a, 35b (Figur 18d) außerhalb der axialen Mitte, würde ein Steuerungsmoment ("eine Lenk-Bewegung") auf die Laufrolle 31 erfolgen. Wie auch weiterhin in der Figur 18d zu erkennen ist, ist in dem Kasten-Boden 40 eine Nut eingebracht, in der ein "Kamm" 41 der Laufrolle 31 läuft. Da die Laufrolle 31 mit Hilfe des Kamms 41 durch den Schlitz in dem Kasten-Boden 40 geführt wird, könnte eine axiale Außermittigkeit des balligen, beziehungsweise kugelförmigen, Endes des Joches 35a, 35b zum Reiben des Kammes 41 im Schlitz führen.

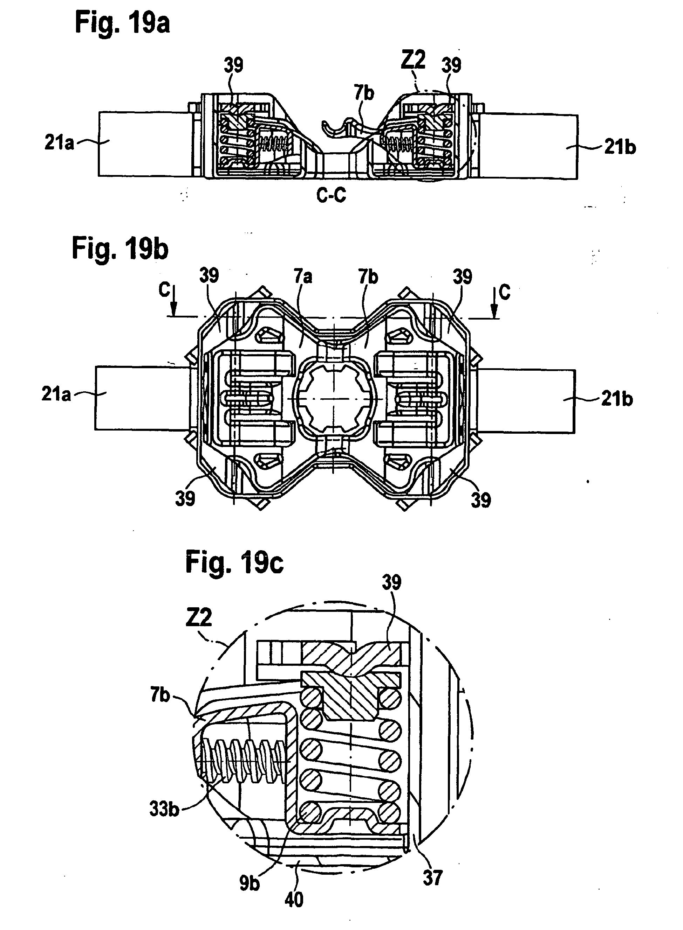

Wie bereits erwähnt, handelt es sich bei den Figuren 18a-d (und auch bei den Figuren 19a-c) um eine Ausgestaltung des erfindungsgemäßen Hebelsystems als Doppel-Hebelsystem. Da dieses Doppel-Hebelsystem für die Betätigung einer Doppelkupplung verwendet wird und hierzu (in den Figuren nicht dargestellt) ineinander geschachtelte Betätigungshülsen auf der Getriebeeingangswelle angeordnet sind, greifen die Hebel 7a, 7b in axial hintereinander angeordneten Lagerpunkten der Betätigungshülsen ein. Mit anderen Worten: Die Hebel 7a, 7b können sich nicht wechselseitig behindern, weil die Gabel des Hebels 7a eine vordere Hülse und die Lagergabel des Hülse 7b eine hintere Betätigungshülse bewegt. Deshalb kommt es nicht zu einem Überschneiden der Lagergabeln der Hebel 7a, 7b. Aus diesem Grunde ist der Hebel 7a zumindest in seinem Bereich der Lagergabel anders geformt als der Bereich der Lagergabel des Hebels 7b.

Die Hebel 7a, 7b und auch der Kasten-Boden 40 weisen noch durch eine weitere Besonderheit aus. Diese Bauteile sind vorzugsweise mit einer Profilierung 38 versehen, wobei diese beispielsweise wiederum parallel zur Schnittachse A-A verläuft. In der Figur 18d war schon ein Teil der Profilierung des Kasten-Bodens 40 zu sehen, wobei hier nicht der Schlitz in dem Kasten-Boden 40 als Profilierung zu verstehen ist, sondern die im Wesentlichen rechteckig ausgestaltet Sicke. Die Profilierung der Hebel 7a, 7b ist am besten in der Figur 18b zu sehen. Hier scheint ein überdimensionales großes "E" eingeprägt zu sein. Den Profilierungen ist gemeinsam, dass sie sowohl den Kasten-Boden 40 als auch die Hebel 7a, 7b mit einer enormen Stabilität versehen. Das hier dargestellte erfindungsgemäße Hebelsystem befindet sich in einem Kasten-Boden 40 37, mit Profilierung des Kasten-Bodens 40. Es hat eine Lauffläche für die Laufrolle 31 und einer Profilierung der Hebel 7a, 7b und eine Lauffläche für die Achse 32 der Laufrolle 31. Zur Minimierung der Reibung zwischen der Laufrolle 31 und der Achse 32 ist zwischen beiden ein Nadellager 42 angeordnet. Bei der Verlagerung eines Drehpunkts 8a, 8b (hier bestehend aus jeweils zwei Laufrollen) rollt die Laufrolle 31 auf dem Kasten-Boden 40, während die Achse der Laufrolle 32 an der inneren Hebeloberfläche abrollt. Durch die Drehbewegung der Laufrollenachse 32 ergibt sich auch eine Relativbewegung zwischen der Innenfläche der hohlen Laufrollenachse 32 und dem balligen Ende des Joches 35, weil das Joch 35 schließlich nur eine translatorische Bewegung bewerkstelligt. Diese Relativbewegung zwischen dem balligen Ende des Joches 35 und dem Inneren der Achse 32 und der damit verbundenen Reibung ist aber nicht nennenswert nachteilig, weil hier nur die Kraft an den Gleitflächen angreift, die erforderlich ist, um die Laufrolle 31, beziehungsweise die Achse der Laufrolle 32, zu verschieben. Erfindungsgemäß sind die Kräfte für dieses Verschieben relativ zu den Kräften an den Hebelenden nur sehr gering. Wegen dieser geringen Reibungskraft am balligen Joch-Ende ist hier keine aufwendige Lagerung erforderlich.

In den Figuren 18a-c ist auch die Anbringung der Energiespeicher 9, hier als Wendelfeder ausgestaltet, zu erkennen. Das eine Ende der Energiespeichers 9 stützt sich auf einem gestanzten Absatz der Hebel 7a, 7b ab. Das andere Ende des Energiespeichers 9 ist im Widerlager 39 gelagert. Das Widerlager 39 ist vorteilhafter Weise - weil in einfacher Weise - in Schlitze des Kastens 37 eingehängt. Damit der Energiespeicher 9 keinen oder nur einen geringen gegen ihn gerichteten Widerstand in Form einer Querbewegung widerstehen muss, sind in den hier dargestellten Varianten die Widerlager mit einer Sicke 62 versehen, die als Gleitlagerpunkt dienen. In dem der Sicke zugewandten Ende des Energiespeichers 9 ist ein Stopfen einer der Sicke 62 zugewandten Lagerschale versehen. Da bei Betätigung der Hebel 7a, 7b sich die Lagergabel entlang der Mittelachse der Getriebeeingangswelle bewegt, der Hebel 7a, 7b durch die Verlagerung des Drehpunktes 8a, 8b aber zugleich eine Schwenkbewegung macht, kommt es für die den Stellmotoren 21a, 21b zugewandten Enden der Hebel 7a, 7b zu einer geringfügigen radialen Bewegung zur Getriebeeingangswelle. Mit anderen Worten: Der Energiespeicher 9 muss mit seinem Hebel 7a, 7b zugewandten Ende ebenfalls eine radiale Bewegung ausführen. Durch die im Wesentlichen hier zylinderförmige Gestalt des Energiespeichers 9 ergibt sich die schon angesprochene "Quersteifigkeit". Deshalb ist es vorteilhaft, wenn der Energiespeicher 9 an seinen Enden möglichst gut gelagert ist, um diese Quersteifigkeit zu minimieren.

Die Figuren 19a-c zeigen den gleichen Gegenstand wie die Figuren 18a-d. Die Figur 19a stellt hierbei den Schnitt C-C aus der Figur 19b dar. Die Einzelheit Z2 der Figur 19a ist in der Figur 19c zu sehen. Die Schnittlinie C-C ist ihrer Lage deshalb gewählt worden, um besonders die Gestaltung der Lagerung der Energiespeicher 9 zu veranschaulichen, weshalb hier im Besonderen auf die Figur 19c eingegangen wird. Der Hebel 7b ist gut in seinem gestanzten Absatz zu erkennen. Am rechten Ende des Hebels 7b ist eine kleine Warze eingeprägt, wodurch das untere Ende des Energiespeichers 9b geführt wird. Im oberen Ende des Energiespeichers 9b steckt ein Stopfen mit einer zur Zeichnungsebene senkrecht orientierten Lagerschale. In diese Lagerschale greift die Außenfläche der Sicke 62 in das Widerlager 39 ein.

Die Figuren 18, 19 und 21b sind nach einer Methode gezeichnet worden, bei der auch Übergänge beispielsweise von einem flächigen zu einem gewölbten Element, mit einer Kante bezeichnet werden. Die auch heute noch teilweise üblichen Lichtkanten, entfallen dadurch. Da die Lichtkanten aber keine klare geometrische Position wiedergeben, kann das bei deren Verwendung zu Verwirrungen kommen. Durch die in der Anmeldung verwendete Darstellungsform ergeben sich eine Vielzahl von zusätzlichen Kanten, die eventuell verwirrend sein können, jedoch entsprechen diese Linien exakt der geometrischen Position.

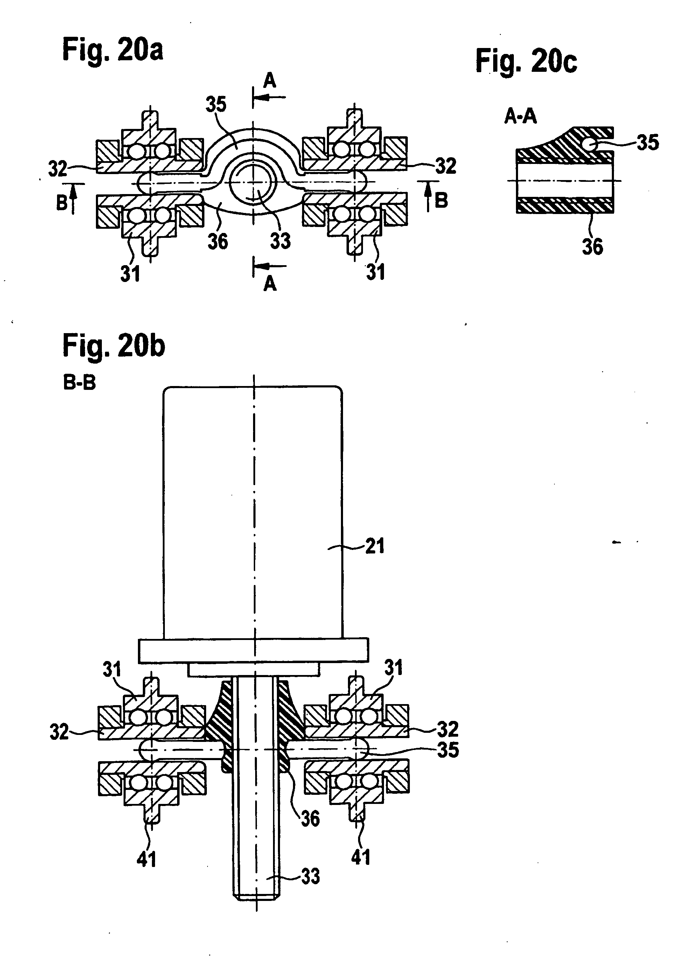

In den Figuren 20a-c ist der prinzipielle Aufbau eines verlagerbaren Drehpunktes 8 in Verbindung mit einem verbindenden Joch 35 und der Stellmutter 36 zu sehen. Der verlagerbare Drehpunkt 8 (8a, 8b) besteht hier wiederum aus zwei Laufrollen 31, wobei jede Laufrolle 31 eine hier hohle Achse 32 aufweist. Das Joch 35 ist wiederum mit balligen Enden versehen, die im Wesentlichen mit ihrem Zentrum im axialen Zentrum der Laufrollen 31 liegen. In der Figur 20c (entspricht dem Schnitt A-A) ist zu erkennen, dass das Joch 35 in einem bogenförmigen Schlitz der Stellmutter 36 einschnappt. Diese kostengünstige Befestigungsmethode ist deshalb möglich, weil die Stellmutter 36 als gespritztes, elastisches Kunststoffteil hergestellt ist. Ferner ist die kostengünstige Verbindung zwischen der Stellmutter 36 und dem Joch 35 deshalb möglich, weil die Kräfte auf das Joch während der Verstellbewegung des verlagerbaren Drehpunktes 8, zumindest bei der Bewegung in Richtung zum Stellmotor 21, gering sind. Dadurch können die Schnapp-Kräfte der Stellmutter 36 das Joch 35 zuverlässig mit sich führen. In den Figuren 20a und 20b ist der Aufbau einer Laufrolle 31 mit ihrer Achse 32 in vereinfachter Form noch einmal gut zu erkennen. Die Achse 32 ist hier (wie auch schon in den Figuren 18 und 19 an jedem ihrer Enden mit einer Scheibe versehen, wodurch der Laufdurchmesser der Achse 32 vergrößert wird. Diese Vergrößerung hat den Vorteil, weil bei geringfügigen Verunreinigungen auf der Lauffläche der Achse, ein größerer Durchmesser einen geringeren Rollwiderstand hat. Durch die Anordnung dieser Ringe auf den Enden der Achse wird jedoch die Positionierung eines Doppelkugellagers zwischen der Achse und der Laufrolle 31 nicht erschwert.

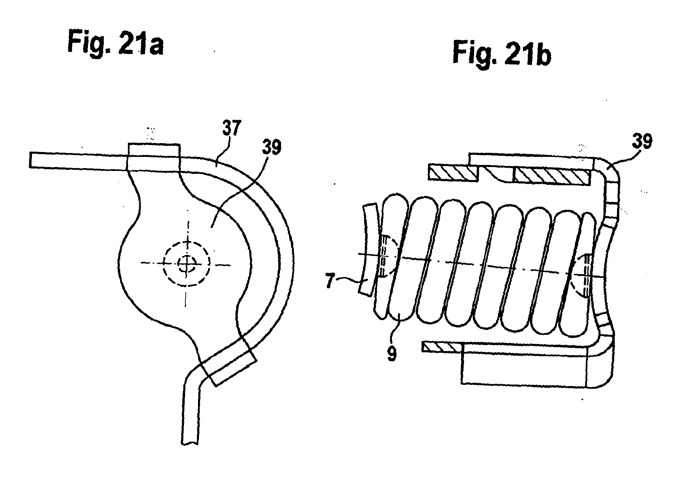

Die Figuren 21a und 21b zeigen die Draufsicht und die Seitenansicht zu einer Ausgestaltung der Lagerung des Energiespeichers 9 im Kasten 37. Die Figur 21a zeigt ein rastbares Widerlager 39, welches mittels Haken, die vorzugsweise gestanzt sind, in Ausnehmungen der Wandung des Kastens 37 eingreifen kann. Durch eine gewisse Elastizität des Widerlagers 39 kann es regelrecht in diese Ausnehmung einschnappen. In der Figur 21b ist zugleich auch eine weitere Lagerung des Energiespeichers 9 zu sehen. Das Ende ist nicht mit einem separatem Stopfen, wie er beispielsweise in den Figuren 18 und 19 dargestellt, versehen, sondern das Widerlager 39 ist leicht ballig gestaltet, wodurch der Energiespeicher 9 bei einer Querbewegung auf dieser Balligkeit abrollen kann. Damit die Querbewegung auch nicht am anderen Ende des Energiespeichers 9 durch die Steifigkeit des Energiespeichers behindert wird, ist auch der Hebel 7 (hier ist nur ein Ausschnitt zu sehen) mit einer Balligkeit versehen. Diese Balligkeiten können tonnen- oder auch kegelförmig sein. Zur Fixierung des Energiespeichers 9 in seiner Arbeitsposition sind sowohl das Widerlager 39 als auch der Hebel 7 mit einer innen liegenden Führungswarze versehen.

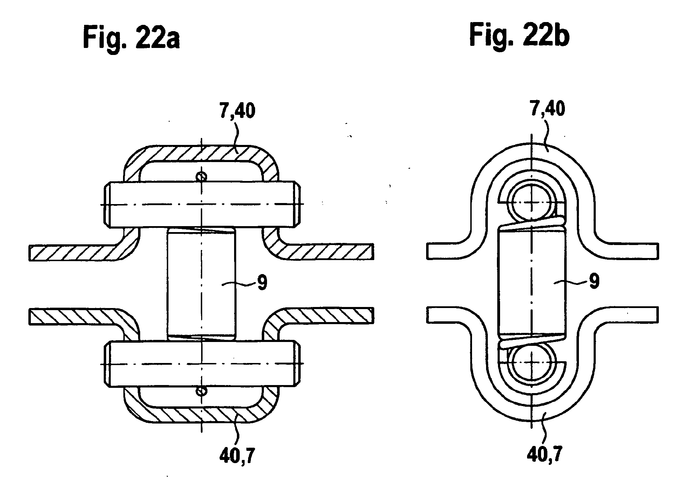

Mit den Figuren 22a und 22b ist eine andere Gestaltung der Lagerung des Energiespeichers 9 wiedergegeben. Der Energiespeicher 9 ist hier nur stilisiert gezeichnet worden. Die Figur 22a stellt hierbei einen Schnitt durch den Energiespeicher 9 dar, während die Figur 22b eine vereinfachte Seitenansicht wiedergibt. Der Energiespeicher 9 ist hier als Zugfeder ausgestaltet, wobei seine beiden Enden mit entsprechenden Ösen versehen sind. Wegen der vorhandenen Ösen kann durch diese ein Bolzen geschoben werden, die zusammen eine Lagerung darstellen. Dieses hat den Vorteil, dass kein separater Schwenkmechanismus erforderlich ist.

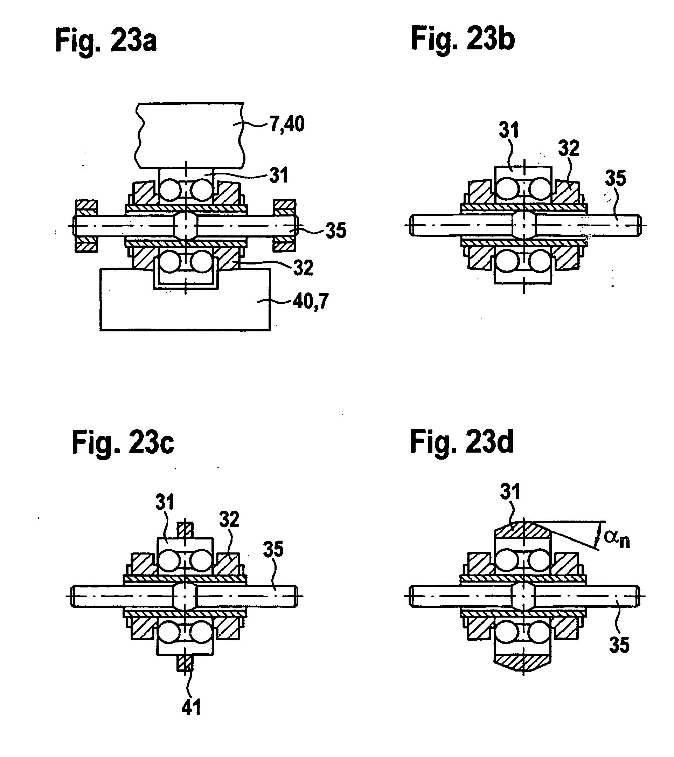

Die Figuren 23a-d zeigen verschiedene Varianten zur Führung der Lagereinheit. Die Führung kann eine zylindrische Zwangsführung der inneren Lagerachse oder eine Führung mit geneigten Wirkflächen oder des äußeren Lagers sein. Jede Lagereinheit ist dreh- und querbeweglich und auf dem Joch 35 gelagert. Die geneigte Führungsbahn und auch die Führungsnut können am Kasten 37 oder am Hebel 7a, 7b angebracht sein. In der Figur 23c ist auf einem Doppelrillen Kugellager, ein Laufrollenkamm 41 als separates Bauteil angebracht, welches die Laufrolle 31 darstellt. In den Figuren 23a und 23b ist der größere Durchmesser der Achse 32 mit einer kegelförmigen Fase versehen. Läuft diese kegelförmige Fläche auf einer hierzu im Wesentlichen parallelen Lauffläche, so kommt es zu einer stabilisierten Laufbewegung senkrecht zur Zeichenebene. Dieser Führungseffekt ist mit der Selbstzentrierung, wie sie von einem Eisenbahn-Radpaar zwischen zwei Gleisen bekannt ist, vergleichbar. Bei der Figur 23d ist die Laufrolle 31 mit zwei entgegengesetzt gerichteten Kegelfasen versehen. Läuft eine derartige Laufrolle 31 in der V-förmigen, im Wesentlichen zu diesen Kegelflächen parallelen Bahnen, so stellt sich auch hier ein Selbstzentrierungseffekt ein. Der Selbstzentrierungseffekt bewirkt nicht nur das Führen in axialer Richtung, sondern er bewirkt auch eine Lenkbewegung der Laufrolle 31 und/oder der Achse 32.

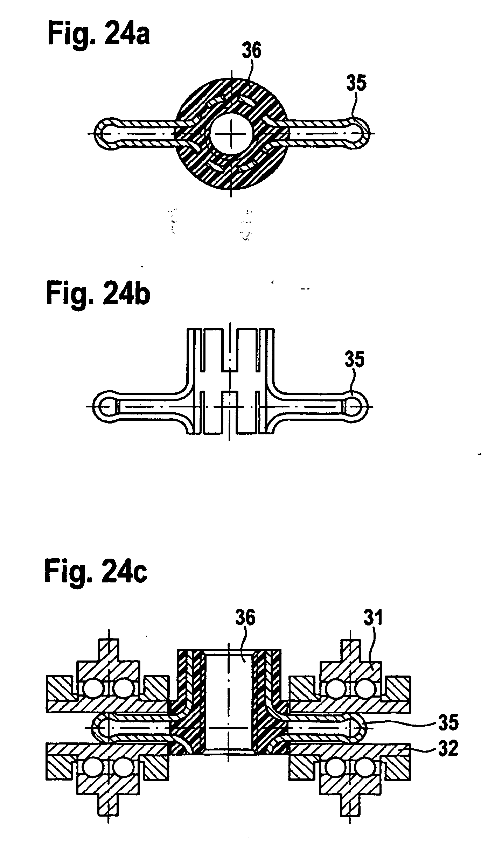

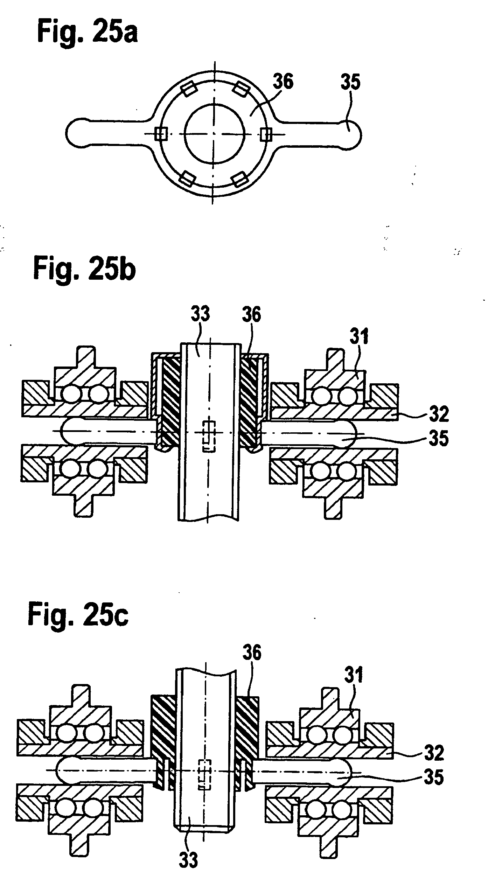

Mit den Figuren 24a-c wird eine Variante offenbart, bei der das Joch 35 aus zwei einzelnen, schalenförmigen, gestanzten Teilen hergestellt wird und dann von Kunststoff umspritzt wird. Beinhaltet der umspritzte Kunststoff ein Innengewinde, in dem eine Verstellspindel 33 gleiten kann, so stellt dieser umspritzte Kunststoff eine Stellmutter 36 dar. Mit der Figur 24c wird diese Ausgestaltung des Joches 35, beziehungsweise der Stellmutter 36, im Zusammenbau gezeigt. In der Figur 25a ist das Joch 35 nicht mehr Omega-förmig gestaltet, sondern es weist in der Mitte einen geschlossenen Ring auf. Das Joch 35 ist hier mittels einer Ringschnappverbindung mit der Stellmutter 36 verbunden. Die Ausführung gemäß Figur 25b zeigt eine Lagereinheit von einem Blechkäfig umgeben ist, der sowohl die Stellmutter 36 hält, als auch das Joch 35 verbindet. In Figur 25c ist das Joch 35 entweder wie in der Figur 25a ringförmig oder, wie in anderen Beispielen schon beschrieben, Omega-förmig gestaltet. Die Besonderheit der Figur 25c gegenüber der Figur 25b besteht darin, dass die Stellmutter 36 von keinem separatem Blechmantel oder Blechgehäuse umgeben ist, sondern dass das Joch 35 direkt von elastischen Schnapphaken der Stellmutter 36 gehalten wird.

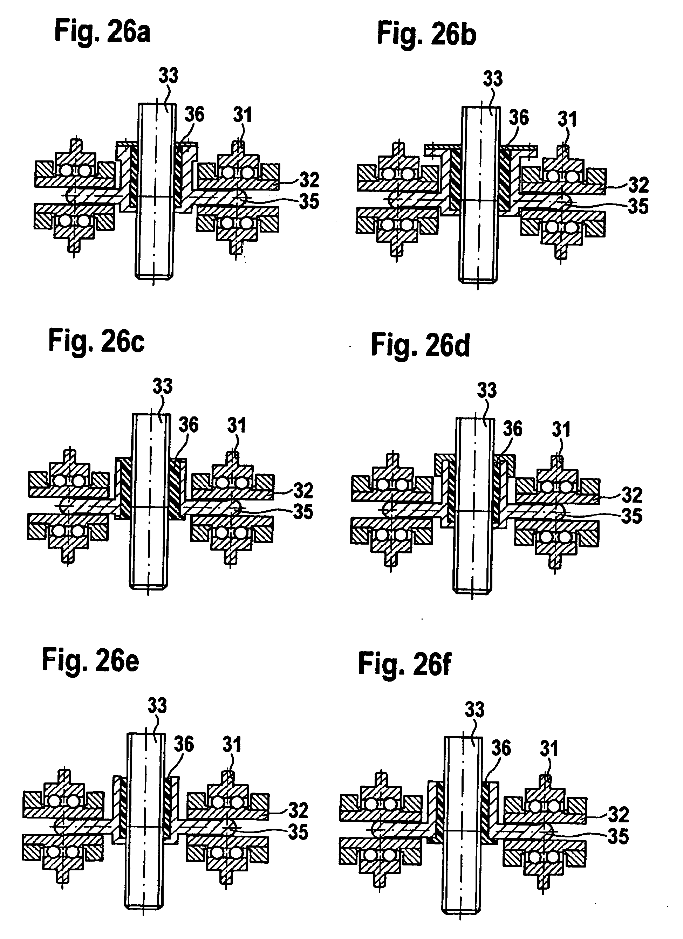

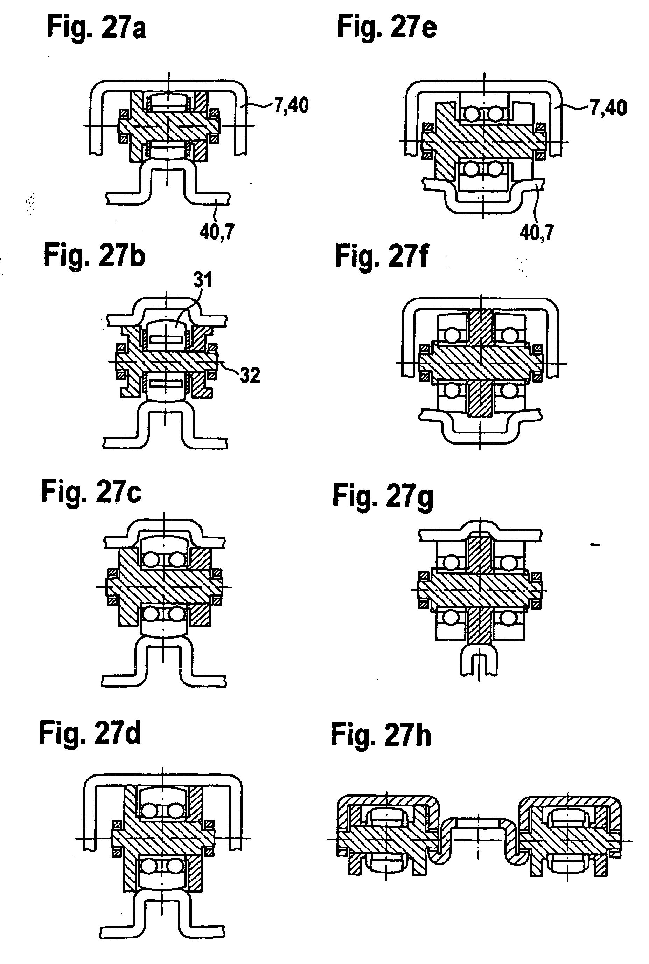

Die Figuren 26a-f zeigen weitere Ausgestaltungen der Verbindung von Stellmutter 36 und Joch 35. In der Figur 26a ist das Gewinde der Stellmutter 36 als Hülse drehfest in einem Körper angebracht, an dem auch zugleich das Joch angeformt ist. Um ein axiales Hinausgleiten der Mutterhülse zu verhindern, ist oben eine Abschlussplatte angebracht. In der Figur 26b ist zur besseren Befestigung dieser Abschlussplatte ein Flansch angeformt, um Schraub- oder Nietverbindungen besser anbringen zu können. In der Figur 26d ist die obere Abschlussplatte hülsenförmig ausgestaltet, wobei Befestigungsmöglichkeiten (als strichpunktierte Linien dargestellt) radial in dem Körper angebracht werden, an deren auch zugleich das Joch angeformt ist. In der Figur 26e ist das eigentliche Gewinde der Stellmutter 36 in den Grundkörper eingepresst. Durch dieses Einpressen ist das Stellmuttergewinde sowohl drehfest als auch axial ausreichend gesichert. Bei der Figur 26c umfasst das Stellmuttergewinde den Trägerkörper, der auch das Joch 35 hält. Durch dieses Umfassen des Trägerkörpers ist in jedem Fall eine axiale Sicherung des Stellmuttergewindes gegeben. Wird das Stellmuttergewinde hier nachträglich, also nach der Fertigung des Joches 35 und des Grundkörpers angebracht, ist dieser Gewindekörper bereits durch die Schrumpfspannungen des Muttergewindes drehfest mit dem Grundkörper verbunden. In der Figur 26f ist das Muttergewinde in den Grundkörper und/oder dem Joch 35 eingeklebt. Dieses ist insofern vorteilhaft, weil dadurch keine Verformungen durch einen nachfolgenden Spritzvorgang erfolgen. Die Figuren 27a-h zeigen verschiedene Ausgestaltungen eines verlagerbaren Drehpunktes 8. Hierbei zeigt das Bauteil 40.4 entweder einen Hebel 7 oder einen Kasten-Boden 40. Entsprechend gilt für das andere Bauteil mit der Bezeichnung 40, 7, dass dieses Bauteil entweder ein Kasten-Boden 40 oder ein Hebel 7 sein kann. Durch die unterschiedlich gewählten Schraffuren wird deutlich, welche Konturen ein Bauteil darstellen und wie sie zueinander angeordnet sind. Die Ausführungsdarstellung der erfindungsgemäßen Lösung in Figur 27 ist deshalb selbsterklärend. Kennzeichnend ist, dass die Achse 32 der Laufrolle 31 jeweils als Vollwelle ausgebildet ist.

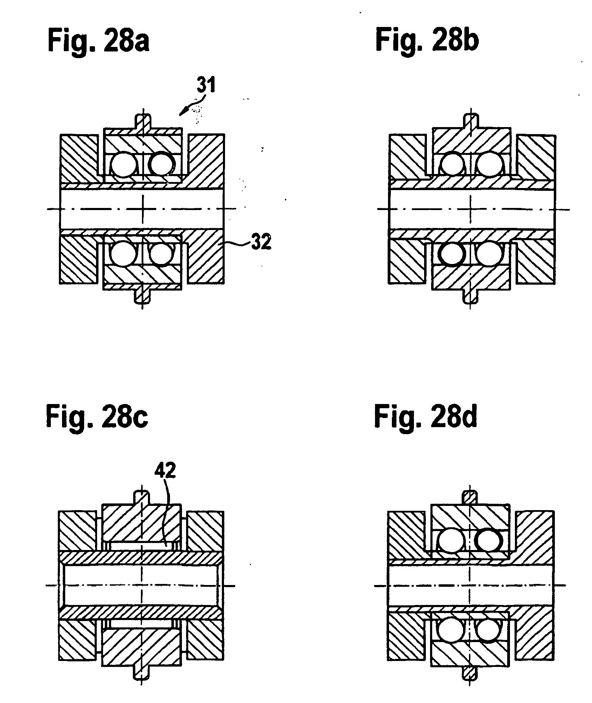

Die Figuren 28a-d zeigen hier die Achse 32 als Hohlwelle. Diese Ausgestaltung hat unter anderem den Vorteil, dass dadurch Gewicht eingespart werden kann.

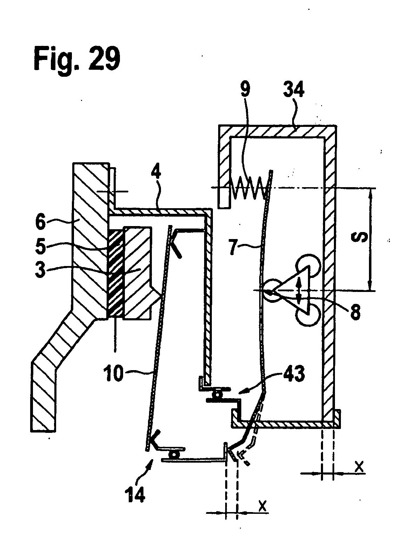

Die Darstellung in Figur 29 entspricht im Wesentlichen denen in den Figuren 1 und 2. Eine Besonderheit liegt jedoch darin, dass die Abstützung 34 über ein Kupplungsdeckellager 43 axial mit dem Kupplungsdeckel 4 verbunden ist. Die Abstützung 34 erfolgt also beispielsweise nicht mehr an einer Getriebewandung, sondern an der Kupplung 2 selbst. Um ein Reaktionsmoment mittels des erfindungsgemäßen Hebelsystems abzufangen, kann jedoch eine Momentabstützung am Getriebegehäuse erfolgen. Die axiale Anbindung des erfindungsgemäßen Hebelsystems an den Kupplungsdeckel 4 mittels des Kupplungsdeckel-Lagers 43 hat den Vorteil, dass plastische, thermische und/oder elastische Verformungen in dem System Kupplung und Hebelsystem durch eine Justage um das Maß X, ausgeglichen werden können. Würde sich nämlich die Abstützung 34 an der Gehäusewandung abstützen, könnte beispielsweise durch thermische Längenänderungen zwischen Getriebe und Kupplung eine Fehljustage des Hebelsystems zustande kommen.

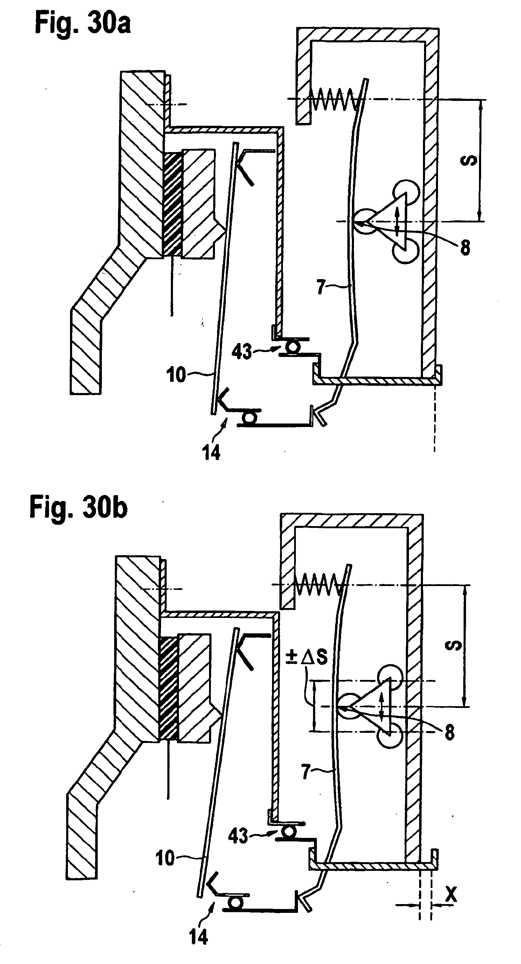

Die Figuren 30a, 30b bauen gedanklich auf der Figur 29 auf und geben eine Messmethode wieder, mit der bei der Montage des erfindungsgemäßen Hebelsystems im Fahrzeug, beziehungsweise zwischen Kupplung und Getriebe, die Nennposition für den verlagerbaren Drehpunkt 8 eingestellt werden kann. In der Nennposition liegt durch Justage des Hebelsystems eine vorgegebene Nenn-Anpresskraft auf das Ausrücklager 14 - bzw. die Tellerfeder 10 - vor.

Geht man in der Figur 30a von einem ideal "symmetrisch" eingestellten Hebelsystem aus, so ergibt sich in einem Diagramm Kraft über Weg S, mit zunehmenden S eine zur waagerechten Achse fast parallele Kurve, wenn die Form des Hebels 7 derart gestaltet ist, dass kaum Kraftaufwand benötigt wird, um den Drehpunkt 8 zu verlagern. Bei Rückführung des verlagerbaren Drehpunktes 8 - also einer Abnahme von S - ergibt sich für die Bewegungs-Kraft ein umgekehrtes Vorzeichen aber mit einem gleichen Betrag. Der Graf Kraft über Weg ist dann spiegelbildlich zur waagerechten Diagramm-Achse, weshalb man deshalb auch von symmetrisch" eingestellten Hebelsystemen spricht.

Ist beispielsweise wie in Figur 30b unterstellt, bei einem gewünschten symmetrischen Kraft-Weg-Verlauf das Hebelsystem noch nicht richtig eingestellt, so kann mittels eines Bewegens des verlagerbaren Drehpunktes 8 innerhalb relativ kleiner Werte für • s, die tatsächliche Anpresskraft ermittelt werden. Ergibt sich hier eine Abweichung zur Nenn-Anpresskraft, so kann durch ein Verstellen des Hebelsystems um einen Betrag X der Nenn-Anpresskraft gefunden werden.

Es soll in diesem Zusammenhang darauf hingewiesen werden, dass im Rahmen der Erfindung nicht nur symmetrische Kraft-Weg-Diagramme gewünscht sind. In einer vorteilhaften Ausgestaltung der Erfindung befinden sich beide Kraft-Weg-Diagramme im negativen oder beide im positiven Bereich (je nachdem in welche Richtungen als Zug oder Druck definiert sind). Entscheidend ist bei dieser Auslegung nur, dass bei Ausfall des Stellmotors 21 und beim Vorhandensein einer nicht selbsthemmenden Verstellspindel 33, der verlagerbare Drehpunkt 8 selbsttätig in eine unkritische Position fährt. Eine unkritische Position kann hierbei, je nach beabsichtigter Sicherheitsstrategie, beispielsweise die Position sein, in der die betreffende Kupplung 2 geöffnet ist.

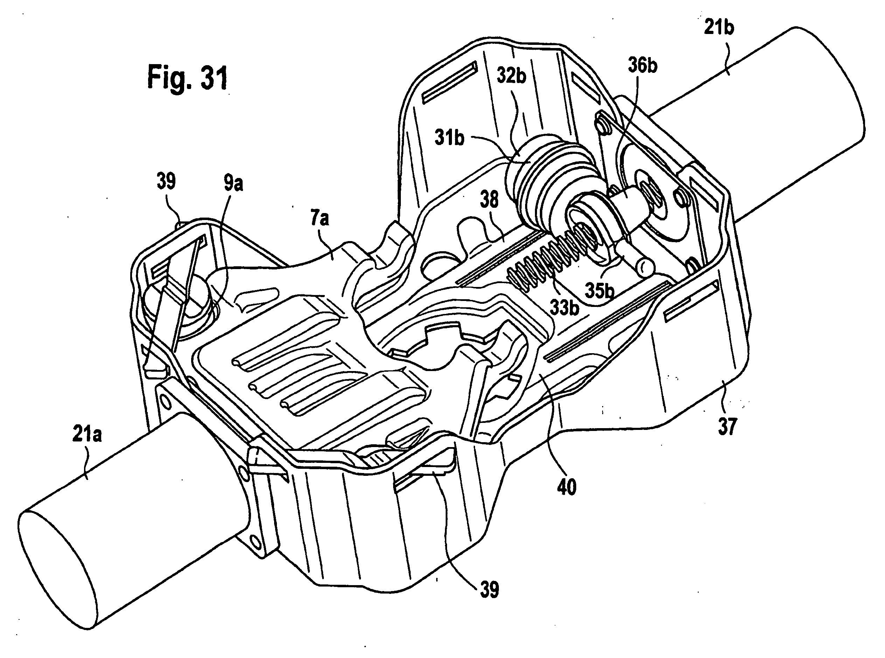

Mit der Figur 31 wird eine anschauliche, perspektivische Ansicht eines Doppel-Hebelsystems gezeigt. Dieses Hebelsystem wurde teilweise aufgeschnitten, um auch das Innere besser zeigen zu können. Im linken unteren Bereich wurden keine Teile aus Gründen der Übersichtlichkeit entfernt, so dass man hier ein vollständiges Hebelsystem sehen kann. In den oberen Ecken des Kasten 37 befinden sich hier Widerlager 39, die in Schlitzen des Kastens eingesteckt oder eingerastet sind. Diese Widerlager 39 weisen eine Sicke auf, die auf ihrer Unterseite in eine wannenförmige Vertiefung eines Stopfens eingreift, wobei dieser Stopfen wiederum in den einen Energiespeicher 9a eingreift. Der Hebel 7a weist eine starke Profilierung 38 auf, die in der Form eines gedruckten "E" mit zwei "Mittelstrichen" gestaltet ist. Das rechte Ende des Hebel 7a ist mit zwei Gabeln versehen, die auf eine Schiebehülse für eine Doppelkupplung 2a, 2b einwirken. Der nur stilisiert dargestellte Stellmotor 21a ist mittels Niet- oder Schraubverbindungen an der Kastenwand angebracht. Im rechten, oberen Teil des Doppel-Hebelsystems sind zwei Widerlager 39, die Energiespeicher 9b, der Hebel 7b und eine rechte Laufrolle 32b entfernt worden, um die anderen Bauteile besser zu zeigen. An dem Stellmotor 21b ist die Verstellspindel 33b angeschlossen. Die Motorachse und die Verstellspindel 33 können hierbei einstückig eingestellt sein. Dieses ist vorteilhafter Weise und kostengünstig mittels Walztechnik möglich. Die Verstellspindel 33 kann aber auch ein Bauteil sein, welches separat ausgestaltet ist und während der Montage - beispielsweise mittels Schrumpfen - auf der Motorwelle befestigt wird. Die Verstellspindel 33b (und natürlich auch die Verstellspindel 33a) sind vorzugsweise mit einem so genannten Bewegungsgewinde ausgestattet. Unter einem Bewegungsgewinde ist beispielsweise ein Trapezgewinde zu verstehen.

Die Stellmutter 36b umfasst die Verstellspindel 33b, wobei die Verstellmutter 36b wiederum von einem Joch 35b teilweise umschlungen wird. Bei dem rechten Ende des Joches 35b kann man das ballige Ende erkennen. Am linken Ende des Joches befindet sich ein Teil der Lagereinheit, welche aus einer Laufrolle 21b und aus einer Achse 32b zusammengesetzt ist. Die Laufrolle 31b ist in dem Ausführungsbeispiel mit einer kegelförmigen Lauffläche versehen. In Verbindung mit der Profilierung des Kasten-Bodens 40 ergibt sich ein Führungseffekt für die vollständige Lagereinheit, zu der auch eine weitere Laufrolle und eine weitere Achse gehören. Die sternförmige Ausnehmung in der Mitte des Kasten-Bodens 40 dienen dazu, das in dem Kasten 37 angeordnete Doppelhebelsystem auf eine Getriebeeingangswelle stecken zu können. Befinden sich in dem Bereich an der Getriebewand entsprechende Nocken, so kann mittels der sternförmig angeordneten Ausnehmungen zugleich auch ein Reaktionsmoment auf den Kasten 37 abgefangen werden.

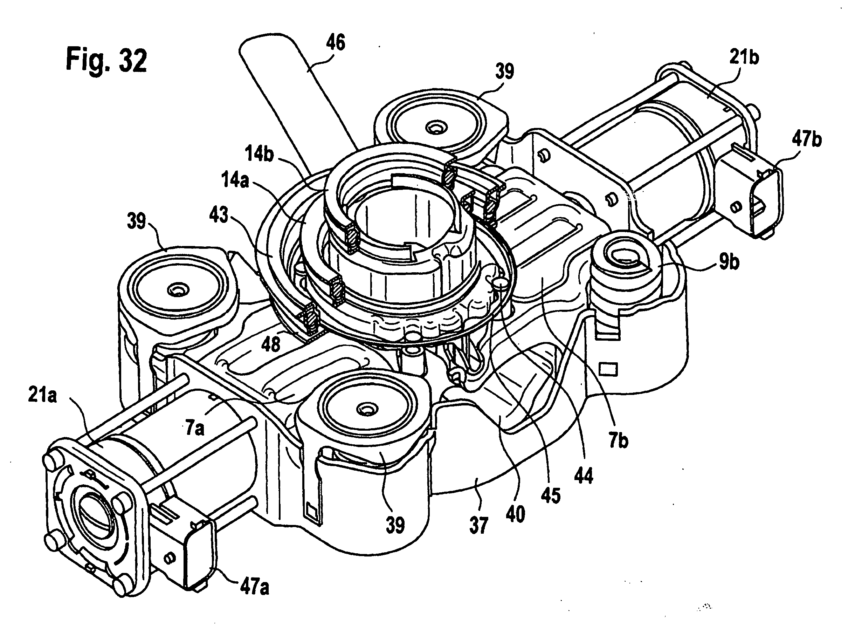

Die Figur 32 ist eine noch ausführlichere Darstellung, als die Figur 31. Um verbale Wiederholungen von gleichbedeutenden Bauteilen zu vermeiden, sei hier nochmals darauf hingewiesen, dass die Bezugszeichen über die gesamte Anmeldung Gültigkeit haben.

In der Darstellung der Figur 32 ist sind die im Wesentlichen axial wirkenden Lager 43, 14a und 14b geschnitten gezeigt. Die Lager 14a und 14b stellen hier die Axiallager - bzw. die Ausrücklager - für die Doppelkupplung 2a, 2b dar. Das Kupplungsdeckel-Lager 43 ruht auf einem Ring 48, der mittels Abstandsbolzen 44 mit dem Kasten 37 verbunden ist. Diese Abstandsbolzen 44 (nur zwei von denen sind durch die aufgeschnittene Darstellung sichtbar) sind vorzugsweise mit dem Ring 48 und dem Kasten 37 vernietet. Die dem nicht dargestellten Kupplungsdeckel 4 zugewandte Seite des Kupplungsdeckel-Lagers 43 kann beispielsweise mittels eines Bajonett-Verschlusses mit dem Kupplungsdeckel 4 verbunden sein. Dieser Bajonett-Verschluss kann hierbei in der Weise gestaltet sein, dass der beim Betrieb des Fahrzeuges drehende Ring des Kupplungsdeckel-Lagers 43 mit Laschen versehen ist, die in Nute des Kupplungsdeckels 4 einschnappen.

Die im Zusammenhang mit den Figuren 30a und 30b angesprochene Justage kann in der Weise erfolgen, dass zwischen dem Ring 48 und dem Kupplungsdeckel-Lagers 43 mindestens ein Distanzring in einer geeigneten Dicke eingelegt wird. Vorteilhaft ist es hier, wenn dieser Distanzring im Wesentlichen an einer Stelle radial geschlitzt ist und dadurch auch noch nach der Endmontage des Hebelsystems aufgezogen werden kann.

Eine Besonderheit der Konstruktion wird auch noch dadurch erkennbar, weil das rechte Widerlager 39 aus Gründen der anschaulicheren Darstellung entfernt wurde. Dadurch wird einer der Energiespeicher (hier der Energiespeicher 9b) sichtbar, der aus zwei ineinander gesteckten Wendelfedern aufgebaut ist. Durch die Kombination von verschiedenen Federkennlinien lassen sich unterschiedlichste Gesamt-Federkennlinien gestalten. Auch durch die Verwendung von gegenläufigen Wendelrichtungen lassen sich die Eigenschaften und das Verhalten der Energiespeicher 9 beeinflussen. Durch die Gegenläufigkeit können beispielsweise Verdrillungen der Wendelfedern - die beim Drücken und/oder dem Entspannen der Federn auftreten können - kompensiert werden, wodurch Reibmomente der Federn mit ihrer Auflagefläche weitestgehend verhindert werden, wodurch die Federkennlinie insgesamt hysteresefreier wird.

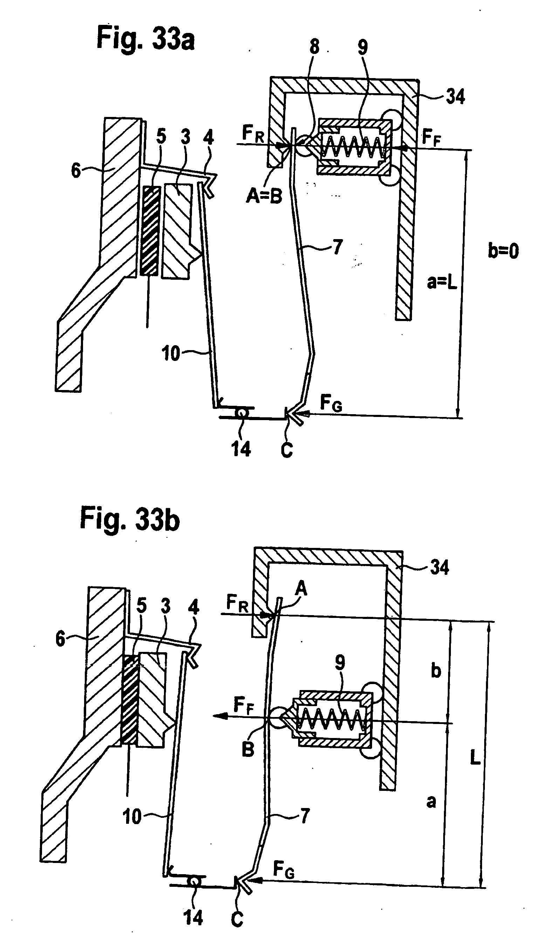

Die Figuren 33a und 33b zeigen eine schematische Darstellung der erfindungsgemäßen Lösung, bei der durch Verschiebung der Rolle bzw. der Auflagepunkt B und damit der Drehpunktes 8 eine Veränderung der Längenverhältnisse am Hebel 7 hervorgerufen wird.

In der Figur 33a, die den geöffneten Zustand der Kupplung 2 darstellt, herrscht ein Kräftegleichgewicht zwischen der Federkraft $F_F$ des Energiespeichers 9 und der auf die Rolle wirkende Kraft $F_R$. In dieser Stellung hat der Abstand vom Abstützpunkt C zur resultierenden Kraft $F_G$ auf dem Hebel 7 die Länge "I", da die Wirkungslinie des Energiespeichers 9 durch den Drehpunkt 8, der an dieser Stelle deckungsgleich mit den Auflagepunkten A und B ist, verläuft.

Der geschlossene Zustand der Kupplung 2 ist aus der Figur 33b ersichtlich. In dieser ist schematisch die Verschiebung des Auflagepunktes B ersichtlich, wodurch die Länge "l" des Hebels 7 in die Länge "a" und die Länge "b" unterteilt wird und damit gleichzeitig eine Kraftaufteilung erfolgt.

Die resultierende Kraft (Betätigungskraft), die über den Abstützpunkt C übertragen wird, ergibt sich somit aus der Gleichung:

$$F_G = \frac{F_F \times b}{l}$$

Dieses Prinzip der Anordnung des Energiespeichers 9 wird in den Figuren 3, 5 ,36 und 40 verwirklicht.

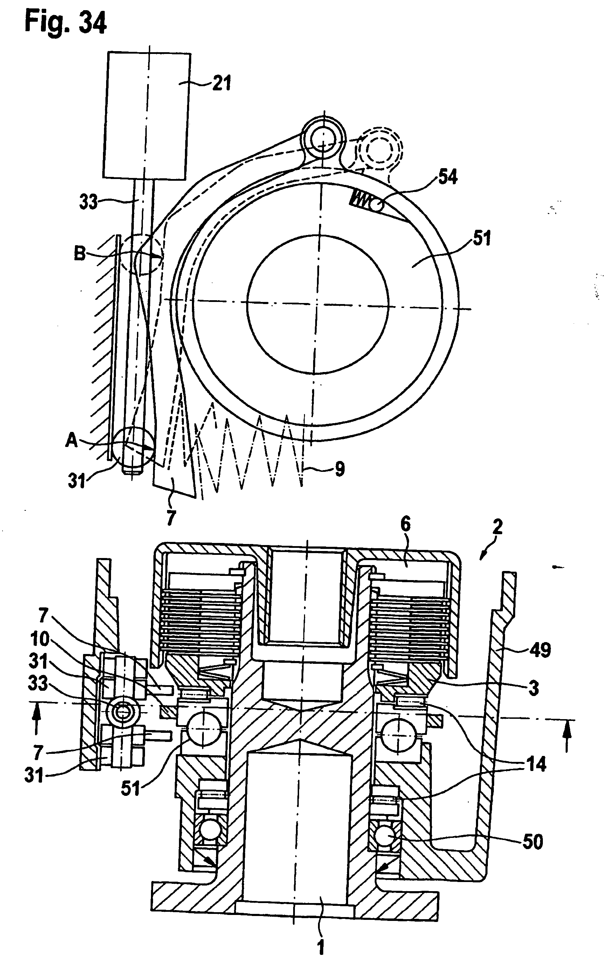

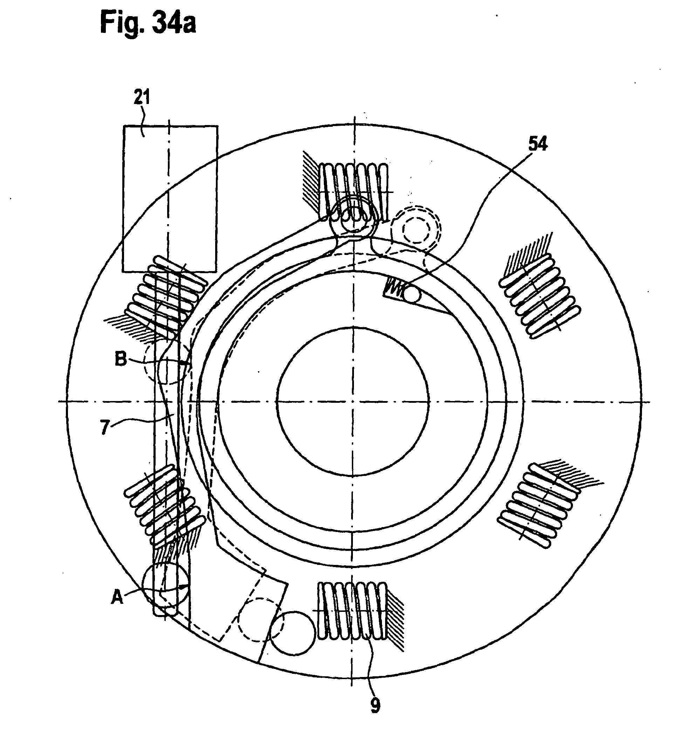

Die Figur 34 zeigt einen mechanischen Rampenausrücker, bei dem der Hebel 7 gabelartig ausgebildet umfangsseitig an der Kugelrampe 51 angebracht und mit einer Laufbahn versehen ist. Diese Laufbahn sieht zwei Endstellungen für die beidseitig der Gabel jeweils paarweise angeordneten Laufrollen 31 vor, zwischen denen diese bewegbar sind.

Um die Kupplung 2 öffnen oder schließen zu können, müssen die Lamellen 5c mittels des mechanischen Rampenausrückers entsprechend zusammengedrückt oder geöffnet werden. Dazu wird die Druckkraft ausgehend vom Stellmotor 21, mittels der Verstellspindel 33 auf die Laufrollen 31 übertragen bzw. aus ihrer Ausgangsstellung A herausgebracht. Der gabelartige Hebel 7, der in dieser Stellung auf der einen Seite mit seiner Lauffläche an den Laufrollen 31 und an der anderen Seite am Energiespeicher 9 anliegt und im Kräftegleichgewicht mit diesem steht, wird durch die Bewegung der Verstellspindel 21 und des Gegendruckes der Druckfeder (Energiespeicher 9) über die Verbindung Laufrollen 31 und Laufbahn, in der sich die Wippkurve abbildet, in die Stellung B bewegt. Diese Bewegung bewirkt eine Veränderung der Längenverhältnisse am Hebel 7.

Um zu garantieren, dass die Ausgangslage des Hebels 7 konstant bleibt, ist am Rampenausrücker ein Freilauf 54 vorgesehen, der dazu dient, entstehenden Verschleiß infolge Materialermüdung, Abrieb etc, durch Nachstellung zu kompensieren. Durch die Vielzahl der Kupplungsvorgänge kommt es zu der Erscheinung, dass der Hebel 7 nicht mehr die in den Figuren 33a und 33b dargestellte Position einnimmt, sondern sich neigt. Für den Ausrückvorgang bedeutet das, dass eine höhere Betätigungskraft von der Verstellspindel 33 aufgebracht werden muss Wird ein bestimmter Grenzwert überschritten, fährt die Verstellspindel 33 über den Punkt A hinaus, wodurch der Freilauf die Kugelrampe 51 überholt bzw. nachstellt. Der Zeitpunkt für eine erforderliche Verschleißnachstellung wird durch einen erhöhten Strombedarf am Stellmotor 21 bzw. längeren Rückstelldauern beim stromlosen Zurücklaufen der Spindel dedektiert.

Diese radiale Anordnung des Rampenausrückers ist besonders dann von Vorteil, wenn der Bauraum keine andere Möglichkeit zulässt.

Die Figur 34a zeigt ebenfalls einen Rampenausrücker bei dem der Hebel 7 umfangsseitig an der Kugelrampe 51 angeordnet ist. Die Besonderheit bei dieser Ausführung besteht darin, dass der in Figur 34 beschriebene einzelne Energiespeicher 9 durch mehrere über den Umfang verteilt angeordnete Energiespeicher 9 in Form von Federspeichem ersetzt wurde, ähnlich denen, wie sie in Torsionsdämpem für Kupplungsscheiben eingesetzt werden. Dadurch ist es möglich, in einem radialen Bauraum mehr Energiespeicher 9 unterzubringen, um eine größere Speicherkapazität zu erhalten. Die in den einzelnen Energiespeichern 9 gespeicherte Energie bzw. Federkraft wird über eine Drehmomentstützung an den Hebel 7 weitergeleitet.

Diese Ausführung ist ebenfalls mit einem Freilauf 54 versehen der bewirkt, dass die Ausgangslage des Hebels 7 konstant und damit die Betätigungskraft $F_G$ gleich bleibt.

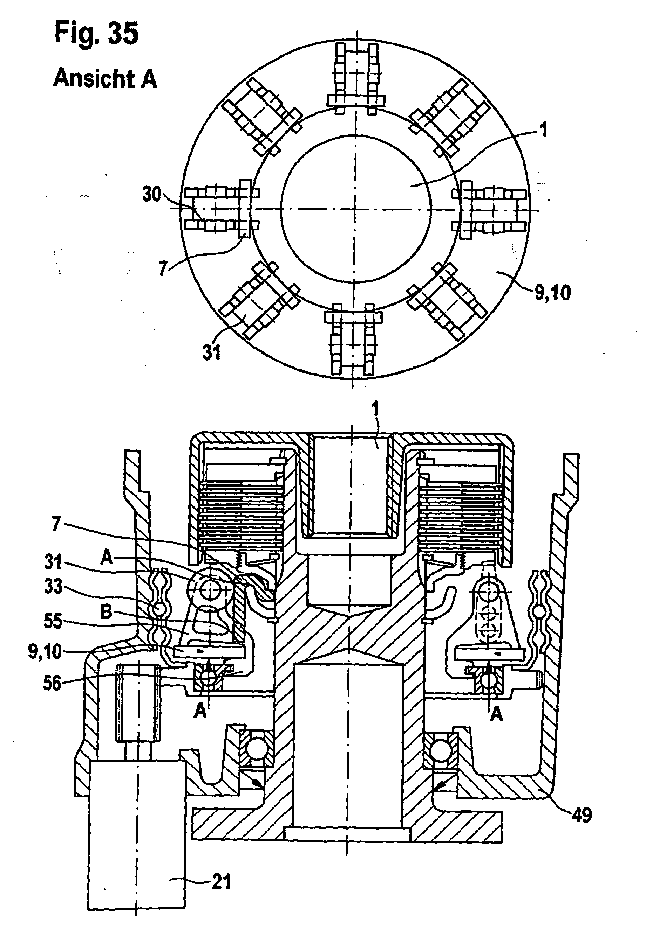

Figur 35 stellt im Unterschied zu den voran gegangenen Ausführungsbeispielen eine Variante der erfindungsgemäßen Lösung dar, bei der der Ausrückvorgang mittels radial am Rampenausrücker angeordneten Hebeln 7, durch so genannte Kipphebel realisiert wird. Diese Lösung unterscheidet sich außerdem von den Vorgängerlösungen dadurch, dass die Tellerfeder 10 gleichzeitig die Funktion des Energiespeichers 9 übernimmt, wodurch dieser entfallen kann.

Bei dieser Lösung werden somit die Tellerfeder 10 bzw. der Energiespeicher 9 mit den Laufrollen 31 entlang dem Hebel 7 bewegt. Die Hebel 7 sind jeweils mit einer vorgegebenen Kurve (Wippkurve), versehen, auf denen die Laufrollen 31 zwangsgeführt abrollen Auf diesen Laufbahnen werden die Laufrollen 31 ebenfalls axial bewegt. Die Laufrollen 31 stützen sich während der Kraftübertragung über ein an der Tellerfeder 10 angebrachtes Gehäuseblech 55 ab.

Mit Hilfe der Wippkurve wird ein Kraft- und Energiegleichgewicht zwischen dem Lamellenpaket 5c und der Tellerfeder 10 hergestellt. Die axiale Bewegung der Laufrollen 31 bzw. die axiale Verschiebung des Auflagepunktes B wird durch ein Gewindeblech 56 eingeleitet, welches sich außen am Gehäuse 49 abstützt,.

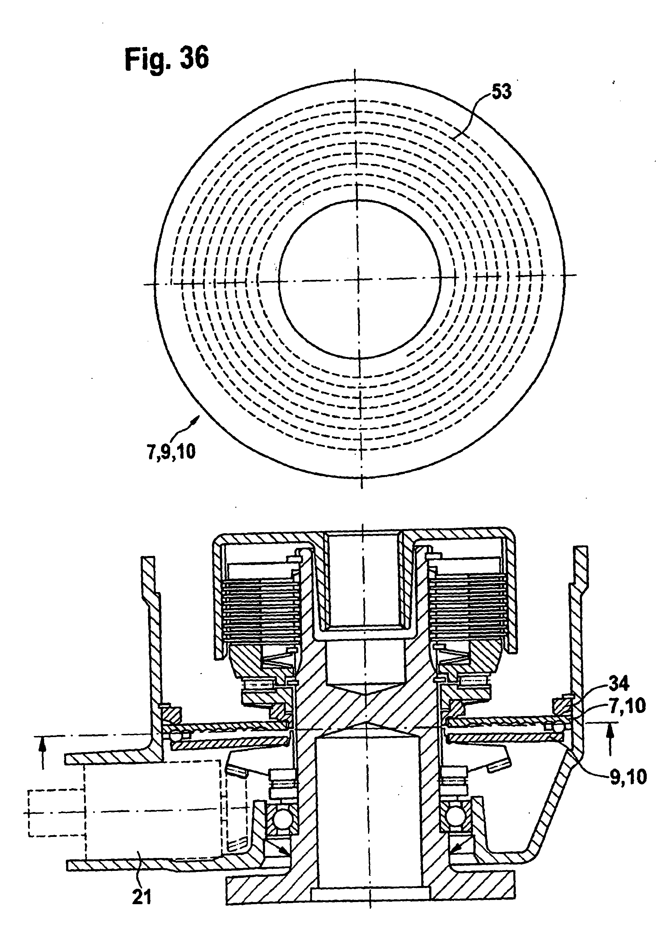

Die Figur 36 zeigt eine Variante der Kupplungszustellung mittels zweier Tellerfedern 10, wobei bei dieser Variante gegenüber der vorherigen Lösung eine der Tellerfedern 10 ebenfalls die Funktion eines Energiespeichers 9 ausübt und vorgespannt ist(Spiralen direkt auf Tellerfeder angeordnet). Die zweite Tellerfeder 10 (die man auch Membranfeder nennen könnte) ist in diesem Fall identisch mit dem Hebel 7. Diese Tellerfeder 10 bzw. der Hebel 7 ist nicht vorgespannt, sondern axial relativ weich. Auf einer der beiden Tellerfedern 10, 7 oder 10, 9 sind je nach Ausführung eine oder mehrere spiralförmige Laufbahnen, so genannte Kugellaufbahnen 53, eingearbeitet, auf denen sich mehrere Kugeln 31 (als besondere Ausgestaltung von Laufrollen) bewegen.

Dabei werden zum Einrücken der Kupplung 2 zwei Effekte genutzt. Einerseits wird der Auflagepunkt der Tellerfeder verkleinert und damit gleichzeitig die Kraft der Tellerfeder erhöht. Andererseits werden die Längenverhältnisse der als Hebel wirkenden Rollen geändert, wodurch die Betätigung ausgelöst wird.

Durch Verdrehen einer der Tellerfedern beispielsweise 10, 9, werden die Kugeln 31 entlang dieser Laufbahn 53 bewegt, wodurch sich der äußere Auflagepunkt der Tellerfeder 10, 9 und somit die Tellerfederkraft ändert. Dadurch wird die gegenüberliegende Tellerfeder 10/7 überdrückt und die Kupplung 2 eingerückt. Zur Kraft- und Energiekompensation hat die abtriebsseitig angebrachte Tellerfeder 10, 7 zusätzlich die Form einer Wippkurve, welche auf der Spirale abgewickelt ist. Prinzipiell kann die Wippkurve aber auch auf der zweiten Tellerfeder 10, 9 angebracht werden. Die Form der Spirale und der Wippkurve sind von der jeweiligen Kupplung 2 abhängig. Die Spiralen können somit auch wesentlich kürzer ausgeführt werden. Beispielsweise können die Spiralen nur auf einem Winkel vom 45° liegen, wobei dann mehrere am Umfang verteilte Spiralen einzuformen sind. Bei Verwendung von mehreren Spiralen läuft in jeder Laufbahn 53 eine Kugel 31. Bei nur einer Laufbahn 53 werden viele Kugeln 31 direkt hintereinander durch einen Käfig geführt, angeordnet. Die Verdrehung der kupplungsseitig angeordneten Tellerfeder 10 erfolgt beispielsweise über ein vorgeschaltetes Kegelradgetriebe.

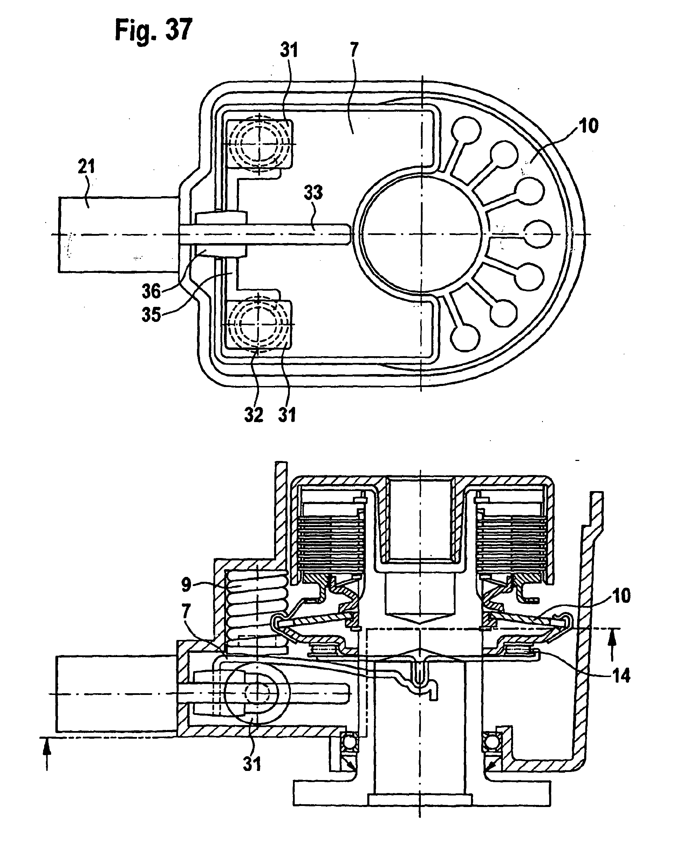

Aus der Variante gemäß Figur 37 geht hervor, dass der Energiespeicher 9 axial über den mittels eines Jochs 35 miteinander verbundenen Laufrollen 31 angeordnet ist, um den vorhandenen axialen Bauraum auszunutzen. Die Tellerfeder 10 wird in diesem Fall mittelbar über den Hebel 7 belastet. Die Laufrollen 31 werden durch die Betätigung der Verstellspindel 33 des Verstellmotors 21 entsprechend auf ihrer Laufbahn bewegt, wobei gleichzeitig der Hebel 7, die Tellerfeder 10 betätigt.

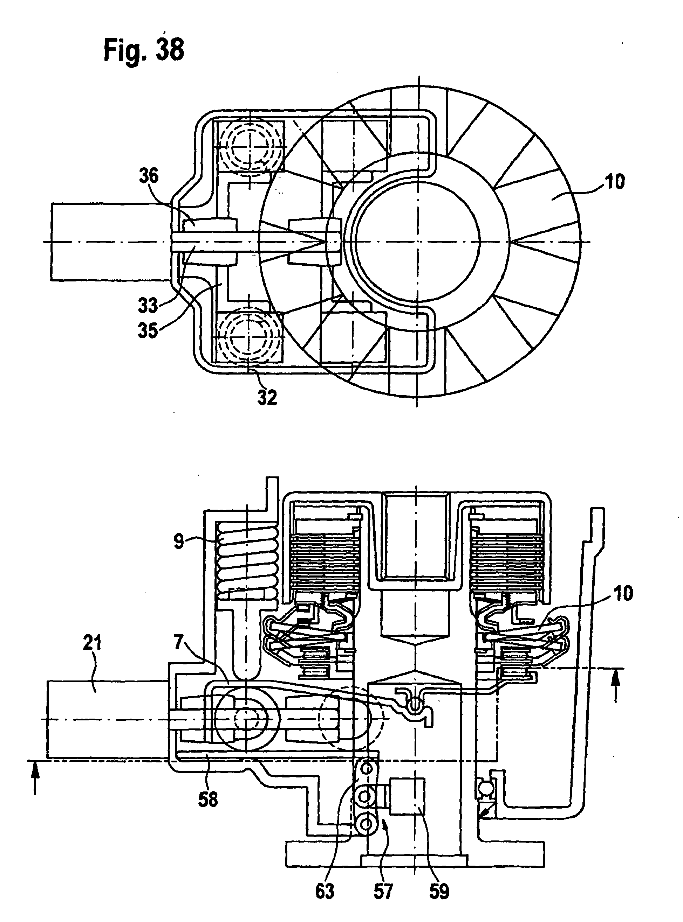

Die Figur 38 zeigt eine weitere Ausgestaltung der erfindungsgemäßen Lösung mit zwei unterschiedlichen Stellungen der Tellerfeder 10. Sie unterscheidet sich hinsichtlich der Figur 37 darin, dass in dieser Lösung eine Notfallentriegelung 57 vorgesehen ist, damit sich die Kupplung 2 bei Stromausfall selbständig öffnen kann. Eine Möglichkeit, die Notfallentriegelung auszulösen, besteht darin, die Wippkurve für die Laufrolle 31 so auszulegen, dass immer eine rückstellende Kraft vorliegt. Das bedeutet, dass die Kraft des Energiespeichers 9 so groß ist, dass die Laufrollen 31 immer in ihre Ausgangsposition in Richtung Verstellmotor 21 gedrückt werden. Dies bedeutet jedoch, dass die maximale Betätigungskraft ansteigen würde.

Um dies zu umgehen, wird ein zusätzliches Blech 58 eingeführt, welches sich einerseits drehbar am Gehäuse 49 abstützt und auf der anderen Seite über ein Kniehebelsystem 63 vom Elektromagnet 59 gehalten wird. Fällt der Storm aus, verliert der Elektromagnet 59 seine Anziehungskraft und das Kniehebelsystem 63 kann geöffnet werden. Weiterhin fällt die Abstützkraft für die Laufrollen 31 weg und die Kupplung 2 öffnet sich. Durch Zurückführen der Laufrollen 31 über den Ausgangspunkt hinaus kann das zusätzliche Blech 58 wieder in seiner Ausgangsstellung zurückgeführt werden. Damit wird das Kniehebelsystem 63 wieder gestreckt und kann vom Elektromagneten 59 leicht gehalten werden. Da der Elektromagnet 59 keine weitere Funktion besitzt, als das Kniehebelsystem im Betriebsfall in einer bestimmten Lage zu halten, kann er relativ klein ausgeführt werden.

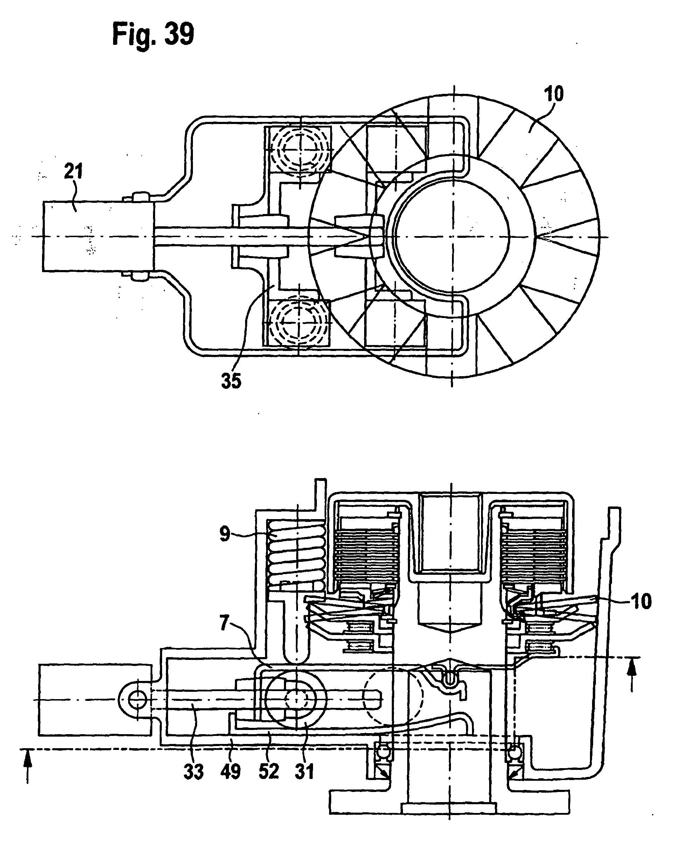

Die Figur 39 zeigt eine weitere Variante eines Ausrückers gemäß Figur 38. Im Unterschied zu Figur 38 stützt sich ein Formblech 52, auf dem die Wippkurve für die Laufrolle 31 eingeprägt ist, am Gehäuse 49 ab. Bei dieser Variante ist der Hebel 7 als Fläche ausgeführt. Die Laufrolle 31 rollt entlang der Wippkurve des Formbleches 52 in Richtung Welle 1 ab und drückt dabei den Hebel 7 gegen die Tellerfeder 10, die in zwei Stellungen dargestellt ist Diese Variante mit zusätzlichem Formblech 52 mit Wippkurve ermöglicht es, diese relativ zum Energiespeicher 9 zu verschieben. Damit verschiebt sich die Anpresslinie des Hebels 7 und zu jeder Position der Laufrollen 31 kann eine andere momentane Steigung der Fläche des Hebels 7 eingestellt werden. Im Bereich der vollen Anpresskraft kann somit immer eine vollständige Kompensation der Ausrückkraft erzielt werden. Nur im Bereich des Lüftspiels und der flachen Belagfederungskennlinie lässt sich keine vollständige Kompensation erreichen, da sich durch das Verschieben der Wippkurve eine Anfangssteigung ergibt.

Diese Lösung ist vorzugsweise für Nasskupplungen mit vorhandener Ölschmierung geeignet. Für trockene Kupplungen müsste unter dem Energiespeicher 9 eine Rollenführung vorgesehen werden. Ein weiterer Unterschied zur Lösung gemäß Figur 38 ist der drehbar gelagerte Verstellmotor 21, um einen Höhenausgleich beim Hochfahren der Wippkurve zu ermöglichen.

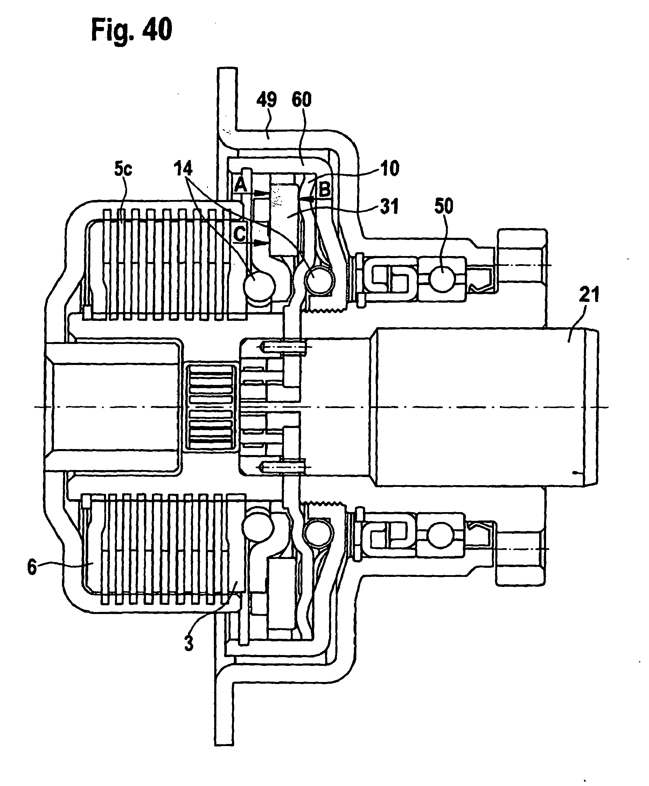

Figur 40 zeigt eine weitere Möglichkeit der Ausführung eines Ausrückers. In dieser ist der Verstellmotor 21 innen liegend angeordnet, wodurch die Verstellspindel 33 entfallen kann. Das führt zu einer anderen Möglichkeit der Kraftübertragung. Die vom Verstellmotor 21 ausgehende Kraft wird somit nicht wie bisher von außen in den Ausrücker eingeleitet, sondern von innen, Daraus ergeben sich entsprechende Änderungen bezüglich der weiteren Kraftübertragung, da die Tellerfeder 10 in direktem Kontakt über ein Planetengetriebe mit der Welle des Verstellmotors 21 steht. Diese verdreht beim Ausrücken die Tellerfeder 10, was ein Abrollen der Wälzkörper auf den Sicken 62 der Tellerfeder 10 entsprechend der Figuren 7a und 7b bewirkt. In diesem Bespiel sind die Wälzkörper gleichzeitig die Laufrollen 31 und ein Teil des Hebels 7. Die Verschiebung des Auflagepunktes B zwischen der Tellerfeder 10 und den Wälzkörpern 31 führt zum einen zu einer Erhöhung der Tellerfederkraft und zum anderen zum Kippen der Wälzkörper 31, die mittels der Druckplatte 3 das Lamellenpaket 5c der Kupplung 2 zusammendrücken. Umgekehrt erfolgt bei Richtungsänderung der Welle des Verstellmotors 21 über das Hebelsystem ein Beabstanden der einzelnen Lamellen des Lamellenpakets 5c. Um bei Verdrehung der Tellerfeder 10 weitgehend Reibung (speziell Bohrreibung ) zu vermeiden, ist es erforderlich, am inneren Auflagepunkt C der Laufrollen 31 ein zusätzliches Wälzlager 14 in Reihe zu schalten. Dies gleicht den weiteren Weg der Laufrollen 31 vom äußeren Auflagepunkt A zum inneren Auflagepunkt C aus. Auch die Tellerfeder 10 stützt sich zum Gehäuse 49 über ein Wälzlager 14 ab, um hier ebenfalls die Reibung zu minimieren.

Um bei Verschleiß die optimale axiale Lage der Tellerfeder 10 zum Lammellenpaket 5c beizubehalten, ist am Topf 60 ein Gewinde angeordnet. Tritt Verschleiß auf, wird über einen Anschlag in der Tellerfeder 10 durch den Verstellmotor 21 der Topf 60 relativ zum Gehäuseinnern 49 verdreht und damit das ganze Ausrücksystem bezüglich des Lammellenpaketes 5c zugestellt. Damit werden über die Lebensdauer der Kupplung 2 ein konstantes Lüftspiel und damit konstante Betätigungsmomente sichergestellt.

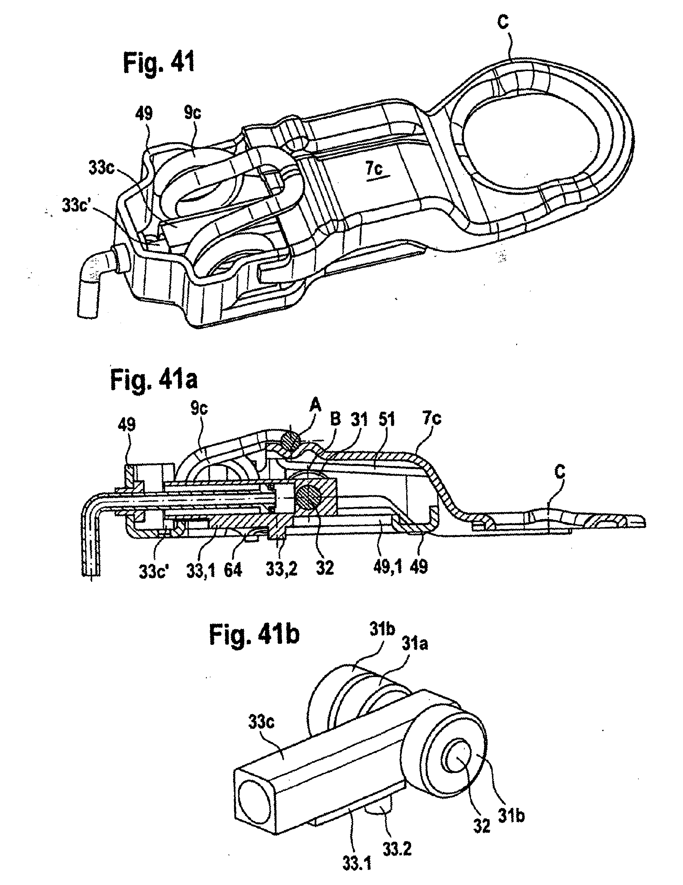

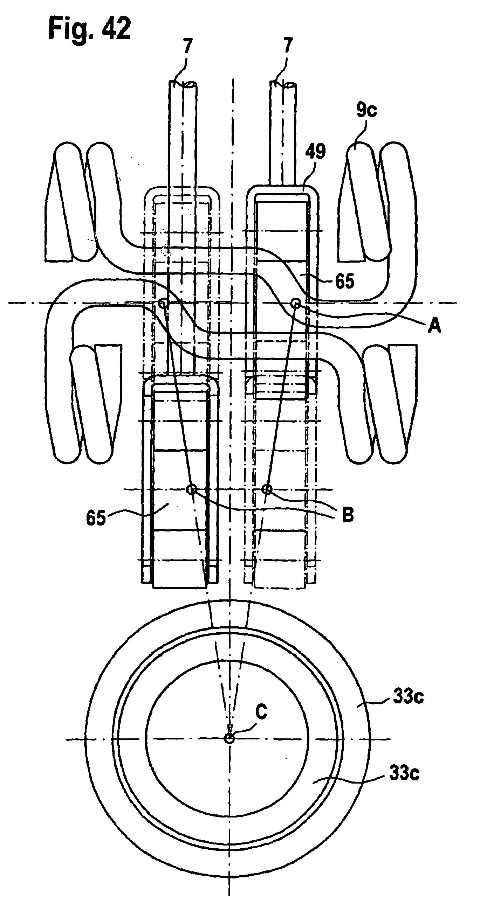

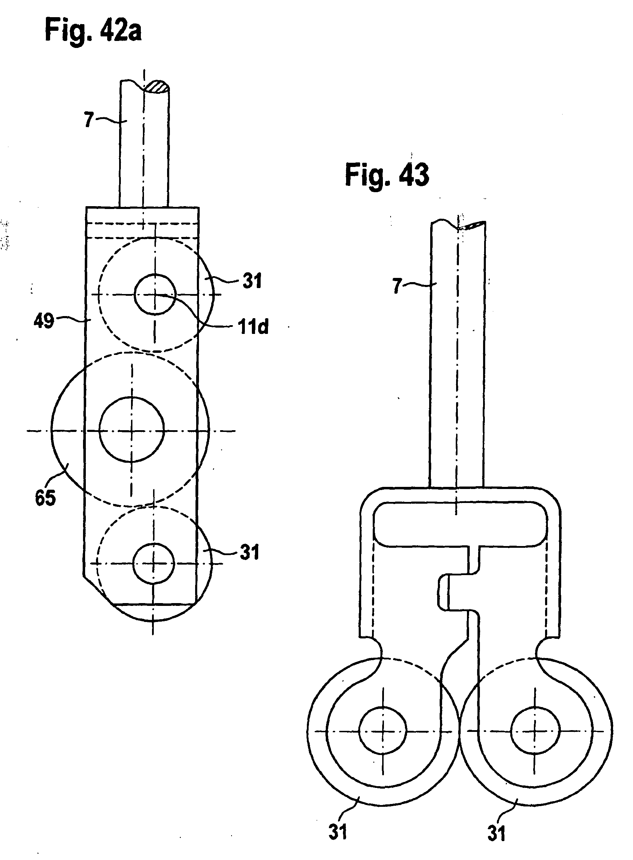

Eine weitere Möglichkeit der Anwendung des Grundprinzips gemäß Figur 2 wird in der Figur 41 beschrieben..Hierbei handelt es sich um einen hydraulisch angetriebenen Ausrücker in Gestaltung eines Wiegehebelausrückers. In Figur 41b ist dargestellt, wie die Rollen 31 an einem Hydraulikzylinder 33c gekoppelten sind. Der Hydraulikzylinder 33c ist mit der Rollenachse 32 und der Kolben 33c' mit dem Gehäuse 49 verbunden. Die Basis dieses Ausrückers bildet das als Blechformteil gestaltete Gehäuse 49, das im Fahrzeug meist am Getriebegehäuse fixiert ist. Im Gehäuse 49 ist eine Doppelschenkelfeder als Energiespeicher 9c eingehängt, deren Kraft auf das freie Ende des Einrückhebels 7 wirkt. Der Einrückhebel 7 wird von der Schenkelfeder 9c geführt.Seitliche Anschläge am Gehäuse 49 unterstützen diese Führung.

Bei Druckbeaufschlagung wird Hydraulikflüssigkeit durch den feststehenden Kolben 33c' in den beweglichen Hydraulikzylinder 33c gepresst Da der Hydraulikzylinder 33c durch den unsymmetrischen Aufbau des 3-Rollen-Konzepts (Fig. 41b) zum seitlichen Verkanten neigt, wird er im Gehäuse 49 durch die Gehäuseführung 49.1 (Figur 41a) geführt. Die durch Druckbeaufschlagung hervorgerufene Verlagerung des Hydraulikzylinders 33c bewirkt ebenfalls eine Verlagerung der Rollen 31 (Figur 41a, wobei die beiden Rollen 31b auf dem Gehäuse 49 abrollen und die Rolle 31a am Einrückhebel 7c abläuft. Die Auflage bzw. der Auflagepunkt B des Einrückhebels 7c wird dabei ebenfalls verlagert, indem der Einrückhebel 7c mit seiner Kurvenbahn auf der Rolle 31a aufliegt. Von dieser Rolle 31a wird die Last über die Rollenachse 32 auf die Rollen 31b auf das Gehäuse 49 übertragen. Die Rolle 31a und die Rollen 31b (verlagerbare Auflage) werden dabei hydraulisch verschoben. Damit die Rollen 31 ihre Ausgangstellung wieder einnehmen können, ist die Kurvenbahn des Einrückhebels 7c so gestaltet, dass in jeder Stellung des Einrückhebels 7c eine zurückschiebende Kraftkomponente auf den Hydraulikzylinder 33c wirkt und so die Rollen 31 wieder in ihre Ausgangsstellung gebracht werden.

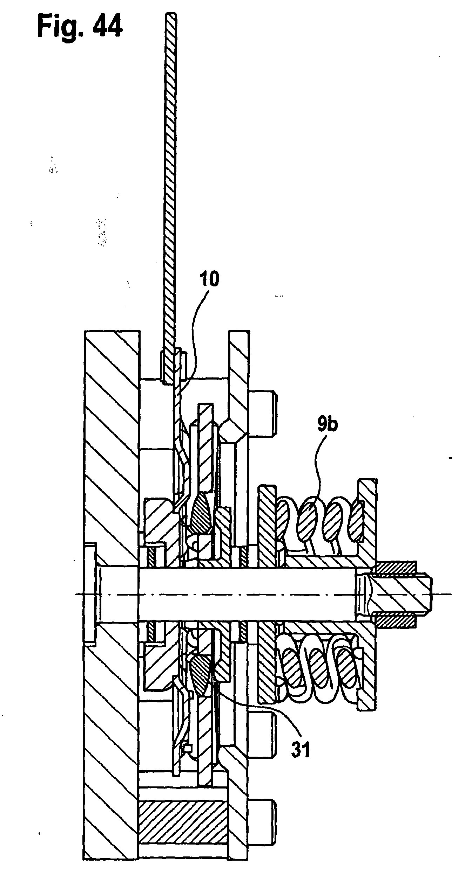

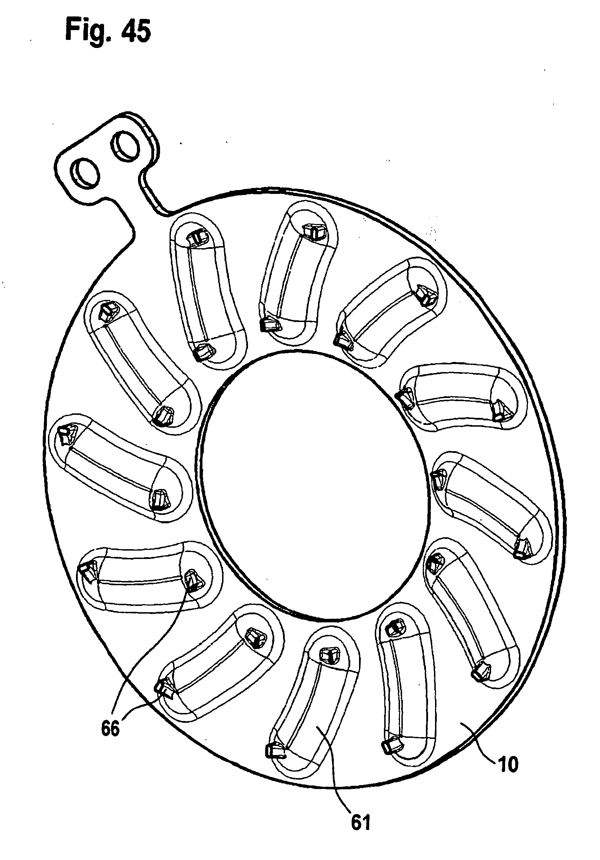

Figur 44 zeigt eine weitere Möglichkeit der Ausgestaltung eines mechanischen Ausrückers mit Handbetätigung. Hierbei werden wieder, gemäß dem Grundprinzip des erfinderischen Gedankens, die Längenverhältnisse des Hebels durch die auf ihn wirkenden Rollen 31 und damit der Auflagepunkt B der Ausrückfeder 10 (bzw. Spiralenplatte 7d) verändert. In Figur 45 ist diese mechanische Lösung des Ausrückers die Ausgestaltung der Ausrückfeder 10, 7d dargestellt. Neu gegenüber den in den Figuren 7a und 7b vorgestellten Lösungen ist dabei, dass jeweils am Ende der spiralförmigen Käfige 61 Anschlagnocken 66 vorgesehen sind, die ein Überdrehen Ausrückfeder 10, 7d und somit ein Abgleiten der Rollen 31 aus dem Käfig 61 verhindern.

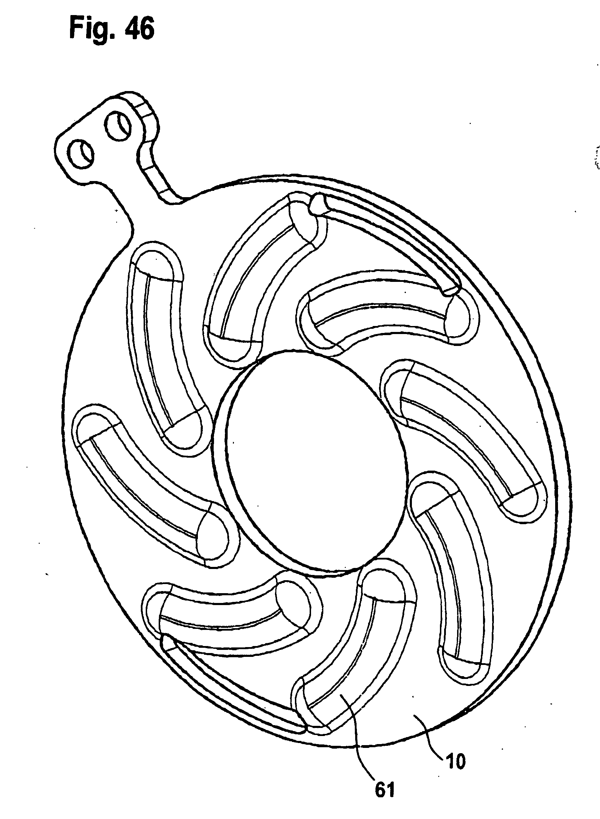

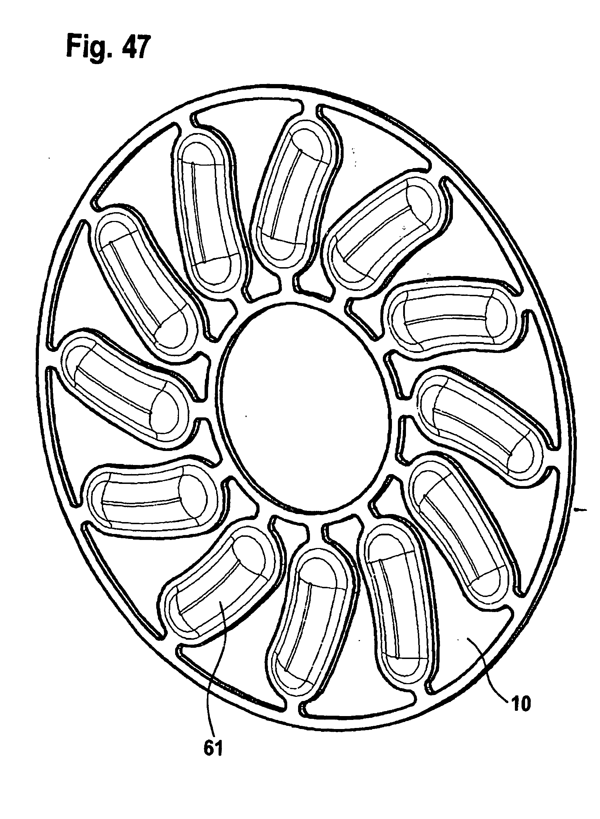

In den Figuren 46 und 47, ist die Ausrückfeder 10, 7d aus dünnwandigem Blech hergestellt, in das ebenfalls jeweils spiralförmig angeordnete Käfige 61 eingebracht sind.

Diese Ausgestaltung der Ausrückfeder 10, 7d hat den Vorteil, dass die diese nach dem Einbringen der Käfige 61 einsatzgehärtet werden kann. Damit wird invorteilhafter Weise die zulässige Flächenpressung erhöht. Dies führt zu einer Verkleinerung der Druckelipse der Hertzschen Pressung und damit zu einer Minimierung von Bohrreibungsverlusten. Auf Grund ihrer axialen und radialen Weichheit der kann sich die Ausrückfeder 10, 7d einer entsprechenden Bewegung anpassen. Damit kann auch der Effekt der Auflagepunktverschiebung an der Ausrückfeder 10, 7d ausgenutzt werden.

Die Nachgiebigkeit der Ausrückfeder 10, 7d in axialer Richtung wird durch eine weitere besondere Ausgestaltung erreicht, wie in Figur 47 dargestellt. Hauptmerkmal ist dabei, dass die Käfige 61 einzeln ausgeformt sind und nur über schmale Stege mit einem dünnen äußeren und inneren Ring verbunden sind. Damit können sie sich ideal der Verformung der dahinter liegenden Tellerfeder anpassen.

Eine weitere Möglichkeit besteht darin, als Rollen 31 Spiralennocken auf einer relativ steifen einsatzgehärteten Platte (Tellerfeder 10) anzubringen. An dieser Platte stützt sich eine ebene Tellerfeder 7a (ohne Sicken 62) ab. Durch die Form der den Spiralennocken (Käfige 61) gegenüber liegenden Seite (Ringwulst) bzw. einem zusätzlich eingelegten Drahtring wird der äußere Auflagedurchmesser der Tellerfeder 7a bestimmt. Diese Anordnung hat de Vorteil, dass der Auflagepunkt B der Spiralennocken (Käfige 61) vom Auflagepunkt A des Hebels (Tellerfeder 7a) komplett entkoppelt ist, wobei dadurch geringere Toleranzeinflüsse zu erwarten sind. Die Kraft der Tellerfeder 7a bleibt im Rahmen der Kennlinie relativ konstant (Betrieb im relativ ebenen Bereich der Tellerfederkennlinie).

Diese Variante zeichnet sich durch eine hohe Steifigkeit der Platte 10 gegen "Topfung" (Tellerfederbewegung) aus, was durch eine große Blechdicke in Verbindung mit einer entsprechenden Höhe der Spiralennocken (Käfige 61) erreicht wird.

Neben diesen Varianten ergibt sich grundsätzlich weiterhin die Möglichkeit, mehrere Hebel 7 (in Form von Tellerfedern) hintereinander anzuordnen. Dies ist insbesondere bei Anwendungen mit hohen Axialkräften und kleinen Bauraumdurchmessern sinnvoll. Vorzugsweise werden zwischen die einzelnen Tellerfedern Drahtringe gelegt, um die dazwischen entstehende Reibung zu minimieren.

Durch die Anhebung der Härte, beispielsweise durch Verwendung eines zusätzlichen Blechs, kann die erforderliche Anzahl an Rollen 31 verringert werden, wodurch eine größere Neigung der als Spiralen ausgebildeten Käfige 61 möglich wird (z.B. > 30°). Dadurch wird der Verdrehwinkel vergrößert, was zu einer Verstell-Momentenabsenkung und zu geringerer Toleranzempfindlichkeit führt.

Wie in Figur 45 dargestellt, können Endanschläge an den Enden des spiralförmigen Käfigs 61 zur Wegbegrenzung vorgesehen werden. Fertigungstechnisch ist es jedoch einfacher, anstelle von Anschlägen auf der Tellerfeder 7 Nuten an deren Rand anzubringen, wie in Figur 46 dargestellt.

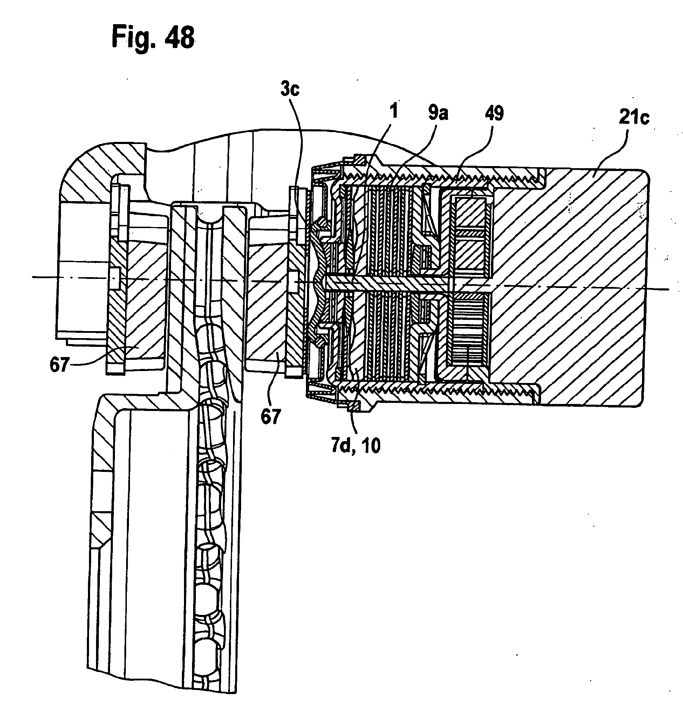

Um für die Betätigung eines Stellorgans geringe Betätigungsenergie aufwenden zu müssen, ist in Figur 48 die Anwendung der erfinderischen Lösung für eine elektrisch betätigte Scheibenbremse dargestellt. Hierbei ist die Spiralenplatte 7d des Ausrückers steif ausgeführt. Durch ein mehrfach geschichtetes Tellerfederpaket als Energiespeicher 9a wird diese Spiralenplatte 7d angepresst. Zur Reibungsminimierung stützen sich die einzelnen Tellerfedern des Tellerfederpakets 9a über Rundringe aneinander ab. An der mit einer vorgegebenen Laufbahn 53 (Wippkurve) versehenen Spiralenplatte 7d stützen sich die Laufrollen 31 ab, wobei es bei Verdrehung der Spiralenplatte 7d zu einer Verschiebung des Auflagepunkte B kommt. Dadurch üben die Rollen 31 eine Betätigungskraft auf das Nadellager und somit weiter auf das Druckblech 3c aus.

Diese Kraft führt zur Betätigung der Bremsbacken 67. Die Verdrehung der Spiralenplatte 7d zusammen mit dem Tellerfederpaket erfolgt über die zentrale Welle 1. Die Drehverbindung zwischen der Welle 1 und der Verbindung Spiralenplatte 7d und Tellerfedern 9a wird über eine Verzahnung realisiert. Wichtig ist dabei, dass die Verbindung axial verschiebbar ist.

Alle diese Bauteile sind in einem topfförmigen Gehäuse 49 untergebracht. Dieses ist außen mit einem Feingewinde versehen, so dass alle Bauteile in das Gehäuse der Bremse eingeschraubt werden können. Durch Verdrehen des Gewindes wird das entsprechende Lüftspiel eingestellt. Im Betrieb wird durch gezieltes Verdrehen des Gewindes durch den E-Motor 21 die Verschleißnachstellung realisiert.

Zur Erreichung des Verstellmomentes ist ein Zwischengetriebe vorgesehen, das in diesem Falle von einem gekoppelten Planetengetriebe realisiert wird. Mit diesem Aufbau ist eine kompakte Bauform bei relativ kurzen axialen Abmessungen möglich.

Durch die besondere Gestaltung des Druckbleches 3c in Figur 48, wodurch die Anlagefläche zum Axiallager kugelig ausgeformt ist und dadurch, dass auf dem Axiallagerring eine entsprechende Hohlkugel eingeformt ist, ist es möglich, dass das Druckblech 3c räumlich kippen kann und sich somit einem ungleichmäßigen Verschleiß der Bremsbeläge anpasst. Dadurch werden Querkräfte und somit entstehende Reibkräfte auf das Druckblech 3c vermieden.

**Bezugszeichenliste**

| | |
|---|---|
| 1 | Welle (Getriebe-Eingangswelle) |
| 2, 2a, 2b | Kupplung |
| 3a, 3b | Druckplatte |
| 3c | Druckblech |
| 4a, 4b | Kupplungsdeckel |
| 5a, 5b | Kupplungsscheibe |
| 5c | Lamellenpaket |
| 6 | Gegendruckplatte |
| 7a, 7b, 7c | Hebel (z.B. als Teller- oder Mäanderfeder), Einrückhebel |
| 7d | Spiralenplatte mit integrierter Wippkurve |
| 8a, 8b | verlagerbarer Drehpunkt |
| 9a, 9b, 9c | Energiespeicher (Tellerfeder, Wendelfeder), Schenkelfeder |
| 10 | Tellerfeder (Ausrückfeder) |
| 11a - 11d | fester Drehpunkt (ggf. Drahtringlager) |
| 12a, 12b | Verschleißnachstellung |
| 13 | Torsionsdämpfer |

| | |
|---|---|
| 14a, 14b | Axiallager |
| 15a, 15b | Mäanderfeder |
| 16a, 16b | radialer Federband-Aktor |
| 17a, 17b | Stellring (Hohlrad) |
| 18 | segmentierter Ringhebel |
| 19 | Steg |
| 20 | Haltering |
| 21a, 21b | Stellmotor |
| 21c | E-Motor mit Doppelplanetengetriebe als Zwischengetriebe |
| 22 | Tellerfeder (mit mittigem Vollquerschnitt) |
| 23 | neutrale Faser |
| 24 | Ausrückschale |
| 25a, 25b | Klammer |
| 26 | Strom-Übertrager |
| 27 | Führungsgabel |
| 28a, 25b | Kulisse |
| 29 | Rückstellfeder |
| 30 | Führungsfläche |
| 31 | Wälzkörper, Kugel, Laufrolle/Rolle |
| 32 | Achse der Laufrolle |
| 33a, 33b, 33c | Verstellspindel / Hydraulikzylinder |
| 33' | Kolben |
| 33.1 | Führung |
| 33.2 | Fortsatz |
| 34 | Abstützung |
| 35a, 35b | Joch |
| 36a, 36b | Stellmutter |
| 37 | Kasten |
| 38 | Profilierung |
| 39 | Widerlager |
| 40 | Kasten-Boden |
| 41 | Laufrollenkamm |
| 42 | Nadellager |
| 43 | Kupplungsdeckel-Lager |
| 44 | Abstandsbolzen |
| 45 | Distanzring |
| 46 | Reaktions-Momentenstütze |
| 47a, 47b | Stecker |
| 48 | Ring |
| 49 | Gehäuse |
| 49.1 | Gehäuseführung |
| 50 | Radiallager |
| 51 | Rampe |
| 52 | Formblech |
| 53 | Laufbahn |
| 54 | Freilauf |
| 55 | Gehäuseblech |
| 56 | Gewindeblech |
| 57 | Notfallentriegelung |
| 58 | Blech |
| 59 | Elektromagnet |
| 60 | Topf |
| 61 | Käfig |
| 62 | Sicken |
| 63 | Kniehebelsystem |
| A,B,C | Auflagepunkte |
| 64 | schaltbarer Anschlag |
| 65 | Stützrolle (Abstützung) |

| 66 | Anschlagnocken |
| 67 | Bremsbacken |

**Patentansprüche**

1. Hebelsystem zum Betätigen von Kupplungen (2a, 2b) für Kraftfahrzeuge, wobei ein Hebel (7, 7a, 7b) mit einem ersten und zweiten Ende und mindestens einem dazwischen liegenden Auflagepunkt (B) versehen ist, wobei durch eine radiale Verlagerung des Auflagepunktes (B) des Hebels (7, 7a, 7b) die Betätigungskraft für die Kupplung (2a, 2b) veränderbar ist, **dadurch gekennzeichnet, dass** zum Abstützen des Hebels (7, 7a, 7b) ein Mittel (31) für den Auflagepunkt (B) vorgesehen ist, das auf einer Oberfläche einer Abstützung und auf einer Hebeloberfläche abrollt.

2. Hebelsystem vorzugsweise nach Anspruch 1, **dadurch gekennzeichnet, dass** das eine Eingangskraft $F_F$ erzeugende Mittel, ein Energiespeicher (9a, 9b), auf das erste Ende des Hebels (7a, 7b) oder den Auflagepunkt (B) drückt und das zweite Hebelende - zumindest mittelbar - auf die Druckplatte (3a, 3b) der Kupplung (2a, 2b) oder der Getriebe-Bremse einwirkt und der Energiespeicher (9a, 9b) als Tellerfeder ausgebildet ist.

3. Hebelsystem nach Anspruch 2, **dadurch gekennzeichnet, dass** der Energiespeicher (9a, 9b) als Wendelfeder ausgebildet ist.

4. Hebelsystem nach einem der Ansprüche 1 bis 3, **dadurch gekennzeichnet, dass** der Drehpunkt (8a, 8b) radial verlagerbar ist.

5. Hebelsystem nach einem der Ansprüche 1 bis 3, **dadurch gekennzeichnet, dass** der Drehpunkt (8a, 8b) umfänglich verlagert wird.

6. Hebelsystem nach einem der Ansprüche 4 bis 5, **dadurch gekennzeichnet, dass** der Drehpunkt (8a, 8b) gleichzeitig sowohl radial als auch umfänglich - also im Wesentlichen spiralförmig - verlagert wird.

7. Hebelsystem nach Anspruch 6, **dadurch gekennzeichnet, dass** der Drehpunkt (8a, 8b) entlang von Spiralsegmenten geführt wird.

8. Hebelsystem nach Anspruch 6, **dadurch gekennzeichnet, dass** der Drehpunkt (8a, 8b) entlang von mindestens einer Vollspirale geführt wird.

9. Hebelsystem nach Anspruch 7 oder 8, **dadurch gekennzeichnet, dass** die Bahn in eine Lauffläche für den Drehpunkt (8a, 8b) hineingearbeitet ist.

10. Hebelsystem nach Anspruch 7 oder 8, **dadurch gekennzeichnet, dass** die Bahn durch eine Kulisse gebildet wird, wodurch sich der Drehpunkt (8a, 8b) auf einer glatten Lauffläche bewegen kann.

11. Hebelsystem nach einem der Ansprüche 1 bis 10, **dadurch gekennzeichnet, dass** die Oberfläche des Hebels (7a, 7b) auf der sich der Drehpunkt (8a, 8b) bewegt, eben gestaltet ist.

12. Hebelsystem nach einem der Ansprüche 1 bis 10, **dadurch gekennzeichnet, dass** mindestens eine - dem Drehpunkt (8a, 8b) zugewandte - Oberfläche, konkav gewölbt ist.

13. Hebelsystem nach einem der Ansprüche 1 bis 12, **dadurch gekennzeichnet, dass** der Hebel (7a, 7b) in seiner Einwirkung auf die Druckplatte (3a, 3b), mittelbar zunächst erst auf ein erstes axiales, axial verschiebbares Lager (14) einwirkt und von diesem Lager (14) aus mittels eines weiteren Hebels (10) - beispielsweise als Tellerfeder ausgestaltet - und erst dann auf die Druckplatte (3a, 3b), beispielsweise, einer Kupplung (2, 2a, 2b), einwirkt.

14. Hebelsystem nach einem der Ansprüche 1 bis 13, **dadurch gekennzeichnet, dass** der Drehpunkt (8a, 8b) von Kugeln gebildet wird, die vorzugsweise in ihrer Pressrichtung paarweise übereinander angeordnet sind.

15. Hebelsystem nach einem der Ansprüche 1 bis 13, **dadurch gekennzeichnet, dass** der Drehpunkt (8a, 8b) von Zylinderrollen gebildet wird, die vorzugsweise in ihrer Pressrichtung paarweise übereinander angeordnet sind.

**16.** Hebelsystem nach einem der Ansprüche 14 oder 15, **dadurch gekennzeichnet, dass** die Wälzkörper in Ausnehmungen einer mäanderförmigen Feder (15a, 15b) geführt werden, wobei die mäanderförmige Feder (15a, 15b) in ihrem Durchmesser veränderbar gestaltet ist.

**17.** Hebelsystem nach Anspruch 16, **dadurch gekennzeichnet, dass** der mäanderförmigen Feder (15a, 15b) im radial inneren Bereich eine ringförmige Feder zugeordnet ist, die bei einer axialen Krafteinwirkung auf ihren inneren Bereich, um ihre neutrale Faser (23) verschwenkt.

**18.** Hebelsystem nach Anspruch 16, **dadurch gekennzeichnet, dass** zur Verstellung des Drehpunktes der mäanderförmigen Feder (15a, 15b) ein Federband-Aktor (16a, 16b) zugeordnet ist.

**19.** Hebelsystem nach Anspruch 16, **dadurch gekennzeichnet, dass** zur Verstellung des Drehpunktes (8a, 8b), eine zur Welle (1) außermittige, aber konzentrische dazu drehbare Kulisse (28a, 28b) angeordnete ist.

**20.** Hebelsystem nach Anspruch 16, **dadurch gekennzeichnet, dass** zur Verstellung des Drehpunktes (8a, 8b) der mäanderförmigen Feder (15a, 15b) ein konzentrischer Konus zugeordnet ist, der durch ein axial wirkendes Lager betätigt wird.

**21.** Hebelsystem nach einem der Ansprüche 1 bis 20, **dadurch gekennzeichnet, dass** dem Mechanismus zur Verstellung des Drehpunktes (8a, 8b) ein Fliehkraftausgleich zugeordnet ist.

**22.** Hebelsystem nach einem der Ansprüche 1 bis 21, **dadurch gekennzeichnet, dass** der mindestens eine Hebel (7a, 7b) aus einem segmentierten Ring (18) besteht, der mittels eines Steges (19) mit einem Haltering (20) verbunden ist, wobei zur Veränderung des Hebeldrehpunktes, ein Wälzkörper auf der Kreisfläche des Hebels abrollt und durch das Einwirken der Kräfte auf den Hebel, dieser um eine radiale Achse schwenkt.

**23.** Hebelsystem nach einem der Ansprüche 1 bis 22, **dadurch gekennzeichnet, dass** der verlagerbare Drehpunkt (8a, 8b) von einer Laufrolle (31) und ihrer Achse (32) gebildet wird, wobei beim Verlagern des Drehpunktes (8a, 8b), eine der Umfangsflächen von der Laufrolle (31) und der Achse (32), auf der Hebeloberfläche läuft, während die andere Umfangsfläche auf der Abstützung (34) läuft.

**24.** Hebelsystem nach einem der Ansprüche 1 bis 23, **dadurch gekennzeichnet, dass** der verlagerbare Drehpunkt (8a, 8b) von einem Stellmotor (21a, 21b) bewegt wird.

**25.** Hebelsystem nach Anspruch 24, **dadurch gekennzeichnet, dass** der Stellmotor (21a, 21b) als eine zur Welle (1) konzentrische E-Maschine ausgebildet ist.

**26.** Hebelsystem nach einem der Ansprüche 1 bis 25, **dadurch gekennzeichnet, dass** der Stellmotor (21a, 21b) am Umfang des Ausrückers oder innenliegend in diesem angeordnet sein kann und mittels einer Steuerung gesteuert und/oder geregelt,wird, wobei die Steuerung in einer Wirkverbindung zu einem automatisierten Getriebe steht.

**27.** Hebelsystem nach einem der Ansprüche 1 bis 26, **dadurch gekennzeichnet, dass** das Hebelsystem in einem Kasten (37) angeordnet ist, der vorzugsweise aus gestanztem Blech besteht, wobei der Boden des Kastens (40) als Abstützung (34) und damit als eine der zwei Laufflächen für den Drehpunkt (8a, 8b) dient.

**28.** Hebelsystem nach Anspruch 27, **dadurch gekennzeichnet, dass** der Boden (40) in der Richtung längsprofiliert ist, in der auch der Drehpunkt (8a, 8b) verlagerbar ist.

**29.** Hebelsystem nach Anspruch 27 oder 28, **dadurch gekennzeichnet, dass** in mindestens einer - zum Boden des Kastens(40) beabstandeten - Ecke des Kastens (37) ein Widerlager (39) eingesetzt ist, wo sich das dem Hebel (7a, 7b) abgewandte Ende des Energiespeichers (9a, 9b) abstützt.

**30.** Hebelsystem nach Anspruch 29, **dadurch gekennzeichnet, dass** das Widerlager (39) in Schlitze des Kastens (37) einhakt und vorzugsweise im Bereich der Abstützstelle des Energiespeichers (9a, 9b) mit einem Schwenklager versehen sind.

**31.** Hebelsystem nach einem der Ansprüche 27 bis 30, **dadurch gekennzeichnet, dass** der Hebel (7a, 7b) aus einem gestanzten Blechteil besteht.

**32.** Hebelsystem nach Anspruch 31, **dadurch gekennzeichnet, dass** der Hebel (7a, 7b) mit Profilierungen (38) versehen ist, die sich vorzugsweise in der Richtung erstrecken, in der auch der Drehpunkt (7a, 7b) des Hebelsystems verlagert wird.

**33.** Hebelsystem nach einem der Ansprüche 27 bis 32, **dadurch gekennzeichnet, dass** der Hebel (7a, 7b) mit einer Abstützstelle für den Energiespeicher (9a, 9b) versehen ist, wobei diese Abstützstelle vorzugsweise mit einem Schwenklager versehen ist.

**34.** Hebelsystem nach einem der Ansprüche 27 bis 33, **dadurch gekennzeichnet, dass** der Drehpunkt von zwei Laufrollen (31) mit je einer hohlen Achse (32) gebildet wird und dass in die hohle Achse jeweils ein Joch (35) mit einem seiner Enden hineingreift, wodurch somit Doppel-Drehpunkte entstehen und diese damit kinematisch miteinander verbunden werden.

**35.** Hebelsystem nach Anspruch 34, **dadurch gekennzeichnet, dass** das Joch (35) mit einer Stellmutter (36) gekoppelt ist, die vorzugsweise zwischen den zwei verlagerbaren Drehpunkten angeordnet ist.

**36.** Hebelsystem nach Anspruch 35, **dadurch gekennzeichnet, dass** die Stellmutter (36) mit einem Innengewinde versehen ist, in die eine elektromotorisch antreibbare Verstellspindel (33) eingreift.

**37.** Hebelsystem nach einem der Ansprüche 34 bis 36, **dadurch gekennzeichnet, dass** die Enden des Joches (35) ballig ausgestaltet sind.

**38.** Hebelsystem nach einem der Ansprüche 34 bis 37, **dadurch gekennzeichnet, dass** die Gewinde der Stellmutter (36a, 36b) und der Verstellspindel (33a, 33b) zueinander selbsthemmend ausgestaltet sind.

**39.** Hebelsystem nach einem der Ansprüche 34 bis 37, **dadurch gekennzeichnet, dass** die Gewinde der Stellmutter (36a, 36b) und der Verstellspindel (33a, 33b) zueinander ohne Selbsthemmung ausgestaltet ist.

**40.** Hebelsystem nach Anspruch 39, **dadurch gekennzeichnet, dass** bei einem Ausfall des Stellmotors (21a, 21b), sich der verlagerbare Doppel-Drehpunkt in eine bevorzugte Stellung bewegt.

**41.** Hebelsystem nach einem der Ansprüche 38 bis 40, **dadurch gekennzeichnet, dass** die Gewinde der Stellmutter (36a, 36b) und der Verstellspindel (33a, 33b) zueinander gleitend gestaltet sind.

**42.** Hebelsystem nach einem der Ansprüche 38 bis 40, **dadurch gekennzeichnet, dass** die Gewinde der Stellmutter (36a, 36b) und der Verstellspindel (33a, 33b) zueinander mit einer Roll-Lagerung ausgestattet sind.

**43.** Hebelsystem nach einem der Ansprüche 27 bis 42, **dadurch gekennzeichnet, dass** der verlagerbare Doppel-Drehpunkt lenkbar ausgestaltet ist.

**44.** Hebelsystem nach einem der Ansprüche 27 bis 42, **dadurch gekennzeichnet, dass** der verlagerbare Doppel-Drehpunkt selbstlenkend ausgestaltet ist.

**45.** Hebelsystem nach einem der Ansprüche 27 bis 42, **dadurch gekennzeichnet, dass** der verlagerbare Doppel-Drehpunkt zwangsgeführt ausgestaltet ist.

**46.** Hebelsystem nach einem der Ansprüche 1 bis 45, **dadurch gekennzeichnet, dass** dieses Hebelsystem in einem Kraftfahrzeug doppelt ausgeführt ist und zur Betätigung einer Doppelkupplung verwendet wird

**Claims**

**1.** A lever system for operating clutches (2a, 2b) for motor vehicles, wherein a lever (7, 7a, 7b) is provided with a first and a second end and at least one point of support (B) located between them, wherein the operating force for the clutch (2a, 2b) is changeable by repositioning the point of contact (B) of the lever (7, 7a, 7b) radially, **characterized in that** to support the lever (7, 7a, 7b) a means (31) is provided for the point of contact (B) which rolls on a surface of a support and on a lever surface.

2. A lever system preferably according to Claim 1, **characterized in that** the means which produces an input force $F_F$ presses an energy storing device (9a, 9b) against the first end of the lever (7a, 7b) or the point of contact (B), and the second end of the lever acts at least indirectly on the pressure plate (3a, 3b) of the clutch (2a, 2b) or of the transmission brake, and the energy storage device (9a, 9b) is in the form of a diaphragm spring.

3. A lever system according to Claim 2, **characterized in that** the energy storage device (9a, 9b) is in the form of a helical spring.

4. A lever system according to one of Claims 1 through 3, **characterized in that** the fulcrum (8a, 8b) is radially repositionable.

5. A lever system according to one of Claims 1 through 3, **characterized in that** the fulcrum (8a, 8b) is repositioned circumferentially.

6. A lever system according to one of Claims 4 through 5, **characterized in that** the fulcrum (8a, 8b) is repositioned simultaneously both radially and circumferentially - i.e. substantially in a spiral.

7. A lever system according to Claim 6, **characterized in that** the fulcrum (8a, 8b) is guided along spiral segments.

8. A lever system according to Claim 6, **characterized in that** the fulcrum (8a, 8b) is guided along at least one full spiral.

9. A lever system according to Claim 7 or 8, **characterized in that** the path is worked into a bearing surface for the fulcrum (8a, 8b).

10. A lever system according to Claim 7 or 8, **characterized in that** the path is formed by a gate through which the fulcrum (8a, 8b) can move on a smooth bearing surface.

11. A lever system according to one of Claims 1 through 10, **characterized in that** the surface of the lever (7a, 7b) on which the fulcrum (8a, 8b) moves is of flat design.

12. A lever system according to one of Claims 1 through 10, **characterized in that** at least one surface - facing the fulcrum (8a, 8b) - is concavely domed.

13. A lever system according to one of Claims 1 through 12, **characterized in that** the lever (7a, 7b), in acting on the pressure plate (3a, 3b), first acts indirectly on a first axial, axially slidable bearing (14), and from this bearing (14) and only then acts by means of another lever (10) - constructed for example as a diaphragm spring - on the pressure plate (3a, 3b), for example of a clutch (2, 2a, 2b).

14. A lever system according to one of Claims 1 through 13, **characterized in that** the fulcrum (8a, 8b) is formed of balls which are preferably positioned in pairs one above the other in their direction of pressure.

15. A lever system according to one of Claims 1 through 13, **characterized in that** the fulcrum (8a, 8b) is formed of cylindrical rollers which are preferably positioned in pairs one above the other in their direction of pressure.

16. A lever system according to one of Claims 14 or 15, **characterized in that** the rolling elements are guided in recesses in a meander-shaped spring (15a, 15b), the meander-shaped spring (15a, 15b) being constructed with changeable diameter.

17. A lever system according to Claim 16, **characterized in that** the meander-shaped spring (15a, 15b) has assigned to it in its radially inner zone a ring-shaped spring, spring (15a, 15b) has assigned to it in its radially inner zone a ring-shaped spring, which swings around its neutral strand (23) when a force acts axially on its inner area.

18. A lever system according to Claim 16, **characterized in that** a spring strip actuator (16a, 16b) is assigned to reposition the fulcrum of the meander-shaped spring (15a, 15b).

19. A lever system according to Claim 16, **characterized in that** a gate (28a, 28b) which is eccentric with respect to the shaft (1) but is rotatable concentrically to it is arranged to reposition the fulcrum (8a, 8b).

**20.** A lever system according to Claim 16, **characterized in that** a concentric cone which is operated by an axially acting bearing is assigned to reposition the fulcrum (8a, 8b) of the meander-shaped spring (15a, 15b).

**21.** A lever system according to one of Claims 1 through 20, **characterized in that** a centrifugal force compensating device is assigned to the mechanism to reposition the fulcrum (8a, 8b).

**22.** A lever system according to one of Claims 1 through 21, **characterized in that** the at least one lever (7a, 7b) is made up of a segmented ring (18) which is connected to a retaining ring (20) by means of a web (19), where to change the fulcrum of the lever a rolling element rolls on the circle area of the lever, and the latter pivots around a radial axis due to the action of the forces on the lever.

**23.** A lever system according to one of Claims 1 through 22, **characterized in that** the repositionable fulcrum (8a, 8b) is formed by a roller (31) and its axle (32), wherein when the fulcrum (8a, 8b) is relocated one of the circumferential surfaces of the roller (31) and the axle (32) runs on the surface of the lever, while the other circumferential surface runs on the support (34).

**24.** A lever system according to one of Claims 1 through 23, **characterized in that** the repositionable fulcrum (8a, 8b) is moved by a servomotor (21a, 21b).

**25.** A lever system according to Claim 24, **characterized in that** the servomotor (21a, 21b) is in the form of an electric motor that is concentric to the shaft (1).

**26.** A lever system according to one of Claims 1 through 25, **characterized in that** the servomotor (21a, 21b) can be positioned on the circumference of the throw-out mechanism or internally within the latter and is controlled or regulated by means of a controller, the controller having an operational connection to an automated transmission.

**27.** A lever system according to one of Claims 1 through 26, **characterized in that** the lever system is located in a box (37) which is preferably made of stamped sheet metal, the floor (40) of the box serving as a support (34) and hence as one of the two bearing surfaces for the fulcrum (8a, 8b).

**28.** A lever system according to Claim 27, **characterized in that** the floor (40) is contoured longitudinally in the same direction in which the fulcrum (8a, 8b) is repositionable.

**29.** A lever system according to Claim 27 or 28, **characterized in that** in at least one corner of the box (37) - spaced at an interval from the floor (40) of the box - an abutment (39) is placed, against which the end of the energy storage device (9a, 9b) facing away from the lever (7a, 7b) is braced.

**30.** A lever system according to Claim 29, **characterized in that** the abutment (39) hooks into slots in the box (37) and is preferably provided with a pivot bearing in the area of the support point for the energy storage device (9a, 9b).

**31.** A lever system according to one of Claims 27 through 30, **characterized in that** the lever (7a, 7b) is made of a stamped sheet metal part.

**32.** A lever system according to Claim 31, **characterized in that** the lever (7a, 7b) is provided with contours (38) that preferably extend in the same direction in which the fulcrum (7a, 7b) of the lever system is repositioned.

**33.** A lever system according to one of Claims 27 through 32, **characterized in that** the lever (7a, 7b) is provided with a support point for the energy storage device (9a, 9b), this support point preferably being provided with a pivot bearing.

**34.** A lever system according to one of Claims 27 through 33, **characterized in that** the fulcrum is formed by two rollers (31), each having a hollow axle (32), and that a yoke (35) reaches into each of the hollow axles with one of its ends, so that double fulcrums are produced and are thereby kinematically connected to each other.

**35.** A lever system according to Claim 34, **characterized in that** the yoke (35) is coupled with an adjusting nut (36) which is preferably located between the two repositionable fulcrums.

**36.** A lever system according to Claim 35, **characterized in that** the adjusting nut (36) has female threading which is engaged by an adjusting spindle (33) that is drivable by an electric motor.

**37.** A lever system according to one of Claims 34 through 36, **characterized in that** the ends of the yoke (35) are ball-shaped.

**38.** A lever system according to one of Claims 34 through 37, **characterized in that** the threads of the adjusting nut (36a, 36b) and of the adjusting spindle (33a, 33b) are mutually self-locking.

**39.** A lever system according to one of Claims 34 through 37, **characterized in that** the threads of the adjusting nut (36a, 36b) and of the adjusting spindle (33a, 33b) are designed so that they are not mutually self-locking.

**40.** A lever system according to Claim 39, **characterized that** in the event of a failure of the servomotor (21a, 21b) the repositionable double fulcrum moves to a preferred position.

**41.** A lever system according to one of Claims 38 through 40, **characterized in that** the threads of the adjusting nut (36a, 36b) and of the adjusting spindle (33a, 33b) are designed to slide against each other.

**42.** A lever system according to one of Claims 38 through 40, **characterized in that** the threads of the adjusting nut (36a, 36b) and of the adjusting spindle (33a, 33b) have roller bearings between them.

**43.** A lever system according to one of Claims 27 through 42, **characterized in that** the repositionable double fulcrum is of steerable design.

**44.** A lever system according to one of Claims 27 through 42, **characterized in that** the repositionable double fulcrum is of self-steering design.

**45.** A lever system according to one of Claims 27 through 42, **characterized in that** the repositionable double fulcrum is of restricted-guidance design.

**46.** A lever system according to one of Claims 1 through 45, **characterized in that** this lever system is realized in duplicate in a motor vehicle and is used to operate a double clutch.

## Revendications

**1.** Système de levier pour commander des embrayages (2a, 2b) pour des véhicules automobiles, un levier (7, 7a, 7b) étant muni d'une première et d'une deuxième extrémités et d'au moins un point d'appui (B) situé entre les deux extrémités, la force de commande pour l'embrayage (2a, 2b) étant modifiable par un déplacement radial du point d'appui (B) du levier (7, 7a, 7b), **caractérisé en ce que**, pour l'appui du levier (7, 7a, 7b), un moyen (31) est prévu pour le point d'appui (B), ce moyen roulant sur une surface d'un support et sur une surface du levier.

**2.** Système de levier de préférence selon la revendication 1, **caractérisé en ce que** le moyen générant une force initiale $F_F$ presse un accumulateur d'énergie (9a, 9b) sur la première extrémité du levier (7a, 7b) ou sur le point d'appui (B) et **en ce que** la deuxième extrémité de levier agit - au moins indirectement - sur le plateau de poussée (3a, 3b) de l'embrayage (2a, 2b) ou sur les freins de la boîte de vitesses et **en ce que** l'accumulateur d'énergie (9a, 9b) est exécuté comme ressort à diaphragme.

**3.** Système de levier selon la revendication 2, **caractérisé en ce que** l'accumulateur d'énergie (9a, 9b) est exécuté comme ressort à serpentin.

**4.** Système de levier selon l'une quelconque des revendications 1 à 3, **caractérisé en ce que** le point pivotant (8a, 8b) est déplaçable en direction radiale.

**5.** Système à leviers selon l'une quelconque des revendications 1 à 3, **caractérisé en ce que** le point pivotant (8a, 8b) est déplacé de manière circonférentielle.

**6.** Système de levier selon l'une quelconque des revendications 4 à 5, **caractérisé en ce que** le point pivotant (8a, 8b) est déplacé simultanément aussi bien en direction radiale que de manière circonférentielle - donc essentiellement de manière hélicoïdale.

**7.** Système de levier selon la revendication 6, **caractérisé en ce que** le point pivotant (8a, 8b) est mené le long de segments en spirale.

**8.** Système de levier selon la revendication 6, **caractérisé en ce que** le point pivotant (8a, 8b) est mené le long d'au moins une spirale complète.

**9.** Système de levier selon la revendication 7 ou 8, **caractérisé en ce que** la voie est façonnée en une surface de roulement pour le point pivotant (8a, 8b).

**10.** Système de levier selon la revendication 7 ou 8, **caractérisé en ce que** la voie est constituée d'une coulisse, ce qui permet au point pivotant (8a, 8b) de pouvoir se déplacer sur une surface de roulement lisse.

**11.** Système de levier selon l'une quelconque des revendications 1 à 10, **caractérisé en ce que** la surface du levier (7a, 7b) sur laquelle le point pivotant (8a, 8b) se déplace est conçue de manière plane.

**12.** Système de levier selon l'une quelconque des revendications 1 à 10, **caractérisé en ce qu'**au moins une surface - tournée vers le point pivotant (8a, 8b) - est bombée de manière concave.

**13.** Système de levier selon l'une quelconque des revendications 1 à 12, **caractérisé en ce que** le levier (7a, 7b), dans son action sur le plateau de poussée (3a, 3b), agit d'abord indirectement sur un premier palier axial (14), déplaçable en direction axiale, et qu'à partir de ce palier (14), il agit, au moyen d'un autre levier (10) - conçu par exemple comme ressort à diaphragme - alors seulement sur le plateau de poussée (3a, 3b), par exemple d'un embrayage (2, 2a, 2b).

**14.** Système de levier selon l'une quelconque des revendications 1 à 13, **caractérisé en ce que** le point pivotant (8a, 8b) est constitué de billes superposées par paires, de préférence dans la direction de pression.

**15.** Système de levier selon l'une quelconque des revendications 1 à 13, **caractérisé en ce que** le point pivotant (8a, 8b) est constitué de rouleaux cylindriques superposés par paires, de préférence dans la direction de pression.

**16.** Système de levier selon l'une quelconque des revendications 14 ou 15, **caractérisé en ce que** les organes de roulement sont guidés dans des évidements d'un ressort (15a, 15b) en forme de méandres, le ressort (15a, 15b) en forme de méandres étant conçu avec un diamètre variable.

**17.** Système de levier selon la revendication 16, **caractérisé en ce qu'**un ressort annulaire est associé au ressort (15a, 15b) en forme de méandres dans la partie radialement intérieure, ce ressort annulaire basculant autour de son axe neutre (23) lorsqu'une force axiale agit sur sa partie intérieure.

**18.** Système de levier selon la revendication 16, **caractérisé en ce qu'**un acteur à ressort à lame (16a, 16b) est associé au ressort (15a, 15b) en forme de méandres pour le déplacement du point pivotant.

**19.** Système de levier selon la revendication 16, **caractérisé en ce qu'**une coulisse pivotante (28a, 28b), excentrique par rapport à l'arbre (1) mais concentrique à celui-ci, est disposée pour le déplacement du point pivotant (8a, 8b).

**20.** Système de levier selon la revendication 16, **caractérisé en ce qu'**un cône concentrique commandé par un palier agissant en direction axiale est associé au ressort (15a, 15b) en forme de méandres pour le déplacement du point pivotant (8a, 8b).

**21.** Système de levier selon l'une quelconque des revendications 1 à 20, **caractérisé en ce qu'**un dispositif de compensation centrifuge est associé au mécanisme de déplacement du point pivotant (8a, 8b).

**22.** Système de levier selon l'une quelconque des revendications 1 à 21, **caractérisé en ce que** l'au moins un levier (7a, 7b) est constitué d'un anneau segmenté (18) raccordé à un anneau de retenue (20) au moyen d'une nervure (19), un organe de roulement roulant sur la surface circulaire du levier pour modifier le point pivotant du levier et le levier basculant autour d'un axe radial en raison de l'influence des forces sur le levier.

**23.** Système de levier selon l'une quelconque des revendications 1 à 22, **caractérisé en ce que** le point pivotant déplaçable (8a, 8b) est formé par un galet de roulement (31) et son axe (32), l'une des surfaces circonférentielles du galet de roulement (31) et de l'axe (32) passant sur la surface du levier lors du déplacement du point pivotant (8a, 8b), alors que l'autre surface circonférentielle passe sur l'appui (34).

24. Système de levier selon l'une quelconque des revendications 1 à 23, **caractérisé en ce que** le point pivotant déplaçable (8a, 8b) est déplacé par un servomoteur (21a, 21b).

25. Système de levier selon la revendication 24, **caractérisé en ce que** le servomoteur (21a, 21 b) est exécuté comme une machine électrique concentrique par rapport à l'arbre (1).

26. Système de levier selon l'une quelconque des revendications 1 à 25, **caractérisé en ce que** le servomoteur (21a, 21b) peut être disposé sur le pourtour du dispositif de débrayage ou à l'intérieur de ce dernier et **en ce qu'**il est commandé et/ou réglé au moyen d'une commande en interaction avec une boîte de vitesses automatique.

27. Système de levier selon l'une quelconque des revendications 1 à 26, **caractérisé en ce que** le système à leviers est disposé dans une boîte (37) constituée de préférence de tôle découpée, le fond de la boîte (40) servant d'appui (34) et donc servant comme l'une des deux surfaces de roulement pour le point pivotant (8a, 8b).

28. Système de levier selon la revendication 27, **caractérisé en ce que** le fond (40) est profilé longitudinalement dans la direction dans laquelle le point pivotant (8a, 8b) est également déplaçable.

29. Système de levier selon la revendication 27 ou 28, **caractérisé en ce que** dans au moins un coin de la boîte (37) - écarté du fond de la boîte (40) - est inséré un palier de butée (39) où s'appuie l'extrémité de l'accumulateur d'énergie (9a, 9b) opposée au levier (7a, 7b).

30. Système de levier selon la revendication 29, **caractérisé en ce que** le palier de butée (39) est accroché dans des fentes de la boîte (37) et est muni d'un palier basculant de préférence dans la partie des pièces d'appui de l'accumulateur d'énergie (9a, 9b).

31. Système de levier selon l'une quelconque des revendications 27 à 30, **caractérisé en ce que** le levier (7a, 7b) est constitué d'une pièce en tôle découpée.

32. Système de levier selon la revendication 31, **caractérisé en ce que** le levier (7a, 7b) est muni de profils (38) qui s'étendent de préférence dans la direction dans laquelle se déplace le point pivotant (7a, 7b) du système de levier.

33. Système de levier selon l'une quelconque des revendications 27 à 32, **caractérisé en ce que** le levier (7a, 7b) est muni d'un point d'appui pour l'accumulateur d'énergie (9a, 9b), ce point d'appui étant muni de préférence d'un palier basculant.

34. Système de levier selon l'une quelconque des revendications 27 à 33, **caractérisé en ce que** le point pivotant est constitué de deux galets de roulement (31) ayant chacun un axe creux (32) et **en ce qu'**une des extrémités d'une travée (35) a prise dans l'axe creux, en conséquence de quoi des points pivotants doubles sont créés, ceux-ci étant ainsi raccordés entre eux de manière cinématique.

35. Système de levier selon la revendication 34, **caractérisé en ce que** la travée (35) est couplée à un écrou de réglage (36) qui est disposé de préférence entre les deux points pivotants déplaçables.

36. Système de levier selon la revendication 35, **caractérisé en ce que** l'écrou de réglage (36) est muni d'un filet intérieur dans lequel a prise une tige de réglage (33) commandable par moteur électrique.

37. Système de levier selon l'une quelconque des revendications 34 à 36, **caractérisé en ce que** les extrémités de la travée (35) sont exécutées de manière bombée.

38. Système de levier selon l'une quelconque des revendications 34 à 37, **caractérisé en ce que** le filetage de l'écrou de réglage (36a, 36b) et le filetage de la tige de réglage (33a, 33b) sont exécutés en étant mutuellement autobloquants.

39. Système de levier selon l'une quelconque des revendications 34 à 37, **caractérisé en ce que** le filetage de l'écrou de réglage (36a, 36b) et le filetage de la tige de réglage (33a, 33b) sont exécutés sans blocage mutuel automatique.

**40.** Système de levier selon la revendication 39, **caractérisé en ce qu'**en cas de défaillance du servomoteur (21a, 21b), le point pivotant double déplaçable se déplace dans une position préférée.

**41.** Système de levier selon l'une quelconque des revendications 38 à 40, **caractérisé en ce que** le filetage de l'écrou de réglage (36a, 36b) et le filetage de la tige de réglage (33a, 33b) sont exécutés en étant coulissants l'un par rapport à l'autre.

**42.** Système de levier selon l'une quelconque des revendications 38 à 40, **caractérisé en ce que** le filetage de l'écrou de réglage (36a, 36b) et le filetage de la tige de réglage (33a, 33b) sont équipés d'un palier de roulement mutuel.

**43.** Système de levier selon l'une quelconque des revendications 27 à 42, **caractérisé en ce que** le point pivotant double est exécuté de manière dirigeable.

**44.** Système de levier selon l'une quelconque des revendications 27 à 42, **caractérisé en ce que** le point pivotant double déplaçable est auto-dirigeable.

**45.** Système de levier selon l'une quelconque des revendications 27 à 42, **caractérisé en ce que** le point pivotant double déplaçable est exécuté à guidage forcé.

**46.** Système de levier selon l'une quelconque des revendications 1 à 45, **caractérisé en ce que** ce système de levier est exécuté en double dans un véhicule automobile et **en ce qu'**il est utilisé pour commander un embrayage double.

**Fig. 1**

**Fig. 2**

**Fig. 3**

**Fig. 4**

**Fig. 5**

# Fig. 6

# Fig. 7

25 4a 4b 7a

28a,b

9
8b
7b
8a
28a
28b

21a,b

26

1

# Fig. 7a

# Fig. 7b

# Fig. 8

## Fig. 9

## Fig. 10

## Fig. 11

## Fig. 12

**Fig. 13**

21

2    4

34

10

7

14

**Fig. 14**

33

31,32

A          A

B    B

**Fig. 15**

32

31

**Fig. 16**

31    32

9                    9

A - A

**Fig. 17**

31    32

B - B

**Fig. 18a**

A - A    36a  35a    36b  35b  37

7a  7b

21a    33a    33b    21b

**Fig. 18b**

37    B

39    39

A    A

39    39

38  38    B

**Fig. 18d**

Z1    35  42

41

40

31    32    7b

**Fig. 18c**

9

38    39

38

33b

39

Z1

9

B - B

EP 1 455 106 B1

**Fig. 19a**

39    Z2   39

7b

21a          C-C          21b

**Fig. 19b**

C   39   7a   7b   39   C

21a          21b

39          39

**Fig. 19c**

39

Z2

7b

33b

9b   40   37

**Fig. 20a**

35

A

32

32

B

B

36    33

31    31

A

**Fig. 20c**

A-A

35

36

**Fig. 20b**

B-B

21

31    31

32    32

35

36

41    41

33

**Fig. 21a**

**Fig. 21b**

**Fig. 22a**

**Fig. 22b**

7,40

9

40,7

7,40

9

40,7

## Fig. 23a

7,40

31

35

32

40,7

## Fig. 23b

31

32

35

## Fig. 23c

31

32

35

41

## Fig. 23d

31

$\alpha_n$

32

35

# Fig. 24a

# Fig. 24b

# Fig. 24c

**Fig. 25a**

**Fig. 25b**

**Fig. 25c**

## Fig. 26a

33
36
31
32
35

## Fig. 26b

33
36
31
32
35

## Fig. 26c

33
36
31
32
35

## Fig. 26d

33
36
31
32
35

## Fig. 26e

33
36
31
32
35

## Fig. 26f

33
36
31
32
35

## Fig. 27a

7,40

40,7

## Fig. 27b

31

32

## Fig. 27c

## Fig. 27d

## Fig. 27e

7,40

40,7

## Fig. 27f

## Fig. 27g

## Fig. 27h

**Fig. 28a**

**Fig. 28b**

**Fig. 28c**

**Fig. 28d**

**Fig. 29**

## Fig. 30a

## Fig. 30b

Fig. 31

Fig. 32

## Fig. 33a

## Fig. 33b

EP 1 455 106 B1

**Fig. 34**

55

# Fig. 34a

**Fig. 35**

**Ansicht A**

**Fig. 36**

53

7,9,10

34
7,10

9,10

21

# Fig. 37

## Fig. 38

## Fig. 39

## Fig. 40

**Fig. 41**

**Fig. 41a**

**Fig. 41b**

Fig. 42

## Fig. 42a

## Fig. 43

**Fig. 44**

10

9b

31

**Fig. 45**

**Fig. 46**

**Fig. 47**

# Fig. 48